(19) **Europäisches Patentamt**
**European Patent Office**
**Office européen des brevets**

(11) **EP 4 769 107 A1**

(12) **EUROPEAN PATENT APPLICATION**
published in accordance with Art. 153(4) EPC

(43) Date of publication:
**01.07.2026 Bulletin 2026/27**

(21) Application number: **25808847.5**

(22) Date of filing: **25.03.2025**

(51) International Patent Classification (IPC):
*G06F 3/04883* (2022.01)

(86) International application number:
**PCT/CN2025/084787**

(87) International publication number:
**WO 2025/232373 (13.11.2025 Gazette 2025/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.05.2024 CN 202410565453**
**23.08.2024 CN 202411172600**

(71) Applicant: **Huawei Technologies Co., Ltd.**
**Shenzhen, Guangdong 518129 (CN)**

(72) Inventors:
• **LIU, Meng**
**Shenzhen, Guangdong 518129 (CN)**

• **ZHAO, Yunjing**
**Shenzhen, Guangdong 518129 (CN)**
• **ZHANG, Xiaoling**
**Shenzhen, Guangdong 518129 (CN)**
• **ZHANG, Rui**
**Shenzhen, Guangdong 518129 (CN)**
• **WANG, Sihan**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR EDITING HANDWRITTEN NOTE, AND ELECTRONIC DEVICE**

(57)     A handwritten note editing method and an electronic device relate to the field of terminal technologies, and are used to resolve a problem of how to achieve a neat and aesthetically pleasing handwritten note layout in a complex handwritten note scenario. The method includes: displaying a note interface on a display, where the note interface displays a handwritten note, and the handwritten note includes one or more paragraphs; receiving an editing instruction that acts on the note interface for the handwritten note; adjusting a character position in at least one paragraph in response to the editing instruction, to obtain an edited handwritten note, where an angle of a line in any one of at least one paragraph in the edited handwritten note is the same as an angle of the paragraph, and/or a position of each line of characters in the any paragraph meets a first requirement, and the at least one paragraph is a paragraph on which the editing instruction acts; and displaying the edited handwritten note.

Step 3201: An electronic device displays a note interface on a display

Step 3202: The electronic device receives an editing instruction that acts on the note interface for the handwritten note

Step 3203: In response to the editing instruction, the electronic device recognizes an angle-abnormal line, a character with an abnormal up-down position, and a character with an abnormal spacing in at least one paragraph

Step 3204: Rotate an angle-abnormal line in a first paragraph

Step 3205: Adjust a position of a character with an abnormal up-down position in a first paragraph, so that a first distance between a character in a first line in the first paragraph and a line center line of any line is within a preset distance threshold range after adjustment

Step 3206: Adjust a character spacing of a line in which a first character is located in a first paragraph, so that a spacing between characters in the line in which the first character is located in the first paragraph is within a preset spacing range after adjustment, to obtain an edited handwritten note

FIG. 32

**Description**

This application claims priorities to Chinese Patent Application No. 202410565453.2, filed with the China National Intellectual Property Administration on May 8, 2024 and entitled "INTELLIGENT HANDWRITING NOTE EDITING METHOD", and to Chinese Patent Application No. 202411172600.6, filed with the China National Intellectual Property Administration on August 23, 2024 and entitled "HANDWRITTEN NOTE EDITING METHOD AND ELECTRONIC DEVICE", both of which are incorporated herein by reference in their entireties.

**TECHNICAL FIELD**

This application relates to the field of terminal technologies, and in particular, to a handwritten note editing method and an electronic device.

**BACKGROUND**

With popularization of terminal devices (such as mobile phones or tablet computers), application scenarios of note software such as Memo and Notes have become increasingly widespread. A user can use a finger or a "stylus" to write notes in such software in scenarios such as daily meetings and video learning.

However, in the foregoing scenarios, the user often encounters a case of making a spelling mistake or missing a word. To edit or modify a handwritten note, the user needs to switch between tools such as a stylus, a lasso, and an eraser and manually adjust a relative position between texts in the handwritten note. This is time-consuming and labor-consuming, and it is difficult to ensure neatness of a handwritten note layout in this process. Therefore, how to achieve a neat and aesthetically pleasing handwritten note layout in a complex handwritten note scenario is a technical problem to be urgently resolved.

**SUMMARY**

This application provides a handwritten note editing method and an electronic device, to resolve a problem of how to achieve a neat and aesthetically pleasing handwritten note layout in a complex handwritten note scenario.

To achieve the foregoing objective, embodiments of this application provide the following technical solutions.

According to a first aspect, an embodiment of this application provides a handwritten note editing method. The method is applied to an electronic device having a display, and the method includes: The electronic device displays a note interface on the display. The note interface displays a handwritten note, and the handwritten note includes one or more paragraphs. The electronic device receives an editing instruction that acts on the note interface for the handwritten note. The electronic device adjusts a character position in a first paragraph in response to the editing instruction, to obtain an edited handwritten note, where the character position in the first paragraph in the edited handwritten note meets one or more of the following requirements: an angle of any line in the first paragraph is the same as an angle of the first paragraph, and a position of any line of characters in the first paragraph meets a first requirement, where the first requirement is that a distance between a character in any line and a center line of the any line is within a preset distance threshold range. The first paragraph is a paragraph on which the editing instruction acts. The electronic device displays the edited handwritten note.

According to the handwritten note editing method provided in this embodiment of this application, in a scenario in which a user uses a note app, the electronic device may respond to an editing instruction that is input by the user for a paragraph in a handwritten note, and then adjust the character position in the first paragraph based on the editing instruction, so that the angle of any line in the first paragraph is the same as the angle of the first paragraph after adjustment, or the position of any line of characters in the first paragraph meets the first requirement, that is, a distance between a character in any line and a center line of the any line is within the preset distance threshold range. In this way, no angle-abnormal line or no character with an abnormal up-down position relative to a center line exists in the first paragraph after adjustment. This solution can make characters of the edited handwritten note be arranged aesthetically and neatly. The method can help the user more conveniently use the note app, conveniently implement note sorting, and the like, and can better conform to a habitual operation manner of the user, so as to improve work efficiency of using the note app by the user, thereby improving user experience.

In a possible implementation of this application, that the electronic device adjusts the character position in the first paragraph, to obtain the edited handwritten note includes: The electronic device rotates an angle-abnormal line in the first paragraph, so that an angle of the angle-abnormal line after rotation is the same as the angle of the first paragraph, to obtain the edited handwritten note, where the angle-abnormal line is a line whose angle difference from the first paragraph is greater than or equal to an angle difference threshold in one or more lines included in the first paragraph; and/or the electronic device adjusts a position of a character with an abnormal up-down position in the first paragraph, so that a distance between a character in a line in which the adjusted character with the abnormal up-down position is located and a center line of the line is within the preset distance threshold range, to obtain the edited handwritten note.

In this solution, characters in the first paragraph can be arranged neatly by rotating the angle-abnormal line in the first paragraph and/or adjusting the position of the character with the abnormal up-down position in the first paragraph.

For example, that the electronic device adjusts the position of the character with the abnormal up-down position in the first paragraph includes: The electronic device may move the character with the abnormal up-down position in a direction close to or away from the center line, so that a distance between the moved character with the abnormal up-down position and the center line is within the preset distance threshold range.

For example, the preset distance threshold range is determined by a mean distance, a median, or a mode of first distances between all characters in the line in which the character with the abnormal up-down position is located and the center line of the line.

In a possible implementation of this application, the first requirement further includes: A spacing between adjacent characters in a line in the first paragraph is within a preset spacing threshold range.

In a possible implementation of this application, that the electronic device adjusts the character position in the first paragraph, to obtain the edited handwritten note further includes: The electronic device adjusts a position of a character with an abnormal left-right spacing in the first paragraph, so that a character spacing between adjacent characters in a line in which the adjusted character with the abnormal left-right spacing is located is within the preset spacing threshold range, to obtain the edited handwritten note.

For example, that the electronic device adjusts a position of a character with an abnormal left-right spacing in any line in the first paragraph may be implemented in the following manner: The electronic device moves, in a direction of a center line, the position of the character with the abnormal left-right spacing toward or away from an adjacent character, so that a spacing between the character with the abnormal left-right spacing and the adjacent character is within the preset spacing threshold range. Alternatively, the electronic device may move the adjacent character of the character with the abnormal left-right spacing, so that the spacing between the character with the abnormal left-right spacing and the adjacent character is greater than or equal to a first spacing threshold after movement.

In a possible implementation of this application, before the electronic device rotates the angle-abnormal line in the first paragraph, so that the angle of the angle-abnormal line after rotation is the same as the angle of the first paragraph, to obtain the edited handwritten note, the method provided in this embodiment of this application further includes: The electronic device determines an angle of each line in the first paragraph and the angle of the first paragraph; and the electronic device determines the angle-abnormal line in the first paragraph based on the angle of the first paragraph and the angle of each line in the first paragraph. For example, if a difference between an angle of any line and the angle of the first paragraph is greater than or equal to an angle difference threshold, it is considered that the any line is an angle-abnormal line in the first paragraph.

In a possible implementation of this application, before the electronic device adjusts the position of the character with the abnormal up-down position in the first paragraph, so that the distance between the character in the any line and the center line of the any line is within a first distance threshold range, to obtain the edited handwritten note, the method provided in this embodiment of this application further includes: The electronic device determines a first distance between each character in the first paragraph and a center line of a line in which each character is located; and the electronic device determines one or more first characters in the first paragraph based on the first distance between each character and the center line of the line in which each character is located, where the first character is a character with an abnormal up-down position in the first paragraph.

In a possible implementation of this application, a first distance between the first character and a center line of a line in which the first character is located is greater than or equal to a third distance threshold, and/or the first distance between the first character and the center line of the line in which the first character is located is less than or equal to a fourth distance threshold, and the third distance threshold and/or the fourth distance threshold are/is determined by a mean distance between all characters in the line in which the first character is located and the center line of the line in which the first character is located. The third distance threshold is greater than or equal to a second distance threshold. The fourth distance threshold is less than a first distance threshold.

In a possible implementation of this application, an upper limit of the preset distance threshold range is the second distance threshold. In other words, a distance between a character with an abnormal up-down position and a center line of a line in which the adjusted character is located further needs to be less than or equal to the second distance threshold of the line. Optionally, a lower limit of the preset distance threshold range is the first distance threshold. In other words, a distance between a character with an abnormal up-down position and a center line of a line in which the adjusted character is located further needs to be greater than or equal to the first distance threshold. The first distance threshold and the second distance threshold are determined by a mean distance, a median, or a mode of distances between all characters in the line in which the character with the abnormal up-down position is located and the center line, and the first distance threshold is less than the second distance threshold.

In a possible implementation of this application, the distance between the character with the abnormal up-down position and the center line of the line in which the character is located meets the following requirement after adjustment: $dist(P_{ij}, l_i) \geq A_{i1}$ and/or $dist(P_{ij}, l_i) \leq A_{i2}$. $dist(P_{ij}, l_i)$ represents a first distance between a center of a

$j$ th first character in an $i$ th line and a center line of the $i$ th line. $A_{i1}$ represents a first distance threshold of the $i$ th line. $A_{i2}$ represents a second distance threshold of the $i$th line, the first distance threshold and/or the second distance threshold are/is determined by a mean distance, a median, or a mode of distances between all characters in the $i$th line and the center line of the $i$ th line, and the first distance threshold is less than the second distance threshold.

In a possible implementation of this application, before the electronic device adjusts a position of a character with an abnormal left-right spacing in any line in the first paragraph, so that a character spacing between adjacent characters in the any line is greater than or equal to the first spacing threshold after adjustment, to obtain the edited handwritten note, the method provided in this embodiment of this application further includes: The electronic device determines a spacing between any character in the first paragraph and an adjacent character of the any character, where the adjacent character of the any character and the any character belong to a same line. The electronic device determines one or more second characters in the first paragraph based on the spacing between the any character and the adjacent character of the any character, where a spacing between the second character and an adjacent character of the second character does not meet a third requirement, and the second character is a character with an abnormal left-right spacing in the first paragraph. The third requirement is determined by a spacing between all characters in a line in which the second character is located.

In a possible implementation of this application, the preset spacing threshold range is determined by a mean, a median, or a mode of spacings between all characters in any line.

In a possible implementation of this application, an upper limit of the preset spacing threshold range may be a second spacing threshold, that is, a spacing between adjacent characters in any line needs to be less than or equal to the second spacing threshold after adjustment. Optionally, a lower limit of the preset spacing threshold range is the first spacing threshold, that is, a spacing between adjacent characters in any line needs to be greater than or equal to the first spacing threshold after adjustment. The first spacing threshold is greater than the second spacing threshold. The first spacing threshold and the second spacing threshold are determined by a mean spacing between characters in any line, or a median or a mode of spacings between characters in any line.

In a possible implementation of this application, a spacing between adjacent characters in any line meets the following requirement after adjustment: $dist(P_{ij},P_{ij+1},l_i)>y$ and/or $dist(P_{ij},P_{ij+1},l_i)>m$ where $dist(P_{ij},P_{ij+1},l_i)$ represents a spacing between a $j$ th second character in an $i$th line and an adjacent character, $y$ represents the first spacing threshold, $m$ represents the second spacing threshold, and the first spacing threshold is greater than the second spacing threshold.

According to a second aspect, an embodiment of this application provides a handwritten note editing method. The method is applied to an electronic device having a display, and the method includes: The electronic device displays a note interface on the display, where the note interface displays a handwritten note, and the handwritten note includes one or more paragraphs. The electronic device receives an editing instruction that acts on the note interface for a first paragraph, where the editing instruction is a delete operation or an insert operation, and the first paragraph belongs to the one or more paragraphs. The electronic device re-typesets at least the first paragraph in response to the editing instruction, to obtain a typeset handwritten note. The electronic device moves, based on a final position of a to-be-moved character in the typeset handwritten note, the to-be-moved character from an initial position to the final position, and displaying the character, where the to-be-moved character is a character whose initial position and final position in the first paragraph are different after typesetting.

In this solution, when it is detected that the editing instruction that is input by the user for the handwritten note is the delete operation or the insert operation, at least the first paragraph is re-typeset, to ensure a neat and aesthetically pleasing handwritten note layout. Convenience for the user to edit a handwritten text is improved. In addition, the to-be-moved character is moved from the initial position to the final position based on the final position of the to-be-moved character in the re-typeset handwritten note and displayed. The user can be naturally reminded of a specific change of specific notes by moving the character whose position changes, thereby improving visual experience and usability.

In a possible implementation of this application, the editing instruction is the insert operation, the insert operation indicates to insert content into the first paragraph, and that the electronic device re-typesets at least the first paragraph in response to the editing instruction, to obtain the typeset handwritten note includes: In response to the editing instruction, when no second paragraph exists below the first paragraph, the electronic device inserts, from a first position, a first blank area of a preset length in the first paragraph, to obtain the typeset handwritten note, where the first position is an insertion position indicated by the editing instruction. When a second paragraph exists below the first paragraph, the electronic device determines a paragraph spacing between the first paragraph and the second paragraph. When the paragraph spacing is greater than or equal to a line height of the first paragraph, the electronic device inserts, from a first position, a first blank area of a preset length in the first paragraph, to obtain the typeset handwritten note. When the paragraph spacing is less than a line height of the first paragraph, the electronic device controls the second paragraph to move in a direction away from the first paragraph, and inserts, from a first position, a first blank area of a preset length in the first paragraph, to obtain the typeset handwritten note.

In this solution, in response to the insert operation that is input by the user in the handwritten note, the first blank area of the preset length can be inserted from the first position indicated by the insert operation for insertion, so that the user inserts content.

In a possible implementation of this application, after the electronic device inserts, from the first position, the first blank area of the preset length in the first paragraph, to obtain the typeset handwritten note, the method provided in this embodiment of this application further includes: The electronic device detects content inserted by the user into the first blank area; and when a proportion of the inserted content in the first blank area exceeds a first threshold, continues to insert the first blank area in the first paragraph, to obtain a typeset handwritten note.

In a possible implementation of this application, that the electronic device inserts, from the first position, the first blank area of the preset length in the first paragraph includes: The electronic device inserts, from the first position, the first blank area of the preset length in the first paragraph based on a quantity of lines in the first paragraph, where the preset length is a first preset length when there is one line in the first paragraph, or the preset length is a second preset length when there are a plurality of lines in the first paragraph, and the first preset length is less than the second preset length. In this solution, for a different quantity of lines in the first paragraph, a first blank area of a different length can be inserted into the first paragraph.

In a possible implementation of this application, the editing instruction is the delete operation, the delete operation indicates to delete a part of characters in the first paragraph, and that the electronic device moves, based on the final position of the to-be-moved character in the typeset handwritten note, the to-be-moved character from the initial position to the final position, and displays the character includes: The electronic device controls a first group of characters in the first paragraph to move from an initial position to a final position corresponding to the first group of characters, where the first group of characters is characters whose initial position and final position are in a same line in the to-be-moved character. The electronic device controls, at a moment when the first group of characters starts to move, a second group of characters to disappear from an initial position of the second group of characters and appear with first transparency on a right side of a character in an initial state in a previous line, where the second group of characters is characters whose initial position and final position are in different lines in the to-be-moved character. The electronic device controls the second group of characters to move together with the first group of characters until the first group of characters and the second group of characters are respectively located at respective final positions, where transparency of the second group of characters gradually decreases from the first transparency to second transparency in a movement process.

In a possible implementation of this application, the editing instruction is the delete operation or the insert operation, and that the electronic device moves, based on the final position of the to-be-moved character in the typeset handwritten note, the to-be-moved character from the initial position to the final position, and displays the character includes: The electronic device controls a first group of characters in the to-be-moved character to move from an initial position of the first group of characters to a final position, where the first group of characters is characters whose initial position and final position are in a same line in the to-be-moved character. The electronic device controls, at a moment when the first group of characters starts to move, the second group of characters to disappear from the initial position of the second group of characters and appear with the first transparency at a final position of the second group of characters, where the second group of characters is characters whose initial position and final position are in different lines in the to-be-moved character. In a movement process of the first group of characters, the electronic device controls transparency of the second group of characters at the final position to gradually decrease from the first transparency until the transparency of the second group of characters is 0 at a movement end moment.

In a possible implementation of this application, the editing instruction is the delete operation or the insert operation, and that the electronic device moves, based on the final position of the to-be-moved character in the typeset handwritten note, the to-be-moved character from the initial position to the final position, and displays the character includes: The electronic device sequentially moves the first group of characters and the second group of characters in the to-be-moved character to the final positions according to a play time sequence corresponding to the first group of characters and the second group of characters, where the first group of characters is characters whose initial position and final position are in a same line in the to-be-moved character, and the second group of characters is characters whose initial position and final position are in different lines in the to-be-moved character.

In a possible implementation of this application, the editing instruction is the delete operation or the insert operation, and that the electronic device moves, based on the final position of the to-be-moved character in the typeset handwritten note, the to-be-moved character from the initial position to the final position, and displays the character includes: The electronic device controls the first group of characters in the to-be-moved character to move from the initial position to the final position, where the first group of characters is characters whose initial position and final position are in a same line in the to-be-moved character. The electronic device controls, at the moment when the first group of characters starts to move, the second group of characters to disappear from the initial position of the second group of characters, where the second group of characters is characters whose initial position and final position are in different lines in the to-be-moved character. When the first group of characters reaches the final position of the first group of characters, the electronic device controls the second group of characters to appear at the final position of the second group of characters.

In a possible implementation of this application, the editing instruction is the insert operation, and moving, based on the final position of the to-be-moved character in the typeset handwritten note, the to-be-moved character from the initial position to the final position, and displaying the character include:

controlling the first group of characters in the to-be-moved character to move from the initial position to the final position, where the first group of characters is characters whose initial position and final position are in a same line in the to-be-moved character;
controlling, at the moment when the first group of characters starts to move, the second group of characters to disappear from the initial position of the second group of characters and appear with the first transparency on a left side of a character in an initial state in a next line, where the second group of characters is characters whose initial position and final position are in different lines in the to-be-moved character; and
controlling the second group of characters to move together with the first group of characters until the second group of characters and the first group of characters are respectively located at the respective final positions, where the transparency of the second group of characters gradually decreases from the first transparency to 0% in the movement process.

In a possible implementation of this application, there is further the second paragraph below the first paragraph, the paragraph spacing between the first paragraph and the second paragraph is greater than the line height of the first paragraph, and the method further includes:
controlling, at the moment when the first group of characters starts to move, the second paragraph to move downward, until the first group of characters reaches the final position of the first group of characters, and controlling the second paragraph to move to a final position of the second paragraph.

According to a third aspect, an embodiment of this application further provides an electronic device. The electronic device includes at least one memory and at least one processor, the at least one memory is configured to store computer program code, the computer program code includes computer instructions, and when the computer instructions are executed by the at least one processor, the electronic device is enabled to perform the method in any possible design of the first aspect.

According to a fourth aspect, an embodiment of this application further provides a handwritten note editing apparatus. The handwritten note editing apparatus includes modules/units for performing the method in any possible design of the first aspect. These modules/units may be implemented by hardware, or may be implemented by executing corresponding software by hardware.

According to a fifth aspect, an embodiment of this application further provides a handwritten note editing apparatus. The handwritten note editing apparatus includes modules/units for performing the method in any possible design of the second aspect. These modules/units may be implemented by hardware, or may be implemented by executing corresponding software by hardware.

According to a sixth aspect, a computer-readable storage medium is provided. The computer-readable medium stores a computer program (which may also be referred to as code or instructions). When the code or the instructions are run on a computer, the computer is enabled to perform the method in any possible design of the first aspect.

According to a seventh aspect, a computer-readable storage medium is provided. The computer-readable medium stores a computer program (which may also be referred to as code or instructions). When the code or the instructions are run on a computer, the computer is enabled to perform the method in any possible design of the second aspect.

According to an eighth aspect, a computer program product is provided. The computer program product includes a computer program (which may also be referred to as code or instructions). When the computer program is run, the method in any possible design of the first aspect is performed.

According to a ninth aspect, a computer program product is provided. The computer program product includes a computer program (which may also be referred to as code or instructions). When the computer program is run, the method in any possible design of the second aspect is performed.

According to a tenth aspect, a graphical user interface on an electronic device is further provided. The electronic device has a display, one or more memories, and one or more processors. The one or more processors are configured to execute one or more computer programs stored in the one or more memories. The graphical user interface includes a graphical user interface displayed when the electronic device performs any possible design of the first aspect of embodiments of this application.

According to an eleventh aspect, a graphical user interface on an electronic device is further provided. The electronic device has a display, one or more memories, and one or more processors. The one or more processors are configured to execute one or more computer programs stored in the one or more memories. The graphical user interface includes a graphical user interface displayed when the electronic device performs any possible design of the second aspect of embodiments of this application.

According to a twelfth aspect, an embodiment of this application provides a chip. The chip includes at least one processor, and the processor is configured to read and execute a computer program stored in a memory, to perform the method according to any one of the first aspect or the possible implementations of the first aspect.

According to a thirteenth aspect, an embodiment of this application provides a chip. The chip includes at least one processor, and the processor is configured to read and execute a computer program stored in a memory, to perform the method according to any one of the second aspect or the possible implementations of the second aspect.

Optionally, the chip further includes the memory, and the memory is connected to the processor through a circuit or a wire.

Further, optionally, the chip further includes a communication interface. The communication interface is configured to communicate with a module other than the chip.

Any apparatus, computer storage medium, computer program product, chip, or communication system provided above is configured to perform the corresponding method provided above. Therefore, for beneficial effects that can be achieved by the apparatus, computer storage medium, computer program product, chip, or communication system, refer to the beneficial effects of the corresponding solution in the corresponding method provided above. Details are not described herein again.

It should be noted that, for beneficial effects of the designs of the electronic device provided in the second aspect to the thirteenth aspect of embodiments of this application, refer to beneficial effects of any possible design of the first aspect. Details are not described herein again.

BRIEF DESCRIPTION OF DRAWINGS

FIG. 1(a) to FIG. 1(c) are a diagram of an interface of a memo according to an embodiment of this application;
FIG. 2 is a diagram of a structure of an electronic device according to an embodiment of this application;
FIG. 3 is a block diagram of a software system architecture of an electronic device according to an embodiment of this application;
FIG. 4(a) to FIG. 4(d) are a diagram 1 of a handwritten note editing interface according to an embodiment of this application;
FIG. 5(a) to FIG. 5(d) are a diagram 2 of a handwritten note editing interface according to an embodiment of this application;
FIG. 6 is a schematic flowchart of recognizing, by an electronic device, an angle-abnormal line in a to-be-edited paragraph according to an embodiment of this application;
FIG. 7(a) to FIG. 7(c) are a diagram of an interface of adjusting an angle-abnormal line in a handwritten note according to an embodiment of this application;
FIG. 8(a) to FIG. 8(c) are a diagram of another interface of adjusting an angle-abnormal line in a handwritten note according to an embodiment of this application;
FIG. 9 is a schematic flowchart of determining, by an electronic device, one or more characters with abnormal up-down positions in a to-be-edited paragraph according to an embodiment of this application;
FIG. 10(a) and FIG. 10(b) are a diagram of an interface of adjusting a character with an abnormal up-down position in a handwritten note according to an embodiment of this application;
FIG. 11(a) to FIG. 11(c) are a diagram of another interface of adjusting a character with an abnormal up-down position in a handwritten note according to an embodiment of this application;
FIG. 12 is a schematic flowchart of determining, by an electronic device, a character with an abnormal character spacing in a to-be-edited paragraph according to an embodiment of this application;
FIG. 13(a) to FIG. 13(c) are a diagram of an interface of adjusting a character spacing in a handwritten note according to an embodiment of this application;
FIG. 14(a) to FIG. 14(c) are a diagram of another interface of adjusting a character spacing in a handwritten note according to an embodiment of this application;
FIG. 15(a) to FIG. 15(c) are a diagram 3 of a handwritten note editing interface according to an embodiment of this application;
FIG. 16(a) and FIG. 16(b) are a diagram 4 of a handwritten note editing interface according to an embodiment of this application;
FIG. 17 shows a character typesetting procedure of an electronic device in response to a delete operation according to an embodiment of this application;
FIG. 18(a) to FIG. 18(c) are a diagram 1 of a character typesetting interface according to an embodiment of this application;
FIG. 19 shows a character typesetting procedure of an electronic device in response to an insert operation according to an embodiment of this application;
FIG. 20(a) to FIG. 20(h) are a diagram 1 of an interface of editing a handwritten note by an electronic device in response to an insert operation according to an embodiment of this application;
FIG. 21(a) to FIG. 21(d) are a diagram 2 of an interface of editing a handwritten note by an electronic device in response to an insert operation according to an embodiment of this application;
FIG. 22(a) to FIG. 22(c) are a diagram 3 of an interface of editing a handwritten note by an electronic device in response to an insert operation according to an embodiment of this application;

FIG. 23(a) to FIG. 23(c) are a diagram 1 of a typesetting animation of a handwritten note editing interface according to an embodiment of this application;

FIG. 24(a) to FIG. 24(c) are a diagram 2 of a typesetting animation of a handwritten note editing interface according to an embodiment of this application;

FIG. 25(a) to FIG. 25(c) are a diagram 3 of a typesetting animation of a handwritten note editing interface according to an embodiment of this application;

FIG. 26(a) to FIG. 26(d) are a diagram 4 of a typesetting animation of a handwritten note editing interface according to an embodiment of this application;

FIG. 27(a) to FIG. 27(d) are a diagram 5 of a typesetting animation of a handwritten note editing interface according to an embodiment of this application;

FIG. 28(a) to FIG. 28(d) are a diagram 6 of a typesetting animation of a handwritten note editing interface according to an embodiment of this application;

FIG. 29(a) to FIG. 29(c) are a diagram 7 of a typesetting animation of a handwritten note editing interface according to an embodiment of this application;

FIG. 30(a) to FIG. 30(c) are a diagram 8 of a typesetting animation of a handwritten note editing interface according to an embodiment of this application;

FIG. 31(a) to FIG. 31(c) are a diagram 9 of a typesetting animation of a handwritten note editing interface according to an embodiment of this application;

FIG. 32 is a schematic flowchart of a handwritten note editing method according to an embodiment of this application;

FIG. 33 is a schematic flowchart of another handwritten note editing method according to an embodiment of this application;

FIG. 34(a) to FIG. 34(c) are a diagram of a handwritten note editing interface according to an embodiment of this application;

FIG. 35(a) to FIG. 35(c) are a diagram of another handwritten note editing interface according to an embodiment of this application;

FIG. 36 is a diagram of a structure of a handwritten note editing apparatus according to an embodiment of this application; and

FIG. 37 is a diagram of a structure of a chip according to an embodiment of this application.

## DESCRIPTION OF EMBODIMENTS

The following describes technical solutions in embodiments of this application with reference to the accompanying drawings in embodiments of this application. In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

The following terms "first" and "second" are merely used for description, but should not be understood as indicating or implying relative importance or implying a quantity of indicated technical features. Therefore, a feature limited by "first" or "second" may explicitly or implicitly include one or more features. In the descriptions of the embodiments, unless otherwise stated, "a plurality of" means two or more.

In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present a related concept in a specific manner for ease of understanding.

It should be understood that in this application, "at least one (item)" means one or more. "A plurality of" means two or more than two. "At least two (items)" means two, three, or more than three. "And/or" describes an association relationship between associated objects, and indicates that three relationships may exist. For example, "A and/or B" may indicate the following three cases: Only A exists, only B exists, and both A and B exist. A and B may be singular or plural.

The character "/" generally indicates an "or" relationship between associated objects. "At least one of the following items (pieces)" or a similar expression thereof refers to any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

"When" and "if" mean that corresponding processing is performed in an objective situation, are not intended to limit time, do not require a determining action during implementation, and do not mean any other limitation.

In embodiments of this application, content written by a user in a handwriting area of an electronic device may include a text, and the text may include a number and a punctuation mark, or may be a written word in various language (such as Chinese, English, Japanese, and Korean) environments. For example, a written word in the Chinese environment may be referred to as a Chinese word. The Chinese word may be a single Chinese character or a word consisting of two or more Chinese characters. A written word in the English environment may be referred to as an English word. The English word may be a single English letter or an English word consisting of 26 letters.

Punctuation mark: is a written symbol indicating punctuation and a tone of a sentence. The punctuation mark is a symbol for assisting in writing language, and may indicate pauses, mood, and the nature and function of a word.

In some embodiments, punctuation marks may be classified into three major categories: dot mark, label, and symbol. The dot mark indicates pauses of different lengths in spoken language, and the label indicates the nature or function of a written word. For example, the dot mark may include: period (.), question mark (?), exclamation point (!), comma (,), enumeration comma (、) (which is a punctuation mark used in Chinese writing to separate items in a list), semicolon (;), and colon (:). The label may include: quotation marks ("", ''), brackets [(), [], {}], dash (-), ellipsis (...), mark of emphasis (. ), book title marks (《》,〈〉), space mark (•), connection mark (-), and proper noun mark (___). The symbol may include: comment mark (*), hidden mark (×), mark indicating a word that cannot be identified (□), slash mark (/), identification mark (▲ or ●), substitution mark (~), continuous periods (......), and arrow mark (→).

A handwritten note editing method provided in embodiments of this application may be applied to all electronic devices that support handwriting by a user. For example, the electronic device may include a screen device that supports writing with a finger or a stylus, for example, a mobile phone, a tablet, a PC, or a large office screen, or may include a virtual projection device that supports writing with a finger or a handle, for example, a virtual reality (Virtual Reality, VR) device or an augmented reality (Augmented Reality, AR) device. A specific type of the electronic device is not limited in embodiments of this application.

Specifically, the handwritten note editing method provided in embodiments of this application may exist, in a form of program code, in a handwritten note application on the electronic device.

Applications (application, referred to as "app" for short below) with various functions may be installed in the electronic device, for example, an app like Music, Video, or a handwritten note application (for example, Memo or Notes). In embodiments of this application, an example in which the handwritten note application is Memo is used for description.

The handwritten note application installed in the electronic device may be a built-in application of the electronic device, or may be a third-party application. This is not limited in embodiments of this application.

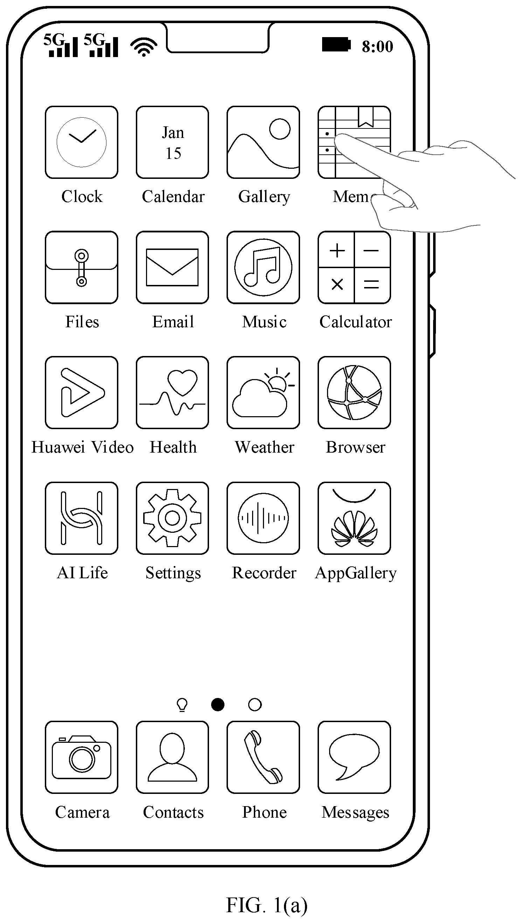

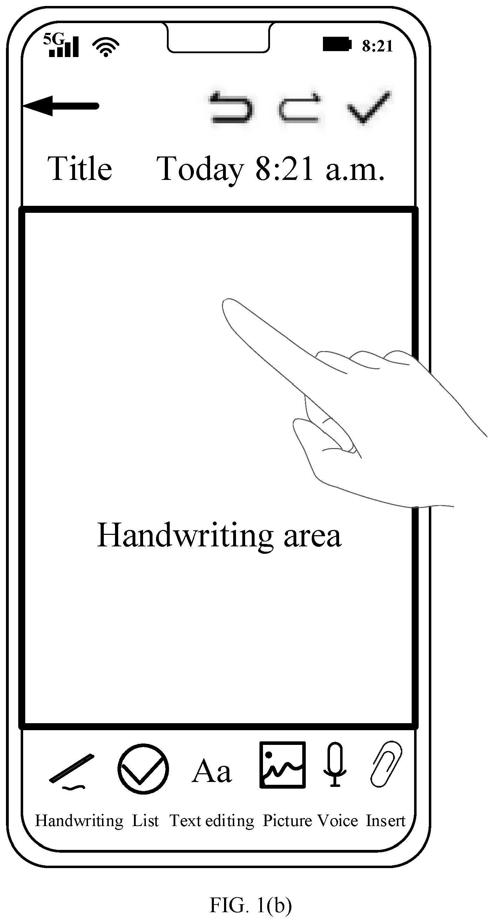

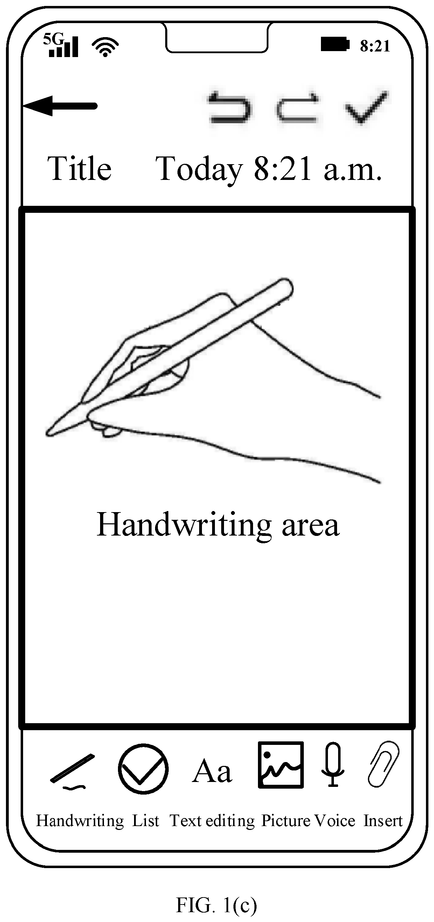

Currently, many note apps may support writing input with a touch pen (which may also be referred to as a "marker" or a "stylus") or a finger on an electronic device. For example, in a scenario in which a user needs to record a schedule of the user, as shown in FIG. 1(a), the user may tap a Memo app installed on a mobile phone, to trigger the mobile phone to display note editing interfaces shown in FIG. 1(b) and FIG. 1(c). The user may write, by using a finger, a text in the note editing interface of Memo installed on the mobile phone for recording, as shown in FIG. 1(b). Alternatively, as shown in FIG. 1(c), the user may write, by using a stylus, a note in the editing interface of Memo installed on the mobile phone, to record the schedule of the user.

In this scenario, the user often encounters a case of making a spelling mistake or missing a word. In the current background, to edit or modify a handwritten text, the user needs to switch between tools such as a stylus, a lasso, and an eraser and manually adjust a relative position between texts. This is time-consuming and labor-consuming, and it is difficult to ensure neatness of a handwritten note layout in this process. Therefore, the industry needs a more natural manner for editing a handwritten text.

In addition, when the user writes a text in the handwritten note application by using a finger or a stylus, there may be a complex scenario such as text line tilting or up-down text misalignment. This cannot ensure neatness and aesthetic appeal of a handwritten note layout. Therefore, how to implement intelligent text editing with a neat and aesthetically pleasing layout in a complex handwritten note scenario is a technical problem to be urgently resolved in this application.

Based on this, embodiments of this application provide a handwritten note editing method, which may be applied to any handwritten note included in a note app, to perform, based on a detected editing instruction that is input by a user for the handwritten note, position adjustment and/or character typesetting based on an overall writing layout on text content included in a paragraph on which the editing instruction acts in the handwritten note, so as to ensure neatness and aesthetic appeal of a handwritten note layout of the handwritten note.

In addition, embodiments of this application further propose a typesetting animation of a handwritten note. In this way, when a user performs a delete operation or an insert operation in the handwritten note, a track of moving a to-be-moved character from an initial position to a final position may be displayed to the user by using the typesetting animation, so that the user can be naturally reminded of a change of a specific note in the handwritten note, thereby improving visual experience and usability.

An example embodiment of an electronic device to which embodiments of this application may be applied may include but is not limited to an electronic device carrying HarmonyOS (HarmonyOS®, HarmonyOS®), iOS®, Android (Android®), Microsoft (Microsoft®), or another operating system. The foregoing portable electronic device may alternatively be another portable electronic device, for example, a laptop computer (Laptop) with a touch-sensitive surface (for example, a touch panel).

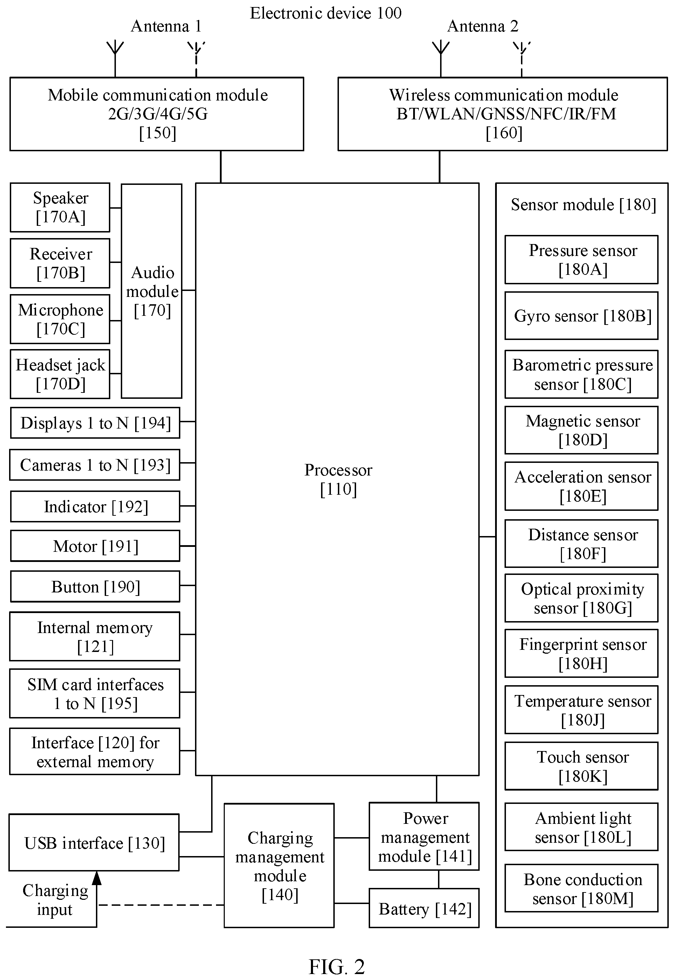

FIG. 2 is a diagram of a structure of an example electronic device 100 according to an embodiment of this application.

FIG. 2 is a diagram of a structure of an electronic device 100 according to an embodiment of this application.

As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment does not constitute a specific limitation on the electronic device 100. In some other embodiments, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may be configured to perform audio communication, and sample, quantize, and code analog signals. In some embodiments, the audio module 170 may be coupled to the wireless communication module 160 by using a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the electronic device 100. The processor 110 communicates with the display 194 by using the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset. The interface may alternatively be configured to connect to another electronic device, such as an AR device.

It may be understood that the interface connection relationship between the modules shown in this embodiment is merely an example, and does not constitute a limitation on the structure of the electronic device 100. In some other embodiments, the electronic device 100 may alternatively use an interface connection manner different from that in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the electronic device 100. When charging the battery 142, the charging management module 140 may further supply power to the electronic device 100 through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. In this embodiment of this application, the display 194 may be configured to display each sub-screen of a home screen of the electronic device 100, for example, as shown in FIG. 1(a) to FIG. 1(c). Each sub-screen may include an icon of an application in the electronic device.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

The interface 120 for external memory may be configured to connect to an external memory card, such as a micro SD card, to extend a storage capability of the electronic device 100. The external memory card communicates with the processor 110 through the interface 120 for external memory, to implement a data storage function. For example, files such as music or videos are stored in the external memory card.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS).

The electronic device 100 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the electronic device 100. In some other embodiments, two microphones 170C may be disposed on the electronic device 100. In addition to sound signal collection, a noise reduction function may be further implemented. In some other embodiments, three, four, or more microphones 170C may be alternatively disposed on the electronic device 100, to collect a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines strength of the pressure based on the change of the capacitance. When a touch operation is performed on the display 194, the electronic device 100 detects strength of the touch operation through the pressure sensor 180A. The electronic device 100 may also calculate a position of the touch based on a detection signal of the pressure sensor 180A. In some embodiments, touch operations performed on a same touch position but has different touch operation strength may correspond to different operation instructions. For example, in this embodiment of this application, when a touch operation whose touch operation strength is less than a first pressure threshold acts on an icon of an application, an instruction of displaying an interface of the application is executed. When a touch operation whose touch operation strength is greater than or equal to the first pressure threshold acts on the icon of the application, an instruction of displaying a management menu is executed. The management menu may include an identifier of a sub-screen that is of the home screen of the electronic device 100 and that is displayed around the icon of the application and/or an identifier of a folder included in the sub-screen.

The gyro sensor 180B may be configured to determine a motion gesture of the electronic device 100. In some embodiments, angular velocities of the electronic device 100 around the three axes (that is, the x-axis, the y-axis, and the z-axis) may be determined by using the gyro sensor 180B. The gyro sensor 180B may be used for image stabilization during photographing. For example, when a shutter is pressed, the gyro sensor 180B detects a jittering angle of the electronic device 100, calculates, based on the angle, a distance for which a lens module needs to compensate, and enables the lens to offset jittering of the electronic device 100 through reverse motion, so as to implement image stabilization. The gyro sensor 180B may be further used in a navigation scenario and a motion-controlled gaming scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect values of acceleration of the electronic device 100 in all directions (usually on three axes). When the electronic device 100 is static, the acceleration sensor can detect magnitude and a direction of gravity. The acceleration sensor may be further configured to recognize a posture of the electronic device, and is applied to applications such as switching between landscape mode and vertical mode and a pedometer.

The distance sensor 180F is configured to measure a distance. The electronic device 100 may measure a distance through infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and a light detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to the ear for a call, to automatically turn off a screen to save power. The optical proximity sensor 180G may also be used in a flip cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may implement fingerprint-based unlocking, application lock access, fingerprint-based photographing, fingerprint-based call answering, or the like based on a feature of the collected fingerprint.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 reduces performance of a processor near the temperature sensor 180J, to reduce power consumption and implement thermal protection. In some other embodiments, when the temperature is lower than another threshold, the electronic device 100 heats the battery 142 to avoid abnormal shutdown of the electronic device 100 that is caused due to a low temperature. In some other embodiments, when the temperature is lower than still another threshold, the electronic device 100 boosts an output voltage of the battery 142, to avoid an abnormal shutdown caused by a low temperature.

The touch sensor 180K is also referred to as a "touch panel". The touch sensor 180K may be disposed on the display 194. The touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of a touch event. Visual output related to the touch operation may be provided by using the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal cord part. The bone conduction sensor 180M may also be in contact with a human pulse, and receive a blood pressure beating signal. In some embodiments, the bone conduction sensor 180M may alternatively be disposed in the headset, to form a bone conduction headset. The audio module 170 may obtain a voice signal through parsing based on the vibration signal, of the vibration bone of the vocal cord part, obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive button input, and generate button signal input related to user settings and function control of the electronic device 100.

The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. Different application scenarios (for example, a time reminder, information receiving, an alarm clock, and a game) may also be corresponding to different vibration feedback effects. A touch vibration feedback effect may be further customized.

The indicator 192 may be an indicator light, and may indicate a charging status or a power change, or may indicate a message, a missed call, a notification, or the like.

The SIM card interface 195 is configured to connect to a SIM card. The SIM card may be inserted into the SIM card interface 195 or pulled out of the SIM card interface 195, to implement contact with or separation from the electronic device 100. The electronic device 100 may support one or N SIM card interfaces, and N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using a SIM card, to implement functions such as conversation and data communication. In some embodiments, the electronic device 100 uses an eSIM, namely, an embedded SIM card. The eSIM card may be embedded in the electronic device 100, and cannot be separated from the electronic device 100.

All methods in the following embodiments may be implemented on the electronic device 100 having the foregoing hardware structure.

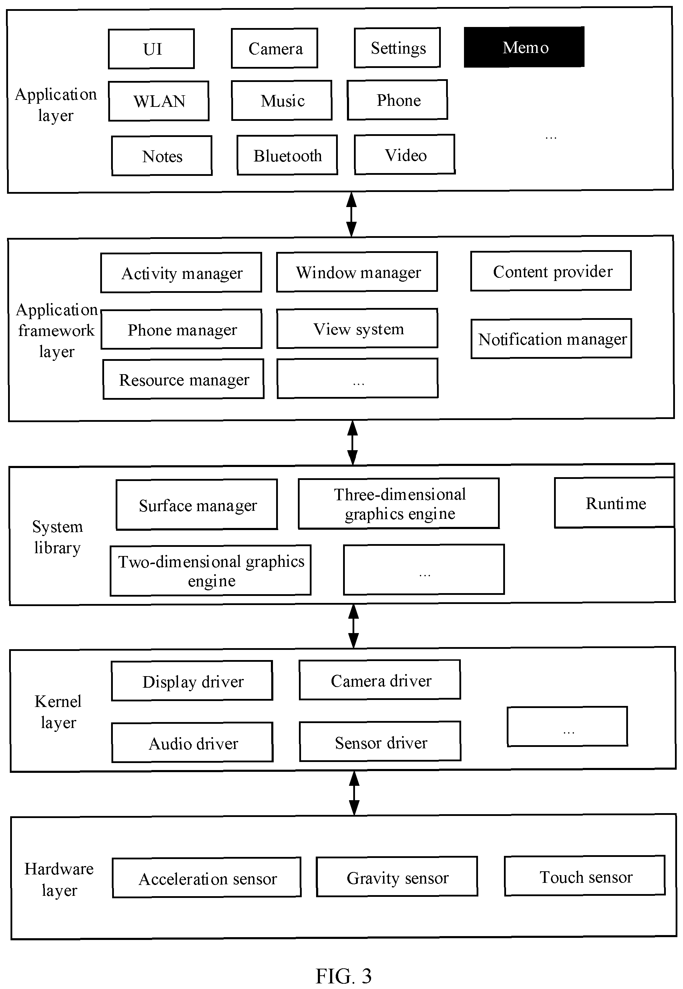

FIG. 3 is a block diagram of a software structure of an example electronic device according to an embodiment of this application.

Optionally, the electronic device 100 in this embodiment of this application may have an Android® system, that is, have a layered architecture shown in FIG. 3. The layered architecture may include several layers, each layer has a clear role and task, and the layers communicate with each other through a software interface.

For example, in some embodiments, as shown in FIG. 3, the Android® system may be divided into four layers: an application layer, an application framework layer, a runtime (Android® runtime) and system library, a kernel layer, and a hardware layer from top to bottom.

The application layer may include a series of application packages. For example, as shown in FIG. 3, the application layer may include Camera, Bluetooth, Settings, a user interface (user interface, UI), a third-party application, and the like. The third-party application may include a wireless local area network (wireless local area network, WLAN), Music, Phone, Bluetooth, Video, Memo, Notes, and the like. This is not limited in this embodiment of this application.

In this embodiment of this application, the application layer may be configured to present an editing interface. The editing interface may be provided for a user to implement an edit operation on a note app such as Memo or Notes being focused on in embodiments of this application, for example, may be a typesetting editing interface in the following embodiments. For example, the user may perform an operation such as text content position adjustment and/or layout adjustment in a typesetting editing interface of the Memo app. For example, the editing interface may be a memo display interface displayed in FIG. 1(b) or FIG. 1(c).

In a possible implementation, the application may be developed by using a Java language, and is completed by invoking an application programming interface (application programming interface, API) provided by the application framework layer. A developer may interact with a bottom layer (for example, the hardware layer or the kernel layer) of the operating system through the application framework layer, to develop an application of the developer. The application framework layer mainly includes a series of services and management systems of the operating system.

The application framework layer provides an application programming interface (application programming interface, API) and a programming framework for applications at the application layer. The application framework layer includes some predefined functions.

For example, as shown in FIG. 3, the application framework layer may include a window manager, a content provider, a view system, a phone manager, a resource manager, a notification manager, and the like.

The window manager is configured to manage window programs. The window manager may obtain a display size, determine whether there is a status bar on a screen, or participate in performing operations such as screen locking and screen capturing.

The content provider is configured to store and obtain data and make the data accessible to the application. The stored data may include video data, image data, audio data, and the like, and may further include data such as record data of calls that are made and answered, a browsing history of the user, and a bookmark. Details are not described herein.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function of the electronic device 100, for example, call status management (including call accepting and declining).

The resource manager provides various resources for the application, such as a localized string, an icon, a picture, a layout file, and a video file.

The notification manager enables an application to display notification information in the status bar on the screen, and may be configured to convey a message to the user. The notification information may automatically disappear after a short stay in the status bar, and the user does not need to perform an interaction process such as a close operation. For example, the notification manager may notify the user of a message such as download completion. Alternatively, the notification manager may be a notification that appears in the status bar at the top of the system in a form of a chart or a scroll bar text, for example, a notification of an application running in the background. Alternatively, the notification manager may be a notification that appears on the screen in a form of a dialog window. For example, text information is prompted in the status bar. Alternatively, the notification manager may control the electronic device to make an alert tone, the electronic device to vibrate, or an indicator of the electronic device to blink. Details are not described herein.

The Android® runtime includes a core library and a virtual machine. The Android® runtime is responsible for scheduling and management of the Android system.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (media libraries), a three-dimensional (three-dimensional, 3D) graphics processing library (for example, OpenGL ES), a two-dimensional (two-dimensional, 2D) graphics engine, and an image processing library.

The surface manager is configured to manage a display subsystem of the electronic device and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

The hardware layer may include various sensors such as an acceleration sensor, a gravity sensor, and a touch sensor.

It should be understood that a hardware structure of the electronic device may be shown in FIG. 2, and a software system architecture may be shown in FIG. 3. A software program and/or a module corresponding to the software system architecture in the electronic device may be stored in the memory 240. The processor 230 may run the software program and the application stored in the memory 240, to perform a procedure of a handwritten note editing method provided in embodiments of this application.

For ease of understanding, in the following embodiments of this application, a mobile phone 10 having the structures shown in FIG. 2 and FIG. 3 is used as an example to specifically describe the handwritten note editing method in embodiments of this application with reference to the accompanying drawings and application scenarios.

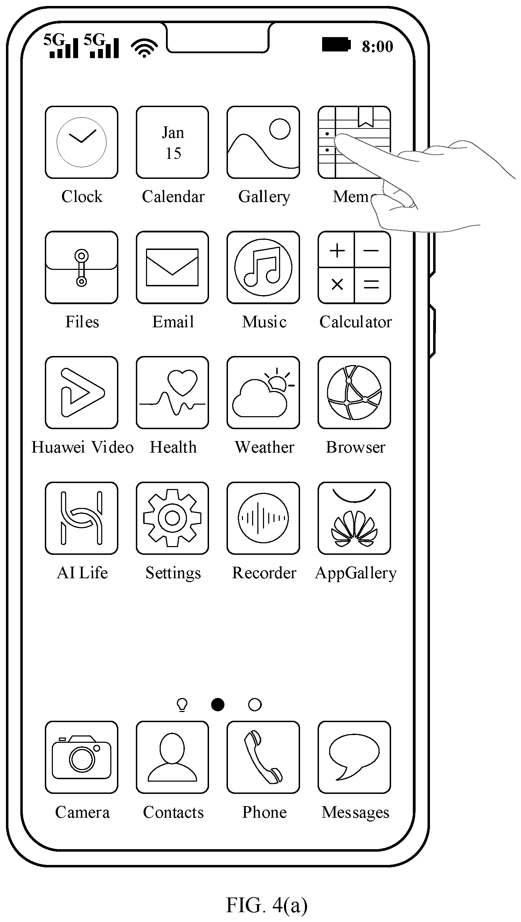

To facilitate understanding of the note editing method provided in this application, the following describes, with reference to content shown in FIG. 4(a) to FIG. 4(d) to FIG. 31(a) to FIG. 31(c), an implementation process of the method provided in this application.

Embodiments of this application are applicable to a scenario in which a note app is installed on an electronic device. A main design idea is as follows: The electronic device may receive and respond to an editing instruction triggered by a user for any handwritten note included in an interface of the note app, to adjust a character position in at least one paragraph that is indicated to be edited by the editing instruction in the handwritten note, and/or typeset the at least one paragraph based on an overall layout of the handwritten note, so as to obtain an edited handwritten note. The following first describes, by using a plurality of examples, application scenarios to which embodiments of this application are applicable. It may be understood that embodiments of this application are not limited to the following application scenarios.

The following uses an example in which the note app installed on the electronic device is Memo for description. It may be understood that for a manner in which the user edits a handwritten note written by the user in another note app in a handwriting manner, refer to content in the following embodiments.

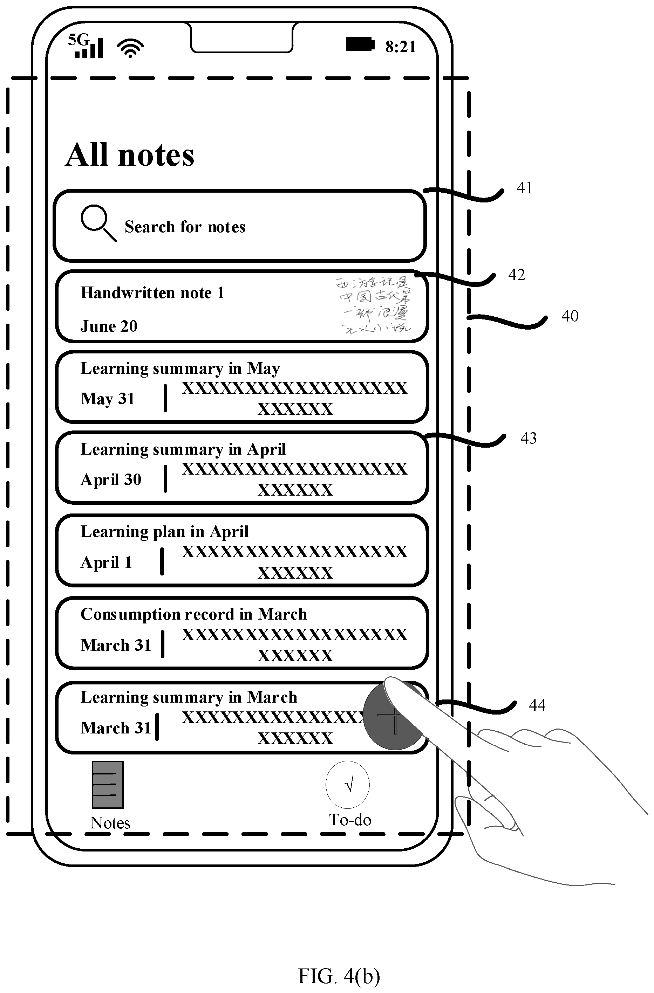

When the user wants to record related content on a mobile phone in a handwriting manner, as shown in FIG. 4(a), the user may tap Memo installed on the mobile phone, to trigger the mobile phone to display a note interface 40 shown in FIG. 4(b). One or more notes are displayed in the note interface 40. For example, the note interface 40 includes a handwritten note 42 and an electronic note 43 (that is, a note entered by the user by using a keyboard). The user may enter a keyword in a search bar 41 to trigger the mobile phone to search for a related note from existing notes and display the related note. The handwritten note 42 refers to content entered by the user in the note app in a handwriting manner, including content such as a Chinese character, a letter, and a symbol.

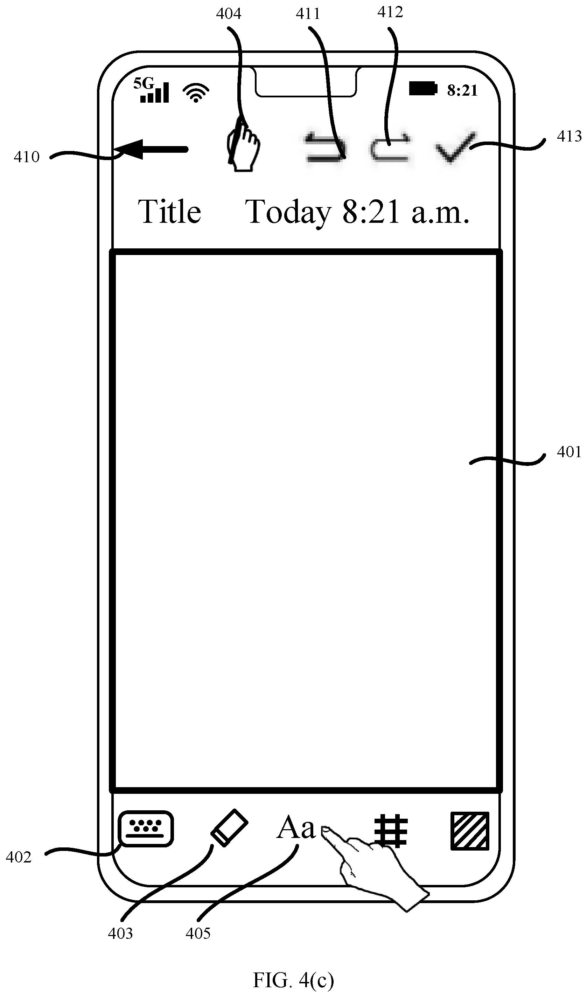

In the note interface 40, the user may tap a create control 44 to trigger the mobile phone to display a handwriting input interface 400 shown in FIG. 4(c).

The handwriting input interface 400 shown in FIG. 4(c) includes a handwriting area 401 and a plurality of editing controls for editing a character in the handwriting area 401, for example, a "switch to keyboard input" control 402 for indicating to perform an edit operation such as adding or deleting content in the handwriting area 401 by using the keyboard, an "eraser" control 403 for indicating to erase content in a note in the handwriting area 401, an automatic editing control 404 for performing overall adaptive editing on note content written by the user in the handwriting area 401, an editing control 405 for indicating to edit content in a note, a "color selection" control 408 for indicating to select a color (such as a font color) of note content, a "line selection" control 409 for indicating to select a line thickness of a font of note content, a "return control 410" for indicating to exit a shown handwritten note to display a home page of Memo, an undo typing control 411, a redo typing control 412 for indicating to restore a previously deleted or undone character, and a confirmation control 413. In addition, it may be understood that, although not shown in FIG. 4(a) to FIG. 4(d), in some other embodiments, the handwriting input interface 400 may further include another editing control. For example, a "share" control, a "delete note" control, or a "favorites" control may be included, and corresponding setting may be performed according to a user requirement during implementation. In addition, the handwriting input interface 400 may further include a "pen" control and a "pencil" control for indicating a display effect of a font in a note, a status bar (which may include a mobile network, a wireless network, time, and a battery level), and the like. It may be understood that the status bar may further include a name of an operator, a Bluetooth icon, and the like.

For example, the electronic device may enter an adaptive editing mode. In the adaptive editing mode, the electronic device may adaptively adjust a handwritten note written by the user in the handwriting area 401. For example, in a process in which the user writes a character in the handwriting area 401 by using a finger or a stylus, the electronic device automatically adjusts a position of the character in the handwritten note. For example, each time the user finishes writing a character, the electronic device automatically adjusts an up-down position and/or a left-right spacing of the character. Alternatively, each time the user finishes writing a line of characters, the electronic device automatically adjusts a position of a character with an abnormal up-down position in the line, so that a distance between any character in the line and a center line of the line meets a preset distance requirement. For example, the preset distance requirement may be that a distance between any character and a center line is greater than or equal to a first distance threshold, and/or less than or equal to a second distance threshold. In addition/Alternatively, each time the user finishes writing a line of characters, the electronic device automatically adjusts a position of a character with an abnormal left-right spacing in the line, so that a spacing between all characters in the line meets a preset spacing requirement. In this way, spacings between characters in an entire line can tend to be consistent. For example, the preset spacing requirement is that a spacing between characters in any line is greater than or equal to a first spacing threshold, and/or less than or equal to a second spacing threshold, or each time the user finishes writing a paragraph of characters, the electronic device automatically adjusts a position of a character with an abnormal up-down position and/or a position of a character with an abnormal left-right spacing in the paragraph.

Optionally, in a scenario, each time the electronic device detects that the user finishes writing a paragraph of characters, the electronic device may automatically adjust an angle-abnormal line in the paragraph. Alternatively, in some scenarios, in the adaptive editing mode, the electronic device may perform the following adaptive adjustment on content of a handwritten note written by the user in the handwriting area 401: For example, if the user triggers a delete operation, the electronic device may delete, in response to the delete operation, one or more characters that the user indicates to delete, and adjust a character position in a paragraph on which the delete operation acts, including but not limited to rotating an angle-abnormal line, adjusting a character with an abnormal up-down position in the paragraph, and adjusting a character with an abnormal left-right spacing in the paragraph. Alternatively, when the user triggers an insert operation, in response to the insert operation, the electronic device inserts, from a position on which the insert operation acts, a blank area of a specified length for the user to write, and performs overall typesetting on a paragraph on which the insert operation acts. For how to perform typesetting, refer to descriptions in the following embodiments. Details are not described herein.

In an example, the electronic device may receive an operation of tapping the automatic editing control 404 by the user, and enter the adaptive editing mode in response to the operation. Certainly, the electronic device may be alternatively triggered to enter the adaptive editing mode in another manner. For example, the user may directly perform a preset gesture operation (for example, a double-tap operation or a knuckle tap operation) on the handwriting input interface 400, or the user may give a voice instruction (for example, "Enter adaptive editing mode)", to trigger the electronic device to enter the adaptive editing mode.

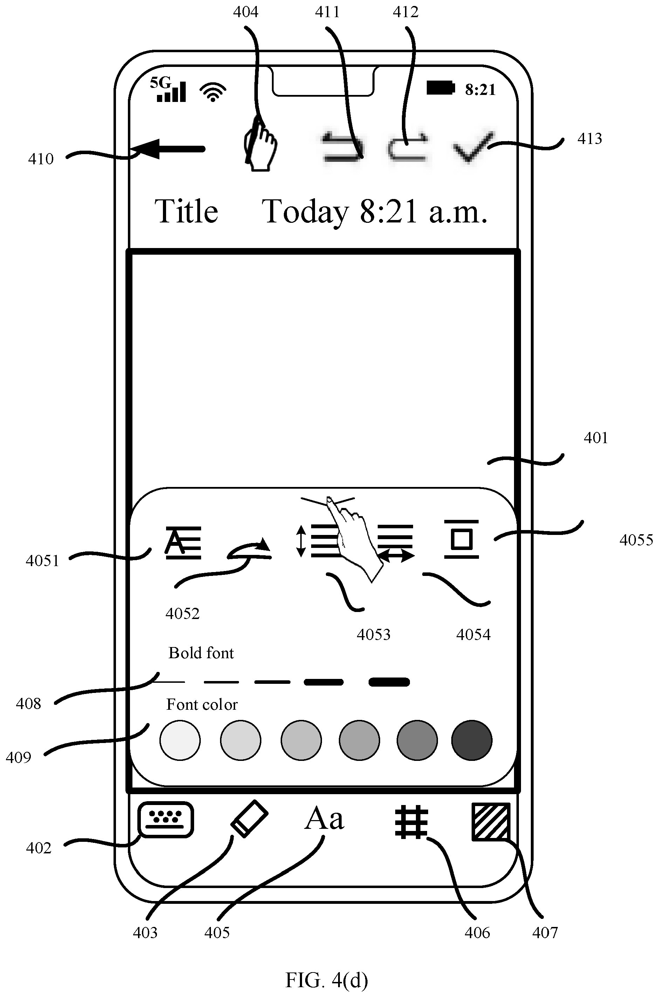

**In** an actual process, the user may only want to separately adjust a character position in a specific line and/or typeset characters in a specific paragraph, or only want to separately adjust an angle-abnormal line, a character with an abnormal up-down position, and/or a character with an abnormal left-right spacing in a specific paragraph. To improve user experience, in an example, the user may further tap the editing control 405 to trigger the mobile phone to display an interface shown in FIG. 4(d). A control 4051 for indicating to adjust a character position, a control 4052 for indicating to adjust an angle-abnormal line, a control 4053 for indicating to adjust an up-down position of a character, a control 4054 for indicating to adjust a character spacing, and a control 4055 for indicating to typeset a character are displayed in the interface shown in FIG. 4(d).

When the control 4051 is triggered, the electronic device performs overall typesetting on a character position in the paragraph in response to an operation of triggering the control 4051. When the control 4052 is triggered, in response to an operation of triggering the control 4052, the electronic device recognizes an angle-abnormal line in the paragraph, and rotates the angle-abnormal line in the paragraph. When the control 4053 is triggered, in response to an operation of triggering the control 4053, the electronic device recognizes a character with an abnormal up-down position in the paragraph, and adjusts a position of the character with the abnormal up-down position in the paragraph. When the control 4054 is triggered, in response to an operation of triggering the control 4054, the electronic device recognizes a character with an abnormal left-right spacing in the paragraph, and adjusts a character spacing in the paragraph, so that a spacing between characters in a line in which the character with the abnormal left-right spacing is located meets a preset spacing requirement after adjustment. When the control 4055 is triggered, the electronic device performs overall typesetting on characters in the paragraph in response to an operation of triggering the control 4055.

It may be understood that, in addition to tapping the foregoing control to trigger the electronic device to detect an edit operation, the user may alternatively enter an edit operation on the electronic device in another manner. The following separately describes how the user triggers a delete operation and an insert operation on the electronic device.

### (1) An example in which an edit operation is a delete operation is used.

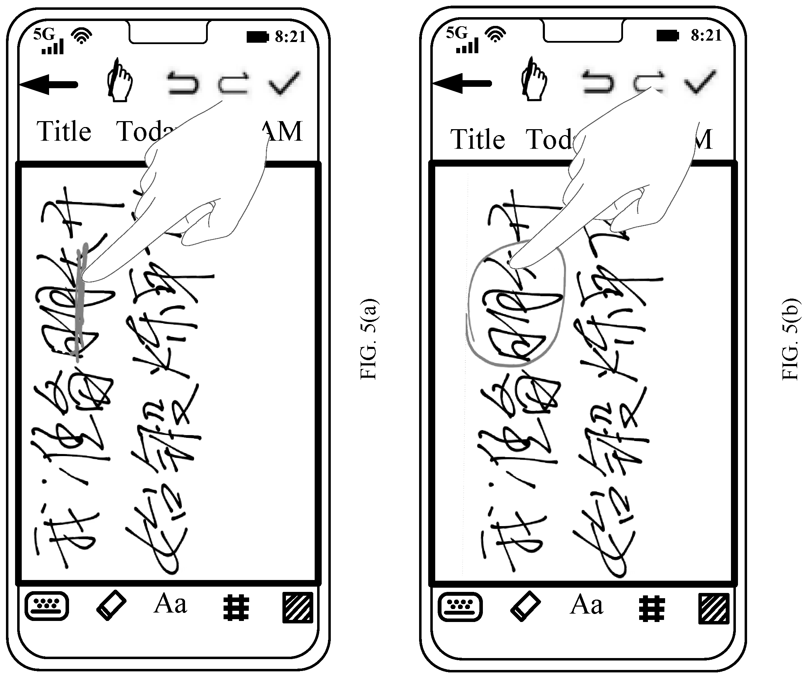

In an actual process, the user may miswrite some characters in a handwritten note, or the user may want to delete one or more characters in a handwritten note. In this scenario, the user may trigger a delete operation for the handwritten note. For example, the user may trigger the delete operation in a manner shown in FIG. 5(a) to FIG. 5(c). In an example, as shown in FIG. 5(a), content displayed in the handwritten note is "我准备明天开始锻炼身体 (I'm going to start exercising tomorrow)". It is assumed that the user needs to delete the characters "明天 (tomorrow)". The user may add a strikethrough on the two characters "明天 (tomorrow)" by using a finger. In this way, the electronic device detects a delete operation for indicating to delete the two characters "明天 (tomorrow)", and then the electronic device may delete the two characters "明天 (tomorrow)" from the handwritten note in response to the delete operation.

In another example, the user may alternatively draw a circle around a to-be-deleted character in the handwritten note by using a finger or a stylus, so that the electronic device detects a delete operation. As shown in FIG. 5(b), the user may draw a circle around the two characters "明天 (tomorrow)" by using a finger, to trigger the electronic device to detect a delete operation. Then, the electronic device may delete the two characters "明天 (tomorrow)" from the handwritten note in response to the delete operation.

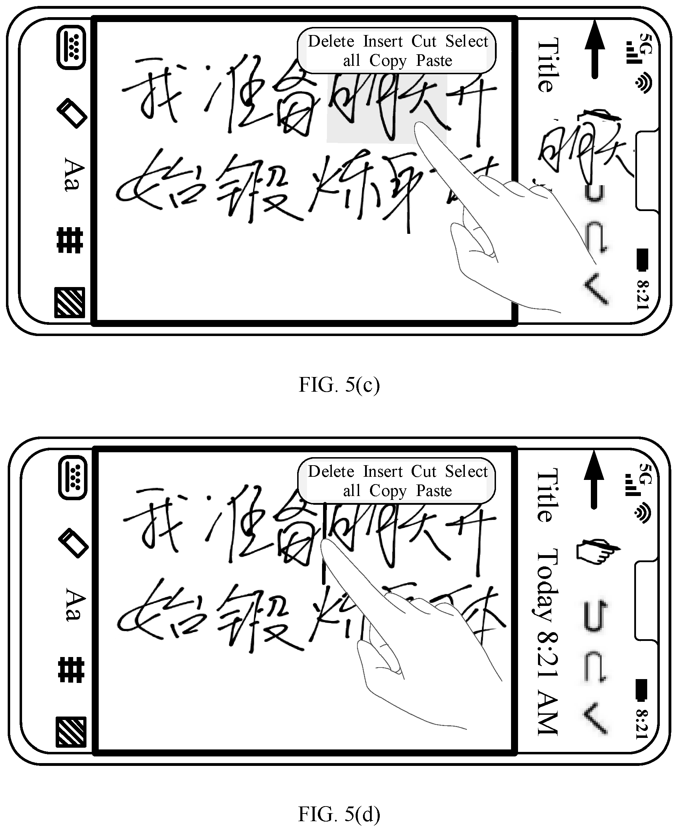

In another example, the user may alternatively touch and hold a display by using a finger or a stylus to trigger a select operation, where the select operation indicates one or more characters selected by the user. Then, the electronic device may display a pop-up window shown in FIG. 5(c). The pop-up window may include a delete control or a cut and paste control. It is assumed that characters selected by the select operation triggered by the user are "明天 (tomorrow)". Then, the user may tap the delete control or the cut and paste control, so that the electronic device detects a delete operation. As shown in FIG. 5(c), the user may use a finger to touch and hold the display and select the two characters "明天 (tomorrow)", and then the user may tap the delete control or the cut and paste control in the pop-up window, so that the electronic device detects a delete operation for indicating to delete the two characters "明天 (tomorrow)". Then, the electronic device may delete the two characters "明天 (tomorrow)" from the handwritten note in response to the delete operation.

In another example, the user may alternatively erase a to-be-deleted character from one or more lines by using an eraser control in a handwritten note interface. In this scenario, the electronic device may consider an action that the user erases the to-be-deleted character from the one or more lines by using the eraser control as a delete operation.

It should be noted that the foregoing provides merely several examples of the delete operation triggered by the user in embodiments of this application. In an actual process, the user may alternatively trigger a delete operation in another manner. This is not limited in embodiments of this application.

(2) An example in which an edit operation is an insert operation is used.

When the user needs to insert content into a handwritten note, the user may trigger an insert operation for the handwritten note. For example, the user may trigger the insert operation in a manner shown in FIG. 5(d). For example, assuming that the user wants to insert content between "备 (going to)" and "明 (tomorrow)", the user may use a finger or a stylus to trigger a touch and hold operation between "备 (going to)" and "明 (tomorrow)", to trigger the electronic device to display a pop-up window shown in FIG. 5(d). Then, when detecting that the user taps an "insert" control in the pop-up window, the electronic device may consider that an insert operation is detected. Alternatively, the user may draw one or more vertical lines between any two characters by using a finger or a stylus, to trigger the electronic device to detect an insert operation. Alternatively, the user may trigger an insert operation by using a finger or a stylus nib to tap, draw, or insert a symbol.

It should be noted that the foregoing provides merely several examples of the insert operation triggered by the user in embodiments of this application. In an actual process, the user may alternatively trigger an insert operation in another manner. This is not limited in embodiments of this application.

With reference to specific examples, the following describes how to adjust a position of a character in a handwritten note when an electronic device detects an editing instruction.

Before embodiments of this application are described, how to recognize an angle-abnormal line in a to-be-edited paragraph in this application is first described.

Scenario 1: Adjust an angle-abnormal line in a paragraph.

A design principle of adjusting the angle-abnormal line in the paragraph is to recognize the angle-abnormal line in the paragraph, and rotate the angle-abnormal line, to ensure that each line in the paragraph is relatively parallel, so as to improve neatness and aesthetic appeal.

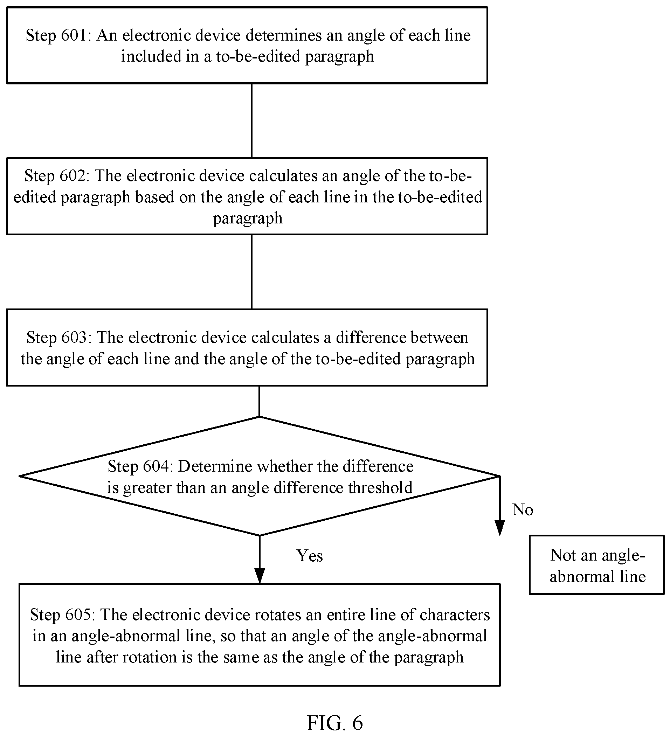

In an example shown in FIG. 6, an electronic device may determine an angle-abnormal line in a to-be-edited paragraph by using a procedure shown in FIG. 6. As shown in FIG. 6, the method includes the following steps.

Step 601: The electronic device determines an angle of each line included in the to-be-edited paragraph.

For example, the electronic device may determine an optimal fitting straight line of each line. The electronic device uses an angle of the optimal fitting straight line of each line as an angle of the line.

Specifically, for each line of characters in the to-be-edited paragraph, the electronic device may determine a geometric center of a character box of each character in each line, calculate, by using a linear fitting function, an optimal fitting straight line that passes through the center of the character box of each character, and calculate the angle of the optimal fitting straight line based on slope information of the optimal fitting straight line.

It may be understood that the to-be-edited paragraph is one or more paragraphs on which an editing instruction acts.

Step 602: The electronic device calculates an angle of the to-be-edited paragraph based on the angle of each line in the to-be-edited paragraph.

For example, the angle of the to-be-edited paragraph may be an arithmetic mean of angles of all lines in the to-be-edited paragraph, or may be a weighted mean based on a quantity of characters included in each line, or may be a median, a mode, or the like. This is not limited herein. Alternatively, the angle of the to-be-edited paragraph may be an angle of a target line in the to-be-edited paragraph. For example, the target line may be a first line in the to-be-edited paragraph, or the target line may be a line with a largest quantity of characters in the to-be-edited paragraph, or the target line may be a line with a largest angle or a line with a smallest angle in the to-be-edited paragraph, or the target line may be a line, in the to-be-edited paragraph, with an angle closest to a mean value of angles in the to-be-edited paragraph.

For example, different lines in the to-be-edited paragraph correspond to different weights, and a weight of any line may be autonomously set, or a weight of any line may be determined by a quantity of characters in each line. For example, if a quantity of characters in a line is larger, a weight of the line may be set to be higher.

Step 603: The electronic device calculates a difference between the angle of each line and the angle of the to-be-edited paragraph.

Step 604: The electronic device determines whether the difference between the angle of each line and the angle of the to-be-edited paragraph is greater than an angle difference threshold.

If a difference between an angle of any line and the angle of the to-be-edited paragraph is greater than the angle difference threshold, it is determined that the any line is an angle-abnormal line, and step 605 is performed.

If a difference between an angle of any line and the angle of the to-be-edited paragraph is less than or equal to the angle difference threshold, it is determined that the angle of the any line is consistent with the angle of the to-be-edited paragraph.

Step 605: The electronic device rotates the angle-abnormal line, so that an angle of the angle-abnormal line after rotation is consistent with the angle of the to-be-edited paragraph.

In an example, the electronic device may rotate an entire line of characters in the angle-abnormal line, so that the angle of the angle-abnormal line after rotation is consistent with the angle of the to-be-edited paragraph.

The electronic device may rotate the angle-abnormal line clockwise, or may rotate the angle-abnormal line counterclockwise. This is not limited in this embodiment of this application, provided that the angle of the angle-abnormal line after rotation is consistent with/is the same as the angle of the to-be-edited paragraph.

It may be understood that, that the angle of the angle-abnormal line after rotation is consistent with the angle of the to-be-edited paragraph may mean that the angle of the angle-abnormal line after rotation is the same as the angle of the to-be-edited paragraph, or a difference between the two angles is less than or equal to a specific preset threshold (for example, the angle difference threshold). This is not limited in this embodiment of this application.

It may be understood that the angle difference threshold may be a value greater than or equal to 0. When the angle difference threshold is 0, if a difference between an angle of any line and the angle of the to-be-edited paragraph is equal to 0, it is considered that the any line is not an angle-abnormal line; or if a difference between an angle of any line and the angle of the to-be-edited paragraph is not 0, it is considered that the any line is an angle-abnormal line. When the angle difference threshold is not equal to 0, if a difference between an angle of any line and the angle of the to-be-edited paragraph is less than the angle difference threshold, the any line is not an angle-abnormal line; or if a difference between an angle of any line and the angle of the to-be-edited paragraph is greater than or equal to the angle difference threshold, the any line is an angle-abnormal line.

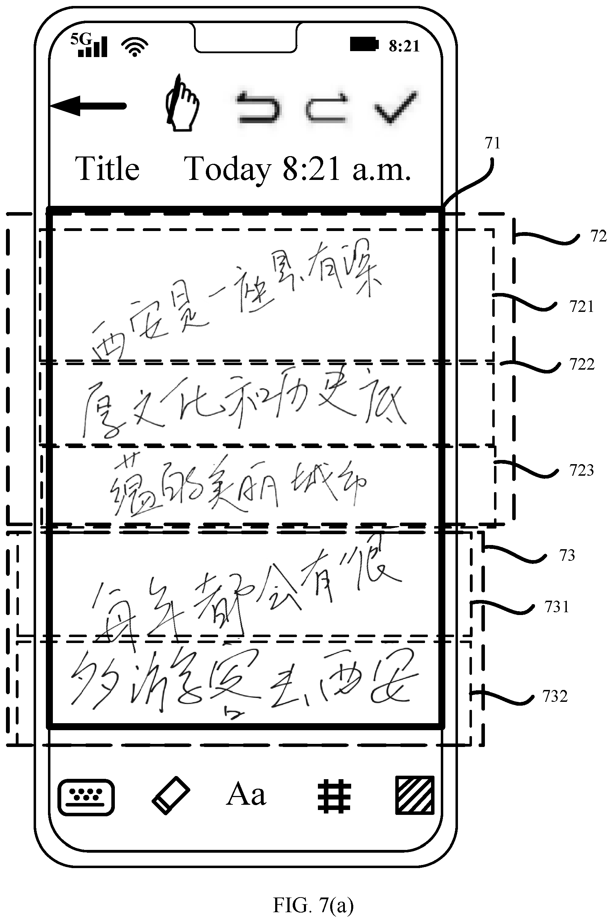

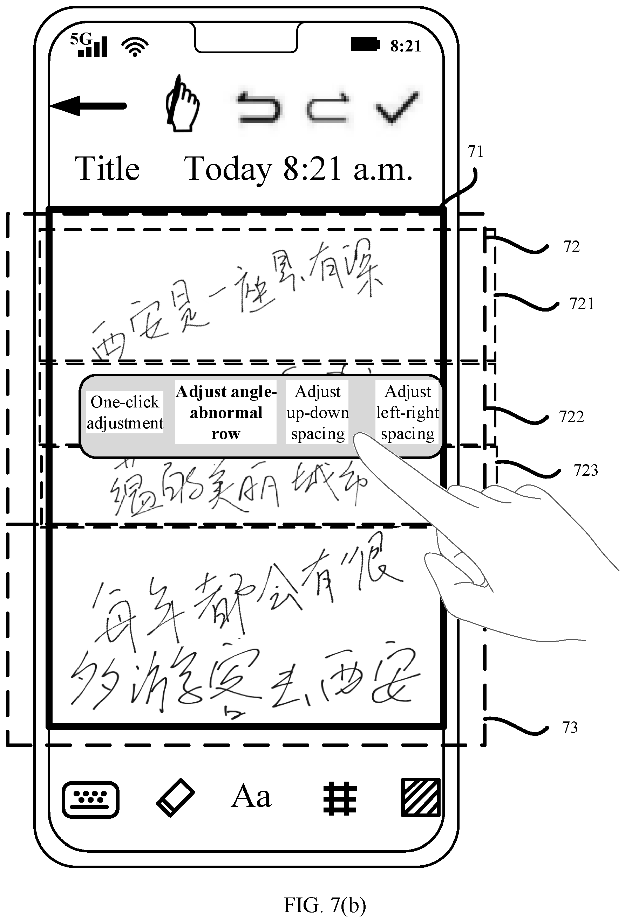

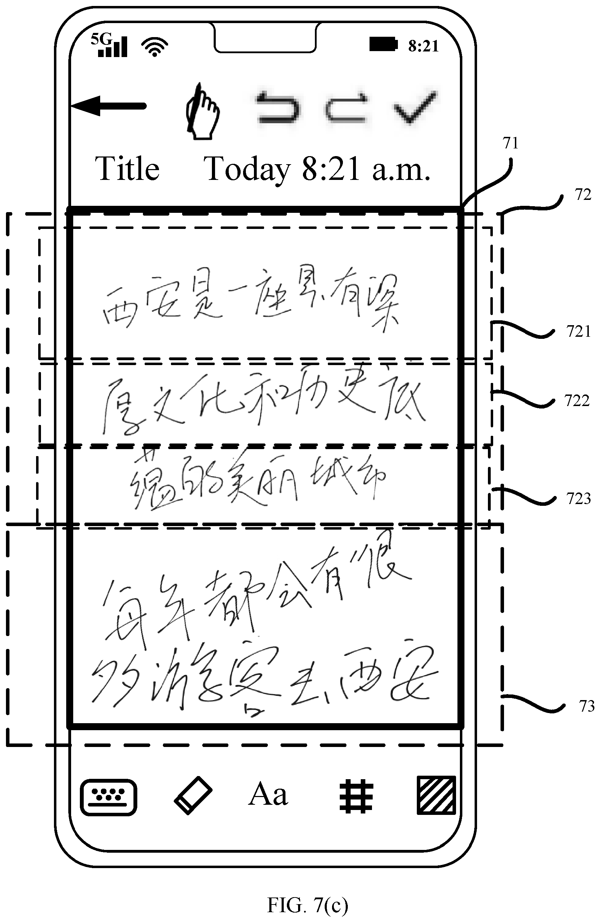

As shown in FIG. 7(a), a display interface of a handwritten note included in Memo may be a note interface 71 shown in FIG. 7(a). The note interface 71 includes two paragraphs of characters, which are respectively a paragraph 72 and a paragraph 73. The paragraph 72 includes three lines of characters, that is, a line 721, a line 722, and a line 723. The paragraph 73 includes two lines of characters, that is, a line 731 and a line 732. It is assumed that the user wants to adjust an angle-abnormal line in the paragraph 72. The user may trigger an editing instruction for the paragraph 72 in the note interface 71 shown in FIG. 7(a). For example, the editing instruction is a touch and hold operation. For example, as shown in FIG. 7(b), the user may trigger a touch and hold operation in the paragraph 72 (for example, the user may trigger a touch and hold operation at any position in the paragraph 72, or trigger a touch and hold operation for a line (for example, the line 731) that needs to be adjusted in the paragraph 72). In response to the touch and hold operation, the electronic device recognizes the angle-abnormal line in the paragraph 72. Assuming that the electronic device recognizes that the line 721 is the angle-abnormal line in the paragraph 72, the electronic device rotates an entire line of characters in the line 721, so that an angle of the line 721 after rotation is consistent with an angle of the paragraph 72. Finally, the electronic device may display an interface shown in FIG. 7(c).

Alternatively, in response to the touch and hold operation, the electronic device displays a pop-up window 724, and then the user may tap a control for adjusting an angle-abnormal line, to trigger the electronic device to detect the editing instruction. In response to the editing instruction, the electronic device recognizes that the line 721 is the angle-abnormal line in the paragraph 72, and the electronic device rotates an entire line of characters in the line 721.

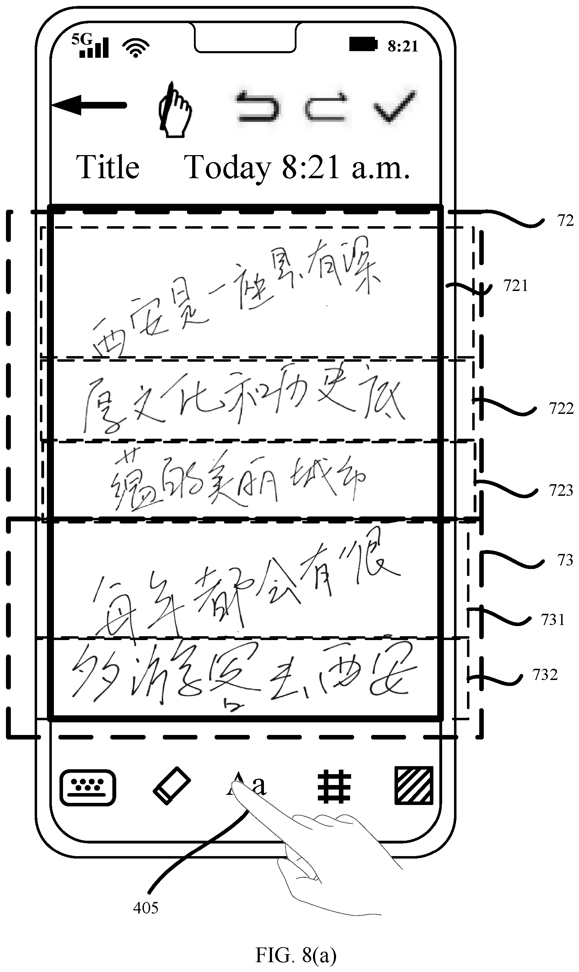

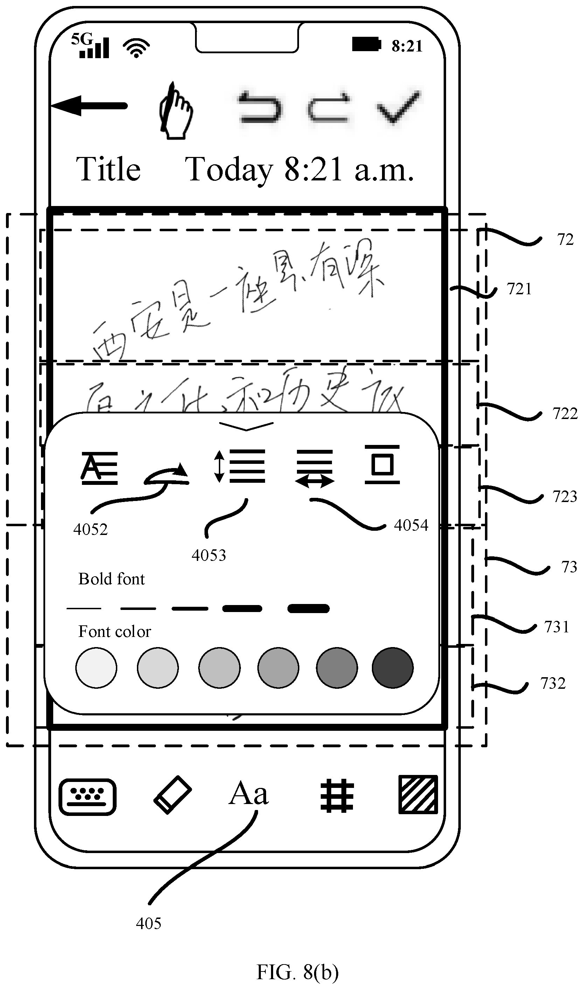

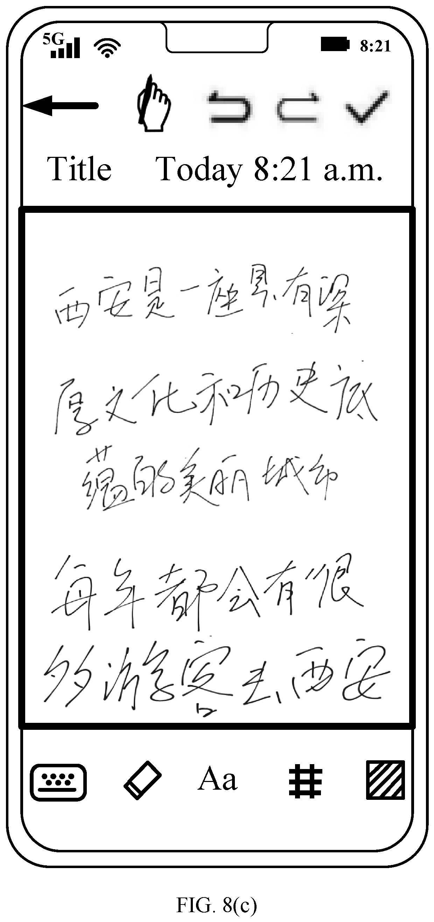

It should be noted that, FIG. 7(a) to FIG. 7(c) show an example in which the electronic device adjusts, in response to the editing instruction triggered by the user, the angle-abnormal line in the paragraph 72 indicated by the editing instruction. In an actual process, the user may want to perform overall adjustment on character positions of a plurality of paragraphs of characters in a handwritten note at a time. In this scenario, the user may trigger a select operation to select a plurality of paragraphs, and then trigger an editing instruction. Then, the electronic device may recognize and rotate an angle-abnormal line in each of the plurality of paragraphs based on the editing instruction of the user, so that an angle of the angle-abnormal line in each paragraph after rotation is the same as an angle of the paragraph. Alternatively, the user may trigger an editing instruction of a specific gesture for the note interface 71, so that the electronic device confirms that the user wants to adjust a plurality of paragraphs. Alternatively, as shown in FIG. 8(a), the user may tap an "editing control 405" to trigger the electronic device to display an interface shown in FIG. 8(b). In the interface shown in FIG. 8(b), the user may tap the control 4052 to trigger the electronic device to detect an editing instruction of the user, so as to recognize angle-abnormal lines in the paragraph 72 and the paragraph 73. Assuming that the electronic device recognizes that the line 721 is an angle-abnormal line in the paragraph 72, and the line 731 is an angle-abnormal line in the paragraph 72, the electronic device rotates an entire line of characters in the line 721, so that an angle of the characters in the line 721 is the same as that of the paragraph 72; and rotates an entire line of characters in the line 731, so that an angle of the line 731 after rotation is the same as the angle of the paragraph 73. After rotation, the electronic device may display an interface shown in FIG. 8(c).

It should be noted that, when the user triggers the editing instruction, the electronic device may recognize that there is an angle-abnormal line in the to-be-edited paragraph, or may recognize that there is no angle-abnormal line in the to-be-edited paragraph. When there is no angle-abnormal line in the to-be-edited paragraph, the electronic device may output prompt information, to prompt the user that there is no angle-abnormal line in the to-be-edited paragraph.

Optionally, after the electronic device rotates an entire line of characters in the angle-abnormal line, so that an angle of the characters in the angle-abnormal line is consistent with that of the to-be-edited paragraph, the electronic device may further output prompt information to prompt the user that the angle of the angle-abnormal line has been adjusted.

It should be noted that optionally, when determining that a difference between an angle of any line and the angle of the to-be-edited paragraph is less than or equal to a specific preset threshold, the electronic device may determine that the line is not an angle-abnormal line.

Generally, there may further be a character with an abnormal left-right spacing and/or a character with an abnormal up-down position in the to-be-edited paragraph. In this scenario, the electronic device may adjust, in response to the editing instruction triggered by the user, a position of the character with the abnormal left-right spacing and/or a position of the character with the abnormal up-down position in the to-be-edited paragraph by using the following solutions, so that character spacings tend to be consistent and/or up-down positions tend to be consistent in the to-be-edited paragraph.

Scenario 2: Adjust a character with an abnormal up-down position.

Before embodiments of this application are described, how to determine a character with an abnormal up-down position in a to-be-edited paragraph in this application is first described.

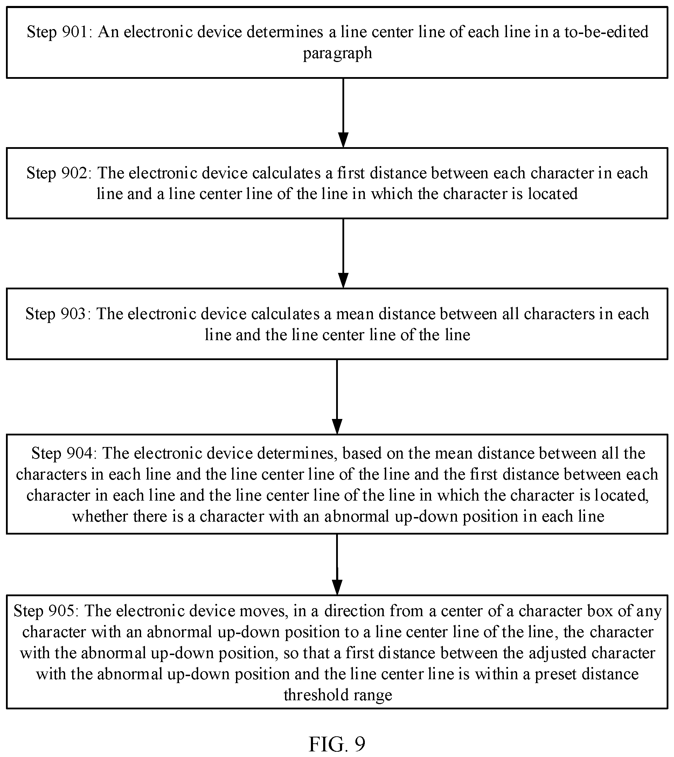

In an example, an electronic device may determine a character with an abnormal up-down position in a to-be-edited paragraph by using a procedure shown in FIG. 9. As shown in FIG. 9, the method includes the following steps.

Step 901: The electronic device determines a center line of each line in the to-be-edited paragraph.

For example, the center line is a central axis that passes through an entire line of characters. For example, the center line may be determined in the following manners.

(a) The electronic device determines a geometric center of each character box in each line of the to-be-edited paragraph, calculates, by using a linear fitting function, an optimal fitting straight line that passes through a center of each character box in any line, and uses the optimal fitting straight line that passes through the center of each character box in the any line as a center line of the line.

(b) The electronic device uses a geometric center line (a symmetry axis) of a line box that surrounds an entire line of characters as a center line.

Step 902: The electronic device calculates a first distance between each character in each line and a center line of the line in which the character is located.

For example, the first distance may be a vertical distance between a center of a character box of any character and a center line of a line in which the character is located, and $dist(P_{ij},l_i)$ is denoted as a vertical distance between a center of a character box of a $j^{th}$ character in an $i^{th}$ line and a center line of the $i^{th}$ line.

Step 903: The electronic device determines a distance threshold of each line.

The distance threshold of each line may be a mean distance of first distances between all characters in each line and a center line of the line, or the distance threshold of each line may be a mode or a median of first distances between all characters in the line and a center line of the line. This is not limited in this embodiment of this application. Certainly, the distance threshold of each line may alternatively be a preset value, or the distance threshold of each line may alternatively be a mean value of distance thresholds respectively corresponding to all lines in the to-be-edited paragraph.

For example, the electronic device may calculate a mean distance between all characters in the $i^{th}$ line and the center line of the $i^{th}$ line according to a formula

$$D_i = \frac{\sum_{j=0}^{j=n} dist(P_{ij},l_i)}{n}$$ , to obtain a mean distance between all characters in each line and the center line of the line.

$n$ represents a total quantity of characters in the $i^{th}$ line of the to-be-edited paragraph. $\sum_{j=0}^{j=n} dist(P_{ij},l_i)$ represents a sum of vertical distances between centers of character boxes of the $n$ characters in the $i^{th}$ line and the center line of the $i^{th}$ line. $D_i$ represents the mean distance between all the characters in the $i^{th}$ line and the center line of the $i^{th}$ line.

Step 904: The electronic device determines, based on the threshold of distances between all the characters in each line and the center line of the line and the first distance between each character in each line and the center line of the line in which the character is located, whether there is a character with an abnormal up-down position in each line.

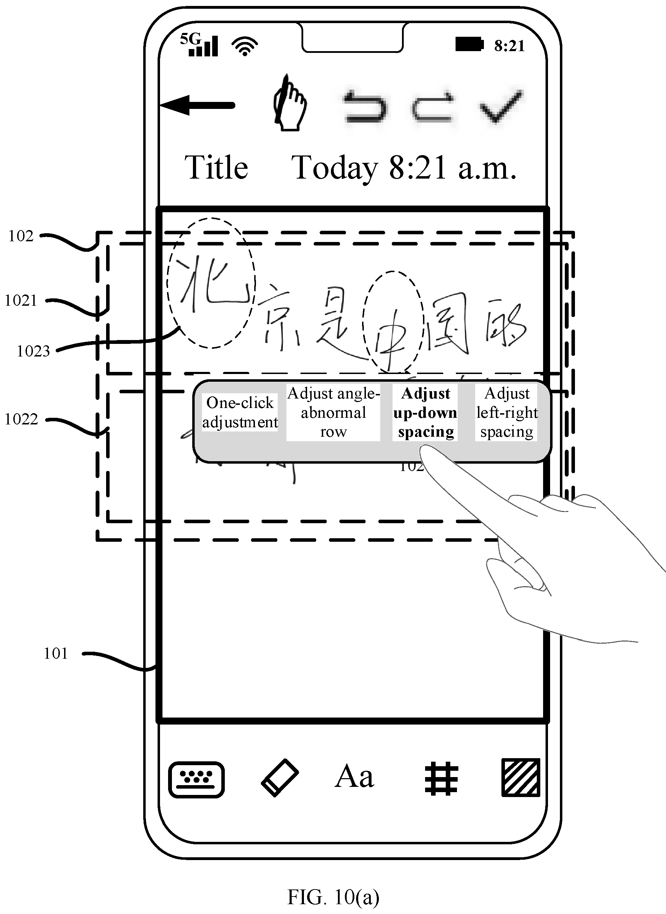

It may be understood that, the character with the abnormal up-down position may be a character that is far away from or close to a center line in a line. For example, as shown in FIG. 10(a), in a handwritten note 102 displayed by the electronic device, a character "北 (north)" 1023 is a character far away from a center line. A character "中 (middle)" 1024 is a character close to a center line in a line 1021. The character far away from the center line may mean that a first distance between the character and the center line of the line in which the character is located is greater than or equal to a third distance threshold. The character close to the center line may mean that a first distance between the character and the center line of the line in which the character is located is less than or equal to a fourth distance threshold.

For example, the third distance threshold is greater than the fourth distance threshold, and both a third distance threshold and a fourth distance threshold of any line may be determined by a distance threshold of the line. For example, it is assumed that a distance threshold of a line is a mean distance of the line. For example, $B_{i1}=D_i$ or $B_{i1}=D_i \times d_1$. $B_{i2}=D_i$ or $B_{i2}=D_i \times d_2$. $B_{i1}$ represents a third distance threshold corresponding to the $i^{th}$ line. $B_{i2}$ represents a fourth distance threshold corresponding to the $i^{th}$ line. $d_1$ and $d_2$ are preset parameters whose values can be autonomously set. For example, $d_1$ and $d_2$ may be any values between 0.5 and 2.5, and $d_1$ is greater than $d_2$. For example, when $B_{i1}=D_i \times d_1$, and $B_{i2}=D_i \times d_2$, $d_1$ may be 1.5, and $d_2$ may be 0.8. For example, when $B_{i1}=D_i$, and $B_{i2}=D_i \times d_2$, $d_2$ may be a value less than 1.

For example, step 904 may be implemented in the following manner:

The electronic device may determine a character with an abnormal up-down position in any line according to a formula $dist(P_{ij},l_i) \geq B_{i1}$ or $dist(P_{ij},l_i) \leq B_{i2}$. $dist(P_{ij},l_i)$ represents a first distance between the center of the character box of the $j^{th}$ character in the $i^{th}$ line and the center line of the $i^{th}$ line. That is, if the first distance between the center of the character box of the $j^{th}$ character in the $i^{th}$ line and the center line of the $i^{th}$ line is greater than or equal to $B_{i1}$, it may be considered that the $j^{th}$ character is a character with an abnormal up-down position. If the first distance between the center of the character box of the $j^{th}$ character in the $i^{th}$ line and the center line of the $i^{th}$ line is less than or equal to $B_{i2}$, it may be considered that the $j^{th}$ character is a character with an abnormal up-down position. $B_{i1}$ and $B_{i2}$ may be user-defined according to a requirement, or may be preset values in a system. This is not limited in this embodiment of this application.

It may be understood that, in this embodiment of this application, each line in a paragraph may correspond to a third distance threshold/fourth distance threshold, and different lines may correspond to a same third distance threshold/fourth distance threshold or different third distance thresholds/fourth distance thresholds.

In an example, the third distance threshold/fourth distance threshold corresponding to each line may be determined by a mean distance between all characters in each line and a center line of the line, or a median or a mode of distances.

For example, $d_1$ =1.5. In this case, for the electronic device, each character whose vertical distance from the center line of the line 1021 is greater than or equal to 1.5 $D_i$ may be used as a character with an abnormal up-down position.

When there is a character with an abnormal up-down position in any line, the electronic device may perform step 905. When there is no character with an abnormal up-down position in any line, the electronic device does not adjust an up-down position of a character in the line.

Step 905: For the character with the abnormal up-down position, the electronic device adjusts a position of the character with the abnormal up-down position, so that a distance between the adjusted character with the abnormal up-down position and the center line is within a preset distance threshold range.

For example, for the character with the abnormal up-down position, the electronic device moves, in a direction from a center of a character box of any character with an abnormal up-down position to a center line of the character, the character with the abnormal up-down position close to or away from the center of the line.

In an example, the preset distance threshold range may be determined by a mean, a mode, or a median of first distances between all characters in the line in which the character with the abnormal up-down position is located and the center line. This is not limited in this embodiment of this application. Alternatively, the preset distance threshold range may be a preset value.

In an example, the preset distance threshold range may include an upper limit and/or a lower limit. For example, the preset distance threshold range may include an upper limit, that is, the preset distance threshold range is a range less than or equal to a second distance threshold. The upper limit of the preset distance threshold range is used to set a limitation that the first distance between the character and the center line after movement is less than or equal to the second distance threshold. For example, the preset distance threshold range may include a lower limit, that is, the preset distance threshold range is a range greater than or equal to a first distance threshold. The lower limit of the preset distance threshold range is used to set a limitation that the first distance between the character and the center line after movement is greater than or equal to the first distance threshold.

For example, if a first distance between a character and a center line is greater than or equal to $1.5\,D_i$, the electronic device may move the character in a direction close to the center line, so that the first distance between the moved character and the center line is within the preset distance threshold range. For example, the first distance between the moved character and the center line is greater than or equal to the first distance threshold and/or less than the second distance threshold. For example, if a first distance between a character and a center line is less than or equal to $0.5\,D_i$, the electronic device may move the character in a direction away from the center line, so that the first distance between the moved character and the center line is greater than or equal to the first distance threshold and/or less than the second distance threshold.

In an example, in an optional implementation, after the electronic device determines the character with the abnormal up-down position in any line, the electronic device may adjust a character position until the character position meets the following formula: $dist(P_{ij}, l_i) \geq A_{i1}$ and/or $dist(P_{ij}, l_i) \leq A_{i2}$. $dist(P_{ij}, l_i)$ represents a vertical distance between a center of a $j$th first character in an $i$th line and a center line of the $i$th line after adjustment. $A_{i1}$ represents a first distance threshold of the $i$th line, and

$A_{i2}$ represents a second distance threshold of the $i$th line. The first distance threshold and/or the second distance threshold are/is determined by a mean, a median, or a mode of first distances between all characters in the $i$th line and the center line of the $i$th line, and the first distance threshold is greater than the second distance threshold. $A_{i1}$ and $A_{i2}$ may be user-defined according to a requirement, or may be preset values in a system. This is not limited in this embodiment of this application. In this embodiment of this application, each line in a paragraph may correspond to a first distance threshold/second distance threshold, and different lines may correspond to a same first distance threshold/second distance threshold or different first distance thresholds/second distance thresholds.

In an example, a first distance threshold/second distance threshold corresponding to any line may be determined by a mean distance between all characters in the line and a center line of the line.

In an example, $A_{i1} = D_i$ or $A_{i1} = D_i \times c$. $A_{i2} = D_i$ or $A_{i2} = D_i \times a$. $c$ and $a$ are preset parameters whose values can be autonomously set. For example, $c$ and $a$ may be any values between 0 and 2. For example, $c$ may be 1, or may be a value greater than 1. Assuming that a character in any line is expected to be closer to a center line, $c$ may alternatively be a value greater than 0 or less than 1, for example, 0.9 or 0.6. Assuming that a character in any line is expected to be farther away from a center line, $c$ may alternatively be a value greater than 1, for example, 1.2 or 1.1.

In an example, the second distance threshold may be less than or equal to the third distance threshold. For example, if a first distance between a character and a center line is greater than or equal to $1.5\,D_i$, the character may be moved toward the center line, so that a first distance between the character and the center line after movement is less than $1.5\,D_i$, for example, is $1.2\,D_i$ or $D_i$.

It may be understood that, although the first distance between the character and the center line can be controlled to be less than the second distance threshold, to avoid that the character is too close to the center line, the first distance between the character and the center line after movement may be made greater than or equal to the first distance threshold. The first distance threshold in this embodiment of this application may be greater than or equal to the fourth distance threshold. Assuming that the fourth distance threshold is $0.5\,D_i$, if a first distance between a character and a center line is less than or equal to $0.5\,D_i$, the character may be moved in a direction away from the center line, so that a first distance between the character and the center line after movement is greater than or equal to $0.9\,D_i$.

For example, when the user uses a finger to handwriting a note in Memo, some characters may be far away from a center line or some characters may be too close to a center line. As a result, the handwritten note does not look neat. As shown in FIG. 10(a), the electronic device displays a note interface 101 shown in FIG. 10(a).

The user may trigger an editing instruction on the handwritten note interface 101. For example, the user may perform a touch and hold operation on the handwritten note interface 101, to trigger the electronic device to display a pop-up window, and then the user may tap, in the pop-up window, a control for adjusting an up-down position of a character, so that the electronic device detects the editing instruction. Then, in response to the editing instruction, the electronic device may determine that the user wants to edit the paragraph 102, and then the electronic device recognizes a character with an abnormal up-down position in the paragraph 102 (that is, a single character that is too close to the upper side or the lower side when the user writes), for example, a single character "北 (north)" 1023 far away from the center line of the line 1021 and a single character "中 (middle)" 1024 close to the center line of the line 1021 in the paragraph 102. Then, the electronic device may appropriately move the character "北

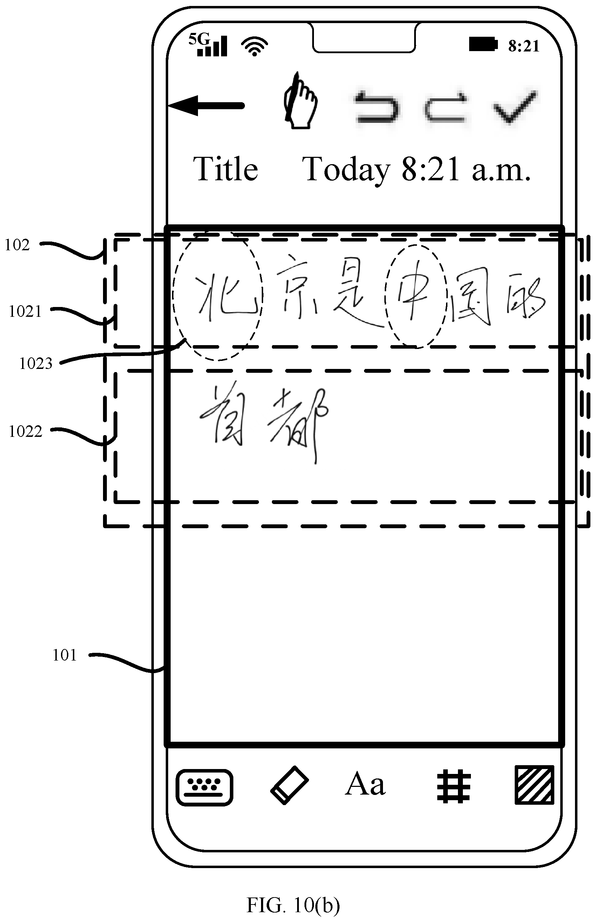

(north)" 1023 toward the center line of the line 1021, so that a first distance between the character "北 (north)" 1023 and the center line of the line 1021 after movement is greater than or equal to the first distance threshold. Optionally, the first distance between the character "北 (north)" 1023 and the center line of the line 1021 after movement may also be less than or equal to the second distance threshold. The electronic device may appropriately move the character "中 (middle)" 1024 in a direction away from the center line of the line 1021, so that a first distance between the character "中 (middle)" 1024 and the center line of the line 1021 after movement is greater than or equal to the first distance threshold. The first distance between the character "中 (middle)" 1024 and the center line of the line 1021 is less than or equal to the second distance threshold, as shown in FIG. 10(b).

It may be understood that any line may include a character with an abnormal up-down position, or may not include a character with an abnormal up-down position. Assuming that there is no character with an abnormal up-down position in any line, the electronic device may not move a character in a direction close to or away from the center line. For example, the electronic device determines that there is no character with an abnormal up-down position in the line 1022.

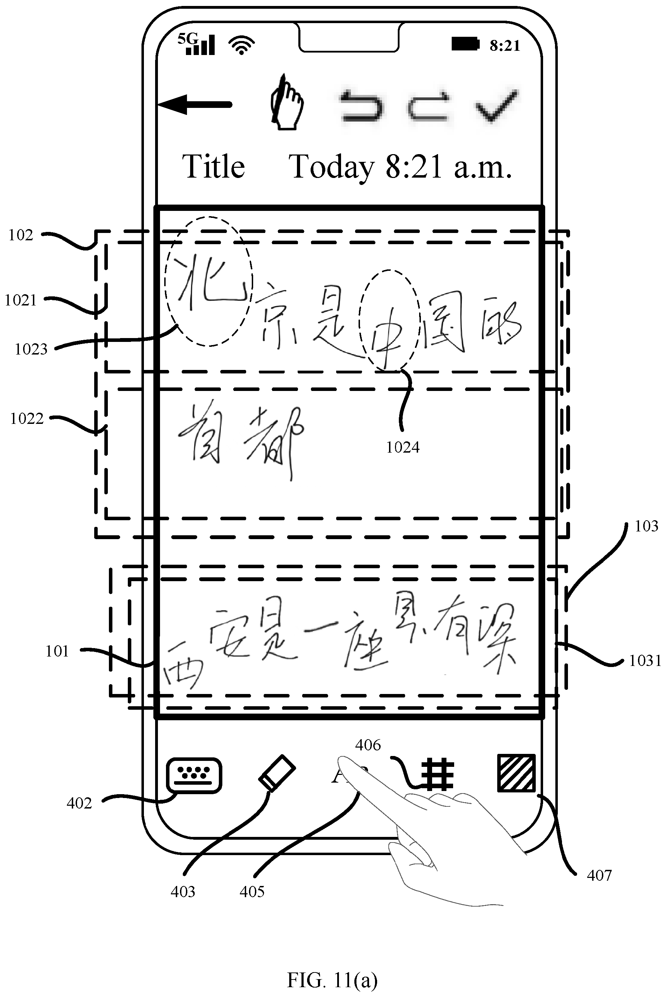

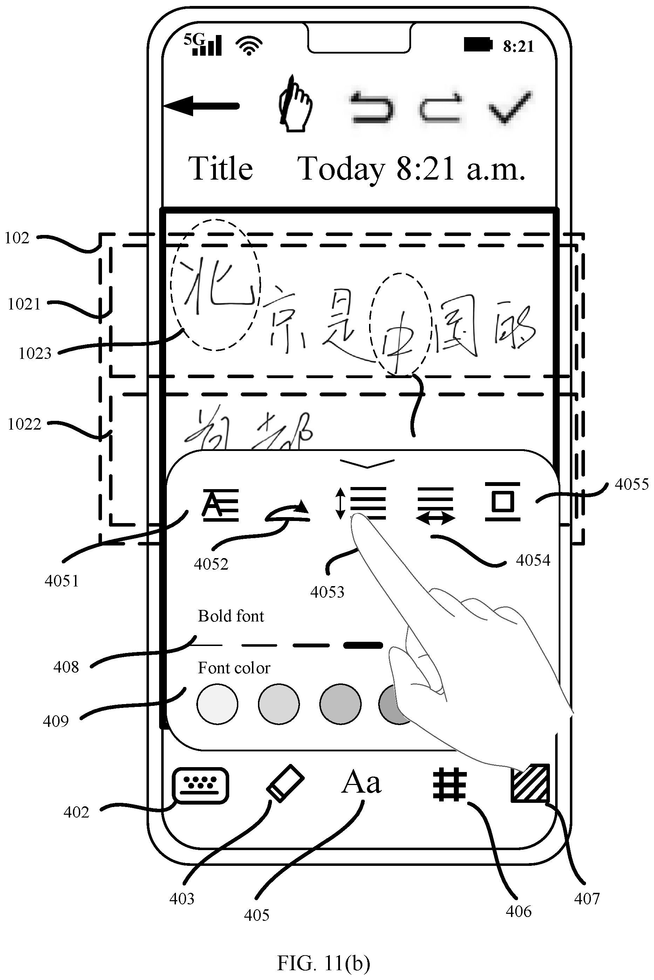

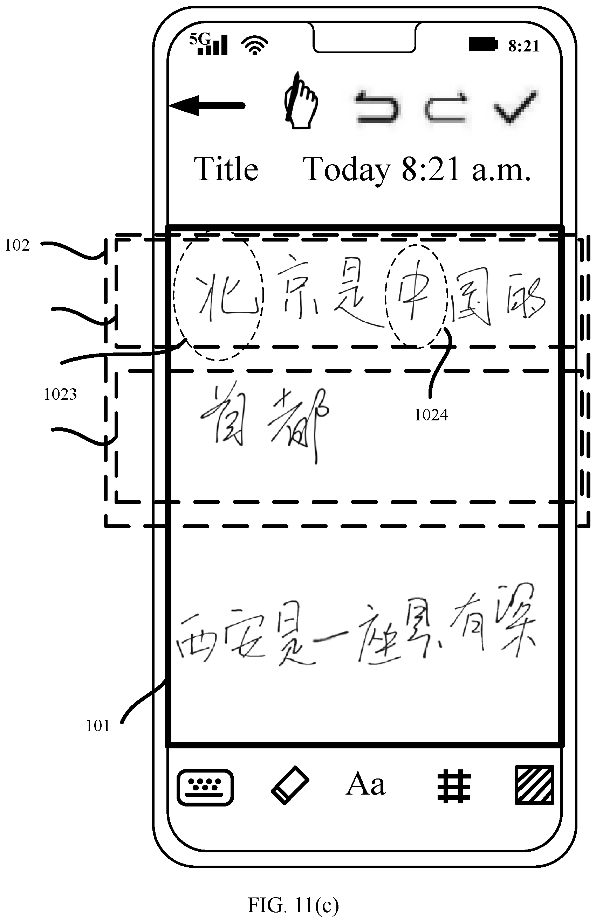

It should be noted that, in FIG. 10(a) and FIG. 10(b), an example in which the electronic device responds to an editing instruction triggered by the user for indicating to edit a paragraph is used. In an actual process, a handwritten note usually includes a plurality of paragraphs, and each paragraph may have a character with an abnormal up-down position. To improve user experience, the user may also trigger an operation for indicating to adjust characters with abnormal up-down positions in all paragraphs of the handwritten note. As shown in FIG. 11(a), the user may tap the "editing control 405", to trigger the electronic device to display an interface shown in FIG. 11(b). In the interface shown in FIG. 11(b), the user may tap the control 4053 to trigger the electronic device to detect the editing instruction of the user, so as to recognize all the paragraphs included in the handwritten note, that is, characters with abnormal up-down positions in the paragraph 102 and the paragraph 103. It is assumed that the electronic device recognizes that the characters "北

(north)" 1023 and "中 (middle)" 1024 in the line 1021 are characters with abnormal up-down positions in the line 1021, and all characters in the line 1031 are characters with abnormal up-down positions. The electronic device may appropriately move the character "北 (north)" 1023 toward the center line of the line 1021, so that a first distance between the character "北 (north)" 1023 and the center line of the line 1021 after movement is greater than or equal to the first distance threshold. Optionally, the first distance between the character "北 (north)" 1023 and the center line of the line 1021 after movement may also be less than or equal to the second distance threshold. The electronic device may appropriately move the character "中 (middle)" 1024 away from the center line of the line 1021, so that a first distance between the character "中 (middle)" 1024 and the center line of the line 1021 after movement is greater than or equal to the first distance threshold. Optionally, the first distance between the character "中 (middle)" 1024 and the center line of the line 1021 after movement may also be less than or equal to the second distance threshold. In addition, the electronic device may further adjust a position of each character in the line 1031, so that vertical distances between all characters in the line 1031 and the center line of the line 1031 after adjustment is greater than or equal to the first distance threshold corresponding to the line 1031, and optionally, is further less than or equal to the second distance threshold corresponding to the line 1031.

It may be understood that in this embodiment of this application, each line has a line box, and a character in each line has a character box.

Scenario 3: Adjust a character spacing in a line.

A design principle of adjusting a character spacing in a line is to recognize characters in each line that have abnormal spacings with left and right neighbors of the characters (that is, characters that are written too densely or sparsely by a user), and appropriately move these single characters or other characters in the line left and right to resolve the abnormal density of the characters.

The user may trigger an editing instruction for a paragraph, and the electronic device adjusts, in response to the editing instruction, a character spacing in the paragraph, so that a character spacing in a line in which an adjusted character with an abnormal left-right spacing is located is greater than or equal to a first spacing threshold. Optionally, a spacing between characters in a same line may further be less than or equal to a second spacing threshold after adjustment.

Before embodiments of this application are described, how to determine a character with an abnormal left-right spacing in a line in a to-be-edited paragraph in this application is first described.

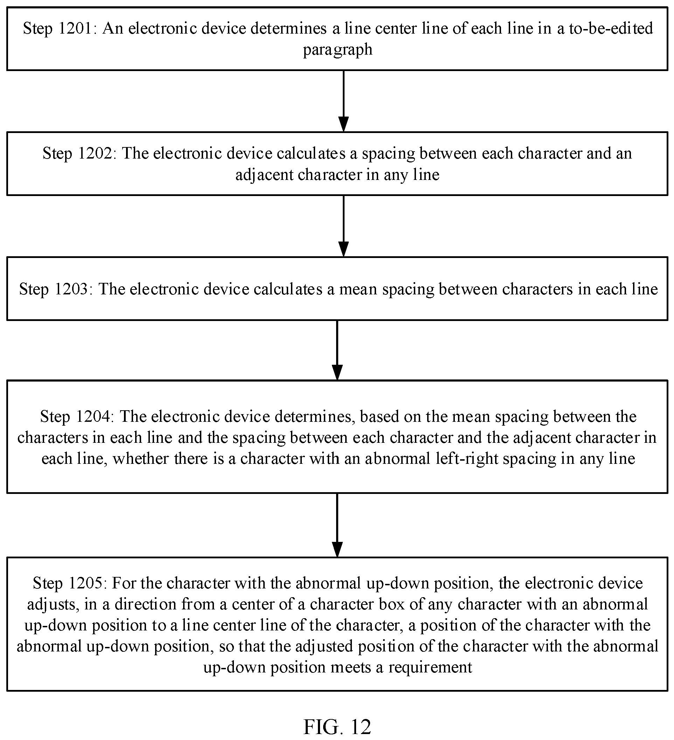

In an example, an electronic device may determine a character with an abnormal left-right spacing in a to-be-edited paragraph by using a procedure shown in FIG. 12. As shown in FIG. 12, the method includes the following steps.

Step 1201: The electronic device determines a center line of each line in the to-be-edited paragraph.

A specific implementation is the same as the description in step 901, and details are not described herein again.

Step 1202: The electronic device calculates a spacing between each character and an adjacent character in any line.

For example, a spacing between a character and an adjacent character may be considered as a horizontal distance between the character and the adjacent character in a direction of a center line.

For example, for each character in any line, the electronic device calculates a distance between the character and an adjacent character in a direction of a center line. In an example, the electronic device may calculate the distance between each character and the adjacent character in the direction of the center line according to a formula $S_{i,\,j} = (P_{i,\,j+1} - P_{i,\,j}) \times \dfrac{l_i}{|l_i|}$ . $S_{i,j}$ represents a distance between a $j$th character in an $i$th line and a character on the right of the $j$th character in a direction of a center line of the $i$th line. $P_{i,\,j+1}$ represents a center position of a character box of the $j+1$th character in the $i$th line. $P_{i,j}$ represents a center position of a character box of the $j$th character in the $i$th line. $\dfrac{l_i}{|l_i|}$ represents a unit vector in the direction of the center line.

Step 1203: The electronic device calculates a mean spacing between characters in each line, or a median or a mode of spacings between characters in each line.

Calculation in step 1202 is performed on each character in any line, to obtain a spacing between any two adjacent characters in a same line. Then, the electronic device may calculate a mean of a plurality of spacings between any two adjacent characters in the same line, to obtain a mean spacing between characters in any line. The mean herein may be an arithmetic mean, or may be a median, a mode, or the like. This is not limited herein.

Due to quantities of characters in different lines, a mean spacing specific to each line may be calculated by using the foregoing solution. In this way, the mean spacing of each line may be used to determine a character with an abnormal spacing in the line, so that spacings between characters in a same line tend to be consistent.

In another example, to make spacings between characters in different lines in a paragraph tend to be consistent, a same value may alternatively be used as the mean spacing of each line in this embodiment of this application. In this way, a unified character spacing in a paragraph may be used to determine a character with an abnormal spacing in the paragraph, so that in a case in which spacings between characters in a same line tend to be consistent, spacings between characters in a same paragraph can also tend to be consistent.

For example, the mean spacing of each line may be obtained by averaging mean spacings of all lines. For example, a weighted mean, a median, a mode, or the like of quantities of characters included in all lines may be used. This is not limited herein.

Step 1204: The electronic device determines, based on the mean spacing/median or the mode of the spacings between the characters in each line and the spacing between each character and the adjacent character in each line, whether there is a character with an abnormal spacing in any line.

If a horizontal distance between a character in a line and an adjacent character of the character is greater than or equal to a third spacing value, and/or less than or equal to a fourth spacing value, it may be considered that the character is a character with an abnormal left-right spacing. In other words, if a horizontal distance between a character in a line and an adjacent character of the character is less than the fourth spacing value, and/or greater than or equal to the third spacing value, it may be considered that the spacing between the character and the adjacent character of the character does not meet a third requirement. The third spacing value is greater than the fourth spacing value. It may be understood that the third spacing value is used to filter out excessively sparse characters in a line, and the fourth spacing value may be used to filter out excessively dense characters in a line.

The fourth spacing value/the third spacing value may be a mean distance of a center line of any line, or may be a value obtained by using a mean distance of a center line of any line and a preset value.

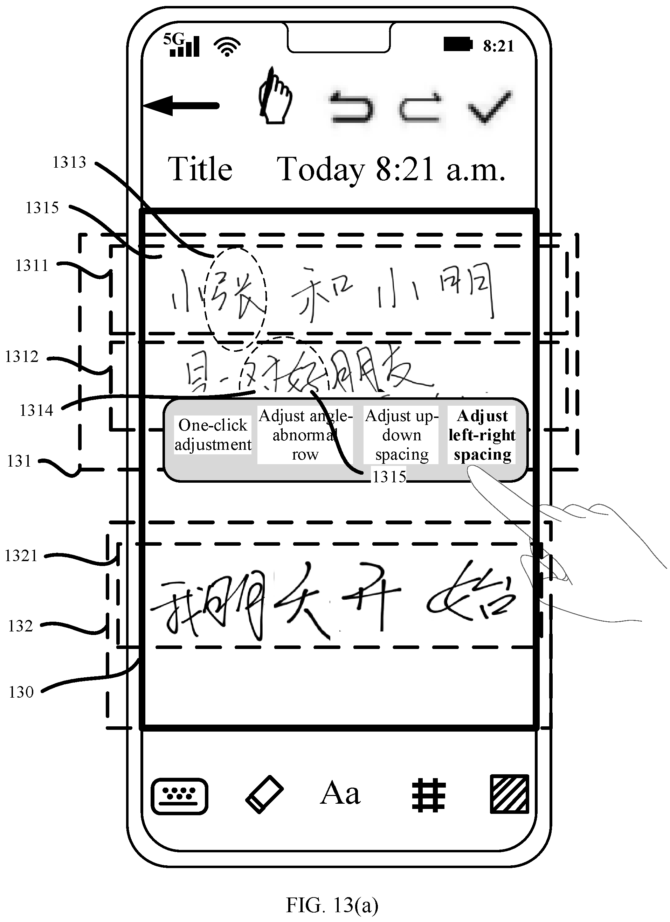

For example, if a spacing between the $j$th character in the $i$th line and the $j+1$th or the $j-1$th character in the $i$th line is $S_{i,j} \geq S_i \times e$ and/or $S_{i,j} \leq S_i \times f$, it is considered that the $j$th character is a character with an abnormal left-right spacing in the $i$th line. $j$ is an integer greater than or equal to 1. For example, if $j=1$, it may be considered that the character is the 1st character from left to right in the $i$th line, for example, a character 1315 in FIG. 13(a) to FIG.

13(c). If $j$ =2, it may be considered that the character is the 2nd character from left to right in the $i$th line, for example, a character 1313 in FIG. 13(a) to FIG. 13(c).

It may be understood that, for any character, if a spacing between the character and an adjacent character is $S_{i,j} \geq S_i \times e$, the character may be considered as a character with an abnormal left-right spacing. Alternatively, if a spacing between the character and an adjacent character is $S_{i,j} \leq S_i \times f$, the character may be considered as a character with an abnormal left-right spacing. Alternatively, if a spacing between the character and an adjacent character 1 meets $S_{i,j} \leq S_i \times f$, and a spacing between the character and an adjacent character 2 meets $S_{i,j} \geq S_i \times e$, the character may also be considered as a character with an abnormal left-right spacing. The adjacent character 1 and the adjacent character 2 are respectively characters located on the left and right of the character.

$S_i$ represents a mean spacing between all characters and adjacent characters of the characters in the $i$th line. $e$ and $f$ are preset values. For example, $e$ and $f$ may be 1.5, 1.2, 1.3, 2, 2.1, or a value less than 1, and $e$ is greater than $f$. This is not limited in this embodiment of this application.

Using $e$ = 1.5 as an example, when the spacing between the $j$th character in the $i$th line and the $j$ + 1th character in the $i$th line is $S_{i,j} \geq S_i \times 1.5$, it is considered that the $j$th character is a character with an abnormal left-right spacing in the $i$th line. In an actual process, a position of the $j$th character may be moved, or a position of the $j$ + 1 th character may be moved, so that a spacing between the $j$th character and the $j$ +1 th character after movement meets a preset spacing requirement.

When there is a character with an abnormal left-right spacing in any line, the electronic device may perform step 1205.

Step 1205: The electronic device adjusts a position of a character in a line in which the character with the abnormal left-right spacing is located, so that a spacing between adjacent characters in the entire line meets the preset spacing requirement.

That the spacing between the adjacent characters meets the preset spacing requirement may mean that spacings between adjacent characters in a same line are the same, or a spacing between adjacent characters in a same line is within a preset spacing threshold range.

For example, the preset spacing threshold range may be determined by a mean, a mode, or a median of spacings between all characters in the line in which the character with the abnormal left-right spacing is located.

In an example, the preset spacing threshold range in this embodiment of this application may include an upper limit and/or a lower limit. For example, the preset spacing threshold range may include an upper limit, that is, the preset spacing threshold range is a range less than or equal to a second spacing value. The upper limit of the preset spacing threshold range is used to limit a spacing between the character and an adjacent character after movement to be less than or equal to the second spacing value. For example, the preset spacing threshold range may include a lower limit, that is, the preset spacing threshold range is a range greater than or equal to a first spacing threshold. The lower limit of the preset spacing threshold range is used to limit a spacing between the character and an adjacent character after movement to be greater than or equal to the first spacing value.

In an example, the electronic device may move a position of a character in a line in a direction parallel to a center line.

In an example, the electronic device may adjust only a position of the character with the abnormal left-right spacing, so that the spacing between the adjacent characters in the entire line meets the preset spacing requirement.

In another example, in practice, adjusting only the position of the character with the abnormal left-right spacing may not be capable of making the spacing between the adjacent characters in the entire line meet the preset spacing requirement. In this case, the electronic device may further move a position of another character in the line, so that the spacing between the adjacent characters in the entire line finally meets the preset spacing requirement.

An example implementation is to adjust a character position until the character position meets the following formula: $dist(P_{ij}, P_{ij+1}, l_i) > y$ and/or $dist(P_{ij}, P_{ij+1}, l_i) < m$. $y$ represents the first spacing threshold, and $m$ represents the second spacing threshold. The first spacing threshold and the second spacing threshold may be determined based on a mean spacing of the $i$th line. For example, the first spacing threshold is the mean spacing $S_i$ of the $i$th line, that is, $y = S_i$. Alternatively, the first spacing threshold may be determined based on the mean spacing $S_i$ of the $i$th line and a preset parameter $c$, that is, $y = S_i \times c$. $c$ may be a value greater than 0. For example, if a spacing between characters in any line is expected to be small after adjustment, $c$ may be set to a value less than 1. If a spacing between characters in any line is expected to be large after adjustment, $c$ may be set to a value greater than or equal to 1. The first spacing threshold is greater than the second spacing threshold. The second spacing threshold is determined by the mean spacing $S_i$ and a preset parameter $n$. $n$ may be a value greater than 0. For example, $c$ is 1, and $n$ is 0.8.

In an example, $c$ is a value greater than 0 and less than or equal to 1.

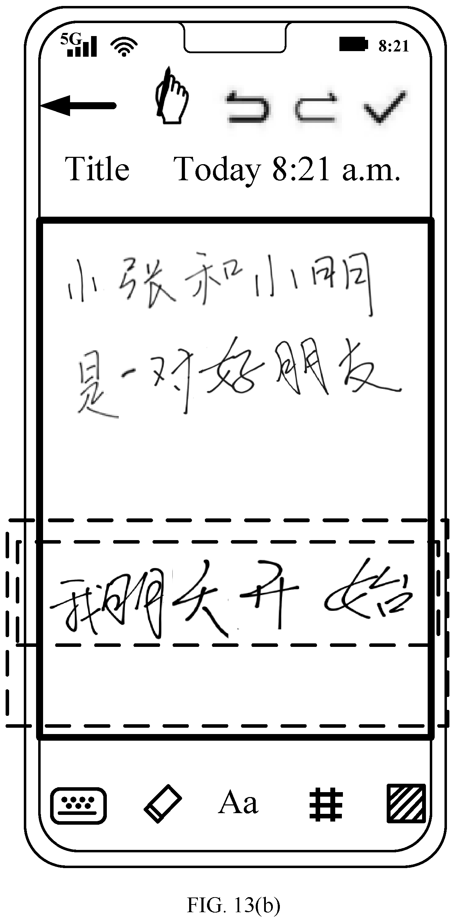

When the user uses a finger or a stylus to handwriting a note in Memo, some characters may be excessively dense or sparse. In this scenario, to ensure neatness of the note written by the user, the electronic device may recognize characters having abnormal spacings with left and right neighbors in any line, and appropriately move these characters left and right to resolve the abnormal density of the characters. As shown in FIG. 13(a), the electronic device displays a handwritten note interface 130 shown in FIG. 13(a). The handwritten note interface 130 includes a paragraph 131 and a paragraph 132. The paragraph 131 includes a line 1311 and a line 1312. The paragraph 132 includes a line 1321. Assuming that the user wants to edit the paragraph 131, the user may trigger an editing instruction for the paragraph 131 in the handwritten note interface 130. For example, the user may perform a touch and hold operation on the handwritten note interface 130, to trigger the electronic device to display a pop-up window. Then, the user taps a control for adjusting a left-right spacing in the pop-up window, to trigger the electronic device to detect the editing instruction. Then, in response to the editing instruction, the electronic device may determine that the user wants to edit the paragraph 131, and then the electronic device recognizes a character with an abnormal left-right spacing in the paragraph 132. It is assumed that the electronic device recognizes, with reference to the procedure shown in FIG. 12, that a character "张 (a Chinese surname)" 1313 in the line 1311 is a character with an abnormal left-right spacing, and a character "对 (pair)" 1314 and a character "好 (good)" 1315 in the line 1312 are characters with abnormal left-right spacings. The electronic device may move the character "张 (a Chinese surname)" 1313 close to an adjacent character "和 (and)" in a direction of a center line, so that a spacing between the character "张 (a Chinese surname)" 1313 and a left-side character "小 (little)" of the character "7K (a Chinese surname)" 1313 is the same as a spacing between the character "张 (a Chinese surname)" 1313 and the right-side character "和 (and)" of the character "9E (a Chinese surname)" 1313 after movement, as shown in FIG. 13(b). It may be understood that, after movement in FIG. 13(b), spacings between all characters in line 1311 tend to be consistent. It may be understood that, in an implementation process, to keep the spacings between all the characters in the line 1311 tend to be consistent, the electronic device may first determine a target spacing between adjacent characters, and then move the characters in the line 1311 based on the determined target spacing. For example, the electronic device may first move the character "张 (a Chinese surname)" 1313 to the right based on the target spacing. It is assumed that after the character "张 (a Chinese surname)" 1313 is moved, a spacing between the character "张 (a Chinese surname)" 1313 and the character "和 (and)" is greater than the target spacing. In this case, the electronic device may move the character "和 (and)" to the left (that is, in a direction close to the character "张 (a Chinese surname)" 1313), so that the spacing between the character "张 (a Chinese surname)" 1313 and the character "和 (and)" is equal to the target spacing. By analogy, the electronic device may move remaining characters in the line 1311 according to the method, so that the spacings between all the characters in the line 1311 tend to be consistent after movement. As shown in FIG. 13(a), the electronic device may also move the character "对 (pair)" 1314 and the character "好 (good)" 1315 in the line 1312 based on a spacing requirement that needs to be met between characters in the line 1312 after movement, so that spacings between the characters in the line 1312 after movement tend to be consistent, as shown in FIG. 13(b).

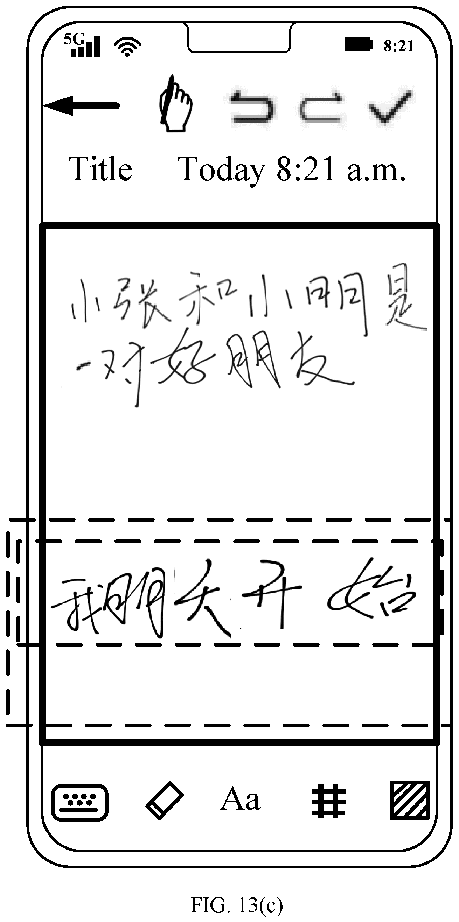

In another example, it is assumed that after the electronic device adjusts the position of the character in the line 1311, if there is still a blank area in the line 1311, and one or more characters can be accommodated, as shown in FIG. 13(b), there is still a blank area after a character "明 (a name)" after movement, the electronic device may move a character "是 (are)" in the line 1312 to the blank area in the line 1311, and move a position of another character in the line 1312, as shown in FIG. 13(c).

It may be understood that any line may include a character with an abnormal left-right spacing, or may not include a single character with an abnormal left-right spacing. Assuming that there is no single character with an abnormal left-right spacing in any line, the electronic device may not need to perform an action of moving a character in any line left and right.

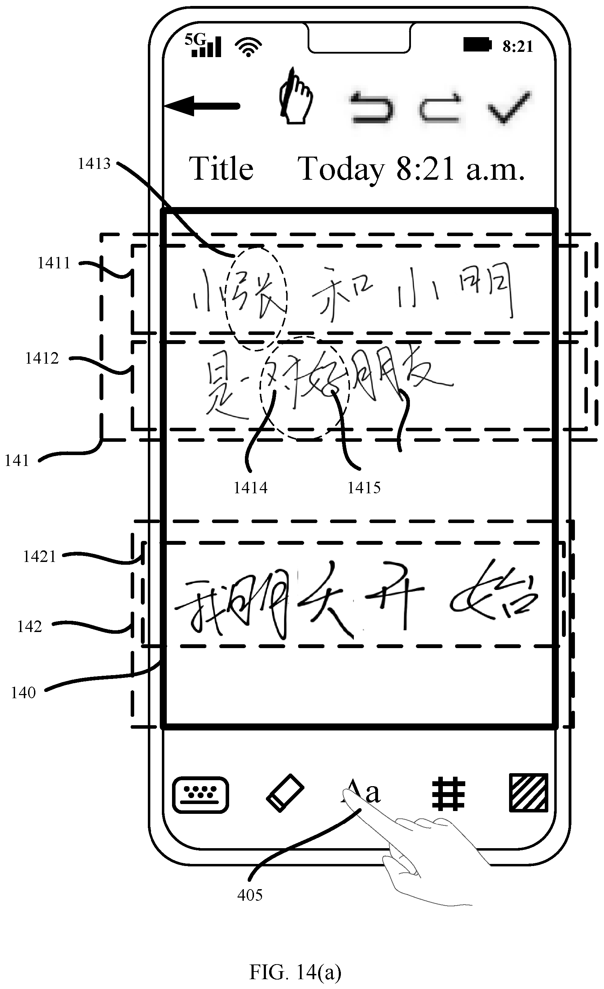

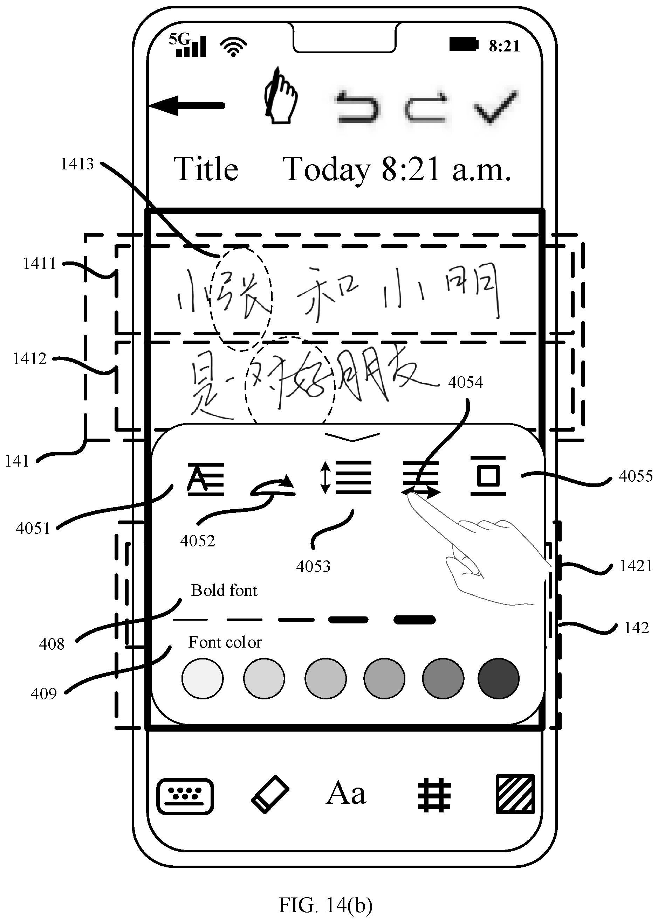

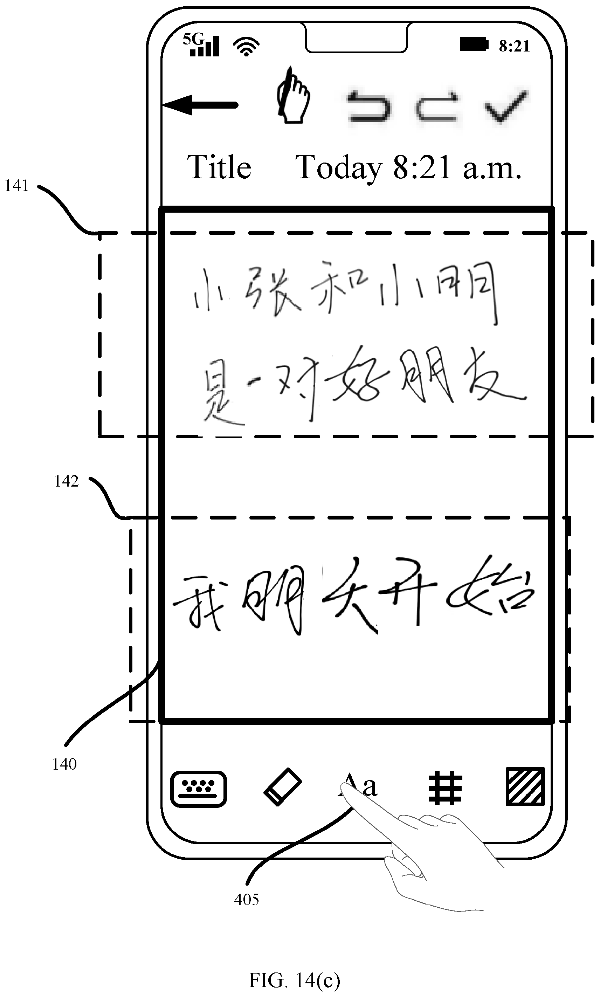

It should be noted that, FIG. 13(a) to FIG. 13(c) show an example in which the electronic device adjusts, in response to an editing instruction triggered by the user for indicating to edit a specific paragraph, a character with an abnormal left-right spacing in one or more lines of the to-be-edited paragraph. In an actual process, a handwritten note usually includes a plurality of paragraphs, and each paragraph may have a character with an abnormal left-right spacing. In this case, if the manner shown in FIG. 13(a) to FIG. 13(c) is used for adjustment, it may be relatively cumbersome and is not conducive to user experience. As shown in FIG. 14(a) to FIG. 14(c), it is assumed that the electronic device displays a handwritten note interface 140 shown in FIG. 14(a), and the handwritten note interface 140 displays a paragraph 141 and a paragraph 142. The paragraph 141 and the paragraph 142 each have a character with an abnormal character spacing. In this case, to adjust the character with the abnormal character spacing in each of the paragraph 141 and the paragraph 142 in one-click mode, the user may tap a control 405, to trigger the electronic device to display an interface shown in FIG. 14(b). In the interface shown in FIG. 14(b), the user may tap a control 4054, so that the electronic device detects an editing instruction. In this case, the electronic device may adjust, in response to the editing instruction, the character with the abnormal character spacing in each of the paragraph 141 and the paragraph 142, and display an interface shown in FIG. 14(c) after adjustment.

It should be noted that, in the foregoing scenario 1 to scenario 3, the electronic device respectively adjusts, in response to the editing instruction, the angle-abnormal line, the character with the abnormal up-down position, and the character with the abnormal left-right spacing in the to-be-edited paragraph. In an actual process, a same to-be-edited paragraph may include an angle-abnormal line, a character with an abnormal up-down position, and a character with an abnormal left-right spacing. In this scenario, in response to a detected editing instruction, the electronic device may rotate the angle-abnormal line in the to-be-edited paragraph, move a position of the character with the abnormal up-down position, and move a position of the character with the abnormal left-right spacing. When the electronic device detects the editing instruction, if the to-be-edited paragraph includes a character with an abnormal up-down position and a character with an abnormal left-right spacing, but does not include an angle-abnormal line, the electronic device may adjust, in response to the editing instruction, a position of the character with the abnormal up-down position and a position of the character with the abnormal left-right spacing in the to-be-edited paragraph. When the electronic device detects the editing instruction, if the to-be-edited paragraph includes an angle-abnormal line and a character with an abnormal left-right spacing, but does not include a character with an abnormal up-down position, in response to the editing instruction, the electronic device may rotate the angle-abnormal line in the to-be-edited paragraph, and adjust a position of the character with the abnormal left-right spacing. When the electronic device detects the editing instruction, if the to-be-edited paragraph includes an angle-abnormal line and a character with an abnormal up-down position, but does not include a character with an abnormal left-right spacing, in response to the editing instruction, the electronic device may rotate the angle-abnormal line in the to-be-edited paragraph, and move a position of the character with the abnormal up-down position.

In an example, the editing instruction triggered by the user in the handwritten note interface may alternatively be a delete operation or an insert operation.

An example in which the editing instruction is a delete operation is used to describe how to adjust a position of a character in a to-be-edited paragraph when the electronic device detects the delete operation in this embodiment of this application.

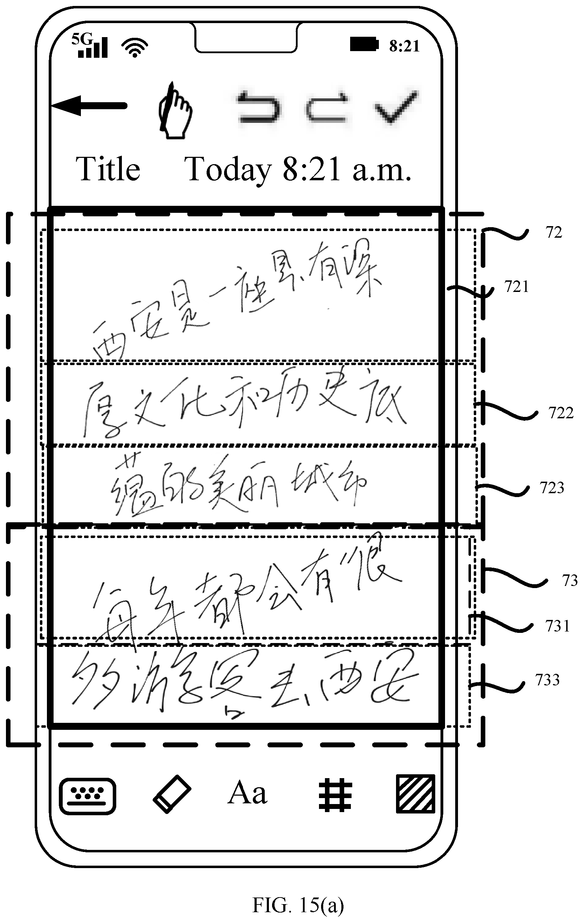

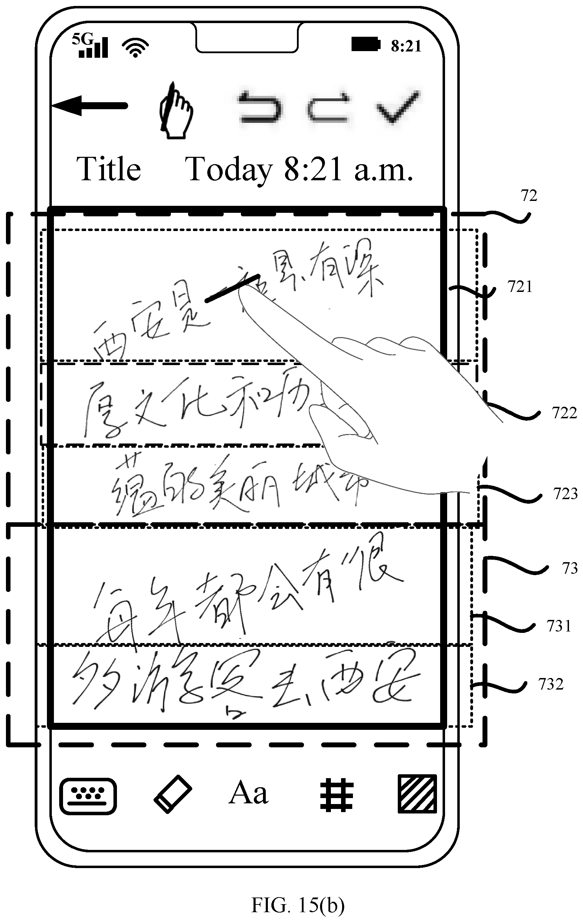

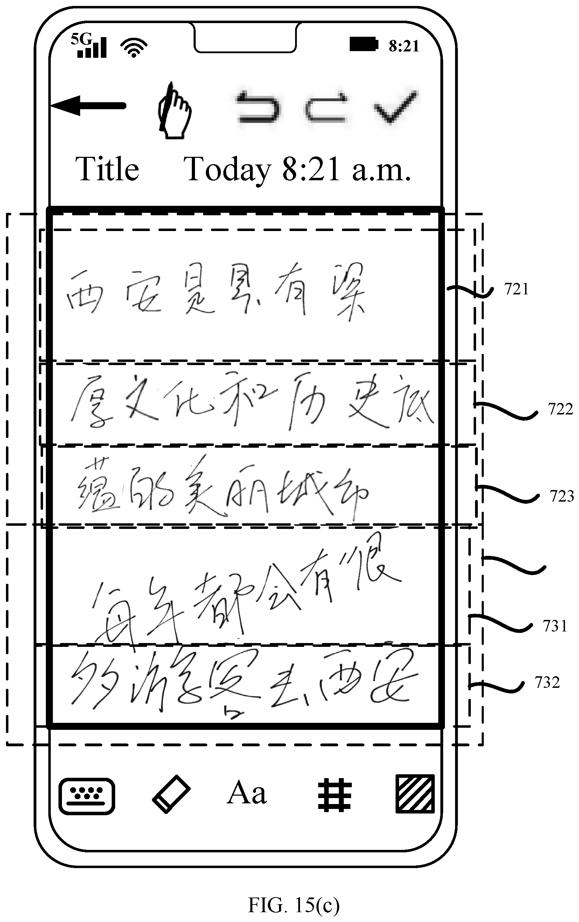

As shown in FIG. 15(a), a paragraph 72 and a paragraph 73 are displayed in a handwriting interface area of the electronic device. When the user wants to delete a character in a paragraph, for example, as shown in FIG. 15(b), the electronic device may indicate, by triggering a delete operation, the electronic device to delete characters "一座 (a)" in a line 721. When the electronic device detects the delete operation, the electronic device may recognize, by using the procedures in FIG. 6, FIG. 9, and FIG. 11(a) to FIG. 11(c), whether the following cases exist in the paragraph 72: an angle-abnormal line, a character with an abnormal up-down position, and a character with an abnormal left-right spacing. It is assumed that, as shown in FIG. 15(b), the line 721 is an angle-abnormal line, there is a character with an abnormal left-right spacing in each of the line 721, a line 722, and a line 723, and there is further a character with an abnormal up-down position in the line 721. For example, characters "厚 (profound)", "历 (previous)", "史 (history)", and the like in the line 721 are all characters with abnormal up-down positions. In this scenario, in response to the delete operation, the electronic device may rotate the line 721 in the paragraph 72 to change an angle of the line 721, and the electronic device may further move character positions in the line 721, the line 722, and the line 723 toward the left or the right, so that spacings between adjacent characters in the line 721, the line 722, and the line 723 meet a preset spacing requirement. In addition, the electronic device further needs to move, in a direction close to or away from a center line of the line 721, positions of the characters such as "厚 (profound)", "历 (previous)", and "史 (history)" in the line 721, so that the moved positions of the characters "厚 (profound)", "历 (previous)", and "史 (history)" in the line 721 meet a preset distance requirement. An adjustment result is shown in FIG. 15(c). It can be seen from FIG. 15(c) that after adjustment, character spacings in the line 721 tend to be consistent. Character spacings in the line 722 tend to be consistent. Character spacings in the line 723 tend to be consistent. In addition, distances between the characters such as "厚 (profound)", "历 (previous)", and "史 (history)" in the line 721 and the center line of the line 721 meet the preset distance requirement.

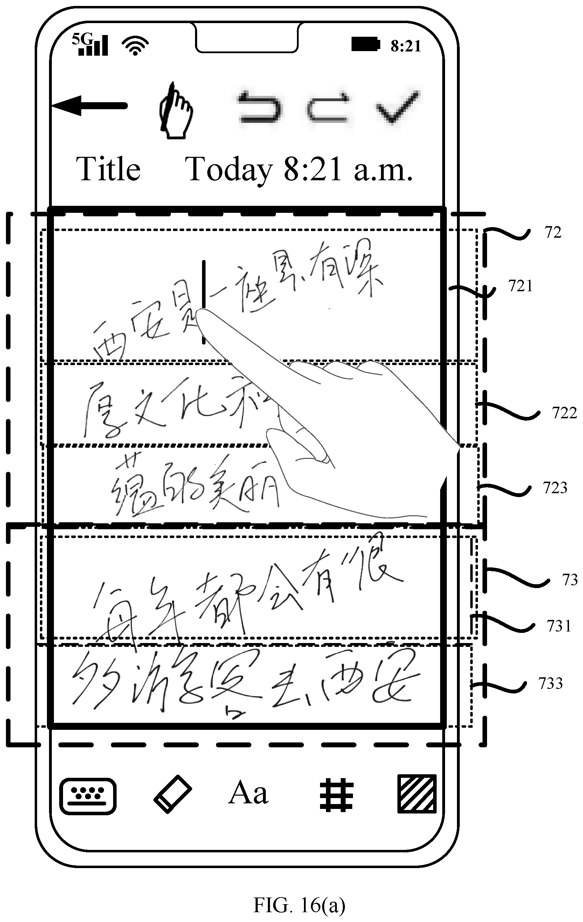

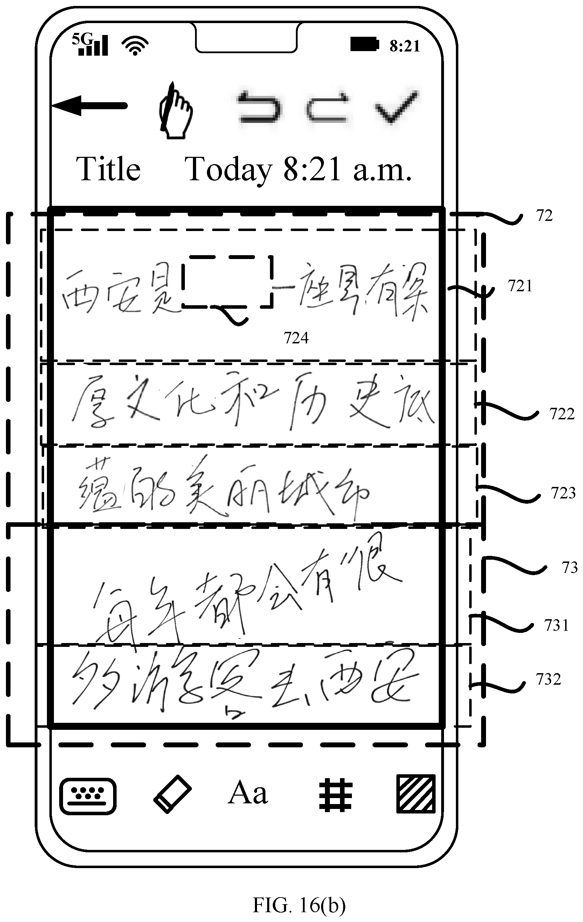

For example, an example in which the editing instruction is an insert operation is used to describe how to adjust a position of a character in a to-be-edited paragraph when the electronic device detects the insert operation in this embodiment of this application. With reference to FIG. 15(a), it is assumed that the user wants to insert a character at a position in the line 721. As shown in FIG. 16(a), the electronic device may trigger a touch and hold operation at the position at which the user wants to insert a character (for example, a position between a

character "是 (is)" and a character "一 (a)" in the line 721), so that the electronic device detects the insert operation. In this scenario, the electronic device may generate a blank area of a preset length between the character "是 (is)" and the character "一 (a)" in response to the insert operation that is input by the user, for the user to write to-be-inserted content. In addition, the electronic device may further adjust, in response to the insert operation of the user, an angle of the line 721 and characters with abnormal left-right spacings and characters with abnormal up-down positions in the line 721, the line 722, and the line 723, and finally display an interface shown in FIG. 16(b).

In this embodiment of this application, after the electronic device detects the editing instruction (for example, insertion or deletion), the electronic device may adjust a position of a character in a to-be-edited paragraph to improve neatness. Then, the electronic device performs character typesetting based on an entire layout on characters in the entire layout. For different types of editing instructions, character typesetting manners of the electronic device are different. The embodiments separately describe character typesetting procedures based on an entire layout during execution of a delete operation and an insert operation.

Scenario 4: Perform character typesetting based on an overall layout.

    (1) Delete operation (which may also be referred to as a delete instruction)

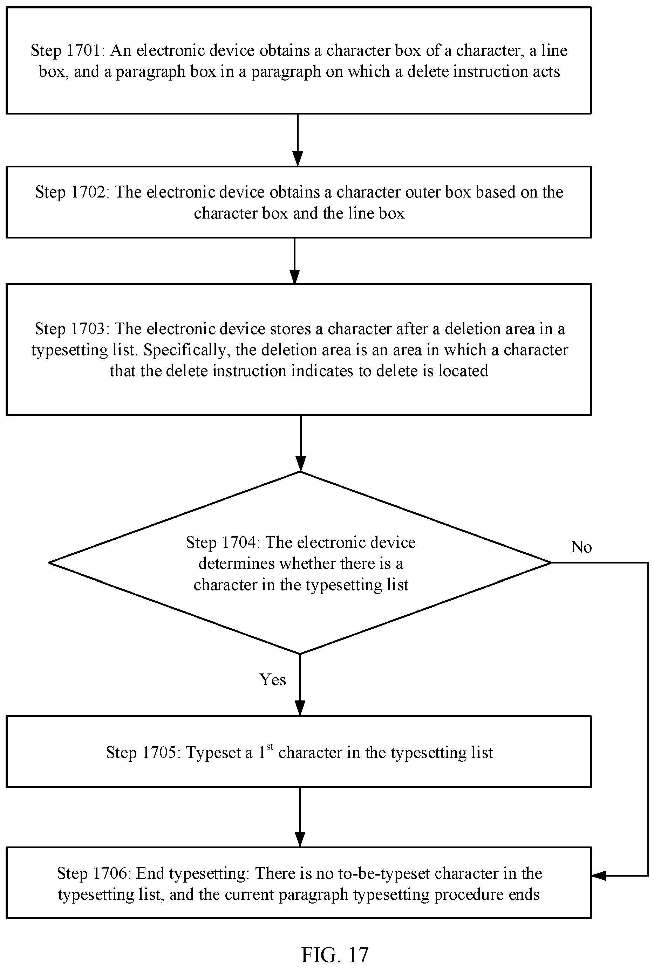

FIG. 17 shows a character typesetting procedure of an electronic device in response to a delete instruction.

Step 1701: The electronic device obtains a character box of a character, a line box, and a paragraph box in a paragraph on which the delete instruction acts.

For example, the electronic device first obtains a paragraph box of a to-be-edited paragraph, a line box of each line in the to-be-edited paragraph, and a character box of each character in the to-be-edited paragraph.

Step 1702: The electronic device obtains a character outer box based on the character box and the line box.

A boundary of the line box of each line in the to-be-edited paragraph and a middle line between included character boxes form a character outer box of each line of characters.

Step 1703: The electronic device stores a character after a deletion area in a typesetting list. Specifically, the deletion area is an area in which a character that the delete instruction indicates to delete is located.

Step 1704: The electronic device determines whether there is a character in the typesetting list.

Whether there is a to-be-typeset character in the typesetting list is determined. If there is a to-be-typeset character in the typesetting list, step 1705 is performed.

formed. If there is no to-be-typeset character in the typesetting list, step 1706 is performed.

Step 1705: Typeset a 1st character in the typesetting list.

For example, the electronic device typesets the 1 st character in the typesetting list. A left edge of a character outer box of the typeset character coincides with a right edge of a previous character, and a midpoint of the character outer box of the typeset character is aligned with a center line. If a right boundary of the paragraph box is exceeded, a left border of the typeset character coincides with a left boundary of the paragraph box, and a center of the character box is aligned with a center line of a next line. Then, determining in step 1704 is performed again.

Step 1706: End typesetting: There is no to-be-typeset character in the typesetting list, and the current paragraph typesetting procedure ends.

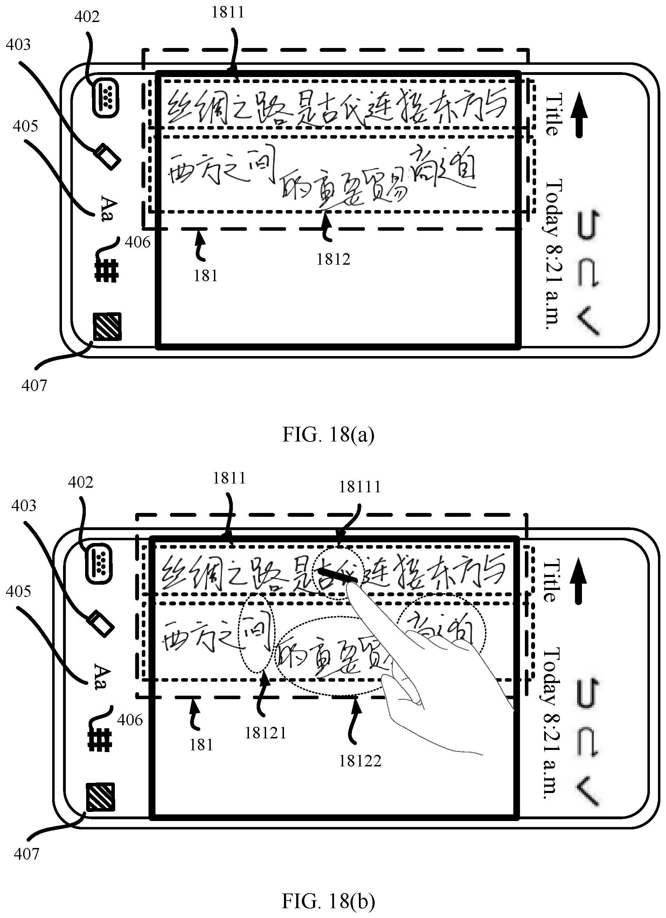

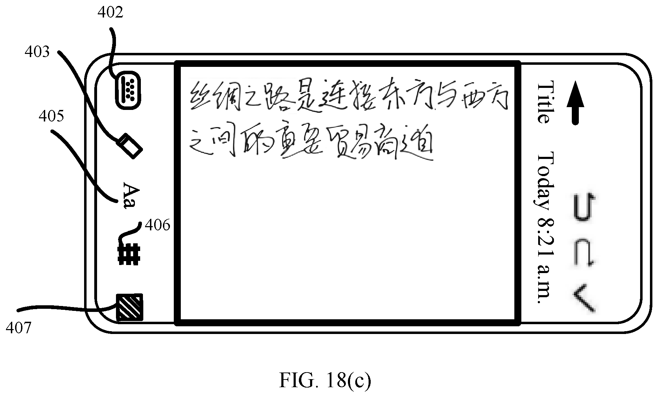

As shown in FIG. 18(a), a handwritten note interface of the electronic device displays a handwritten note, the handwritten note includes a paragraph 181, and the paragraph 181 includes a line 1811 and a line 1812. When the user wants to delete some characters in the paragraph 181, as shown in FIG. 18(b), the user may trigger a delete operation for characters 18111. In this case, the electronic device may delete the characters 18111 from the handwritten note in response to the received delete operation. After the characters 18111 are deleted, the electronic device may move a character (for example, "连接东方与 (connecting the east and)") after the characters 18111 in the line 1811 toward a left side (that is, toward "丝绸之路是 (silk road is)"), move a character (for example, "西方 (the west)") in the line 1812 to the line 1811, and display an interface shown in FIG. 18(c).

It is assumed that there are 11 characters in the $i$th line. After the electronic device deletes the $j \sim j+5$th characters in the $i$th line, if $j=2$, the electronic device may move the $j+6$th to the 12th characters in the $i$th line toward the left, so that the $j+6$th character is adjacent to the $j-1$th character. After movement, a blank area exists on a right side in the $i$th line. To improve neatness of the handwritten note, the electronic device may further calculate, based on a length of the blank area and a size and a mean spacing of characters handwritten by the user in the $i$th line, a quantity of characters that can be accommodated in the blank area. For example, six characters can be accommodated. In this case, the electronic device may move the first six characters on a left side in the $i+1$th line (that is, the 1st character to the 6th character in the $i+1$th line) to the blank area in the $i$th line.

Optionally, the electronic device may further adjust, in response to the delete operation, an angle-abnormal line, a character with an abnormal up-down position, and/or a character with an abnormal left-right spacing in the paragraph 181. For example, the line 1812 includes characters with abnormal up-down positions, for example, "character" 18121, "character" 18122, and "character" 18123. The electronic device may further adjust, in response to the delete operation, a character with an abnormal up-down position in the line 1812, and finally display an interface shown in FIG. 18(c).

It may be understood that, the character with the abnormal up-down position in the line 1812 is used as an example herein. In an actual process, if an angle-abnormal line and/or a character with an abnormal left-right spacing also exist/exists in the line 1811 and the line 1812, the electronic device may further rotate the angle-abnormal line in the line 1811 and the line 1812 and/or adjust a character spacing in the line 1811 and the line 1812.

(2) Insert operation (which may also be referred to as an insert instruction)

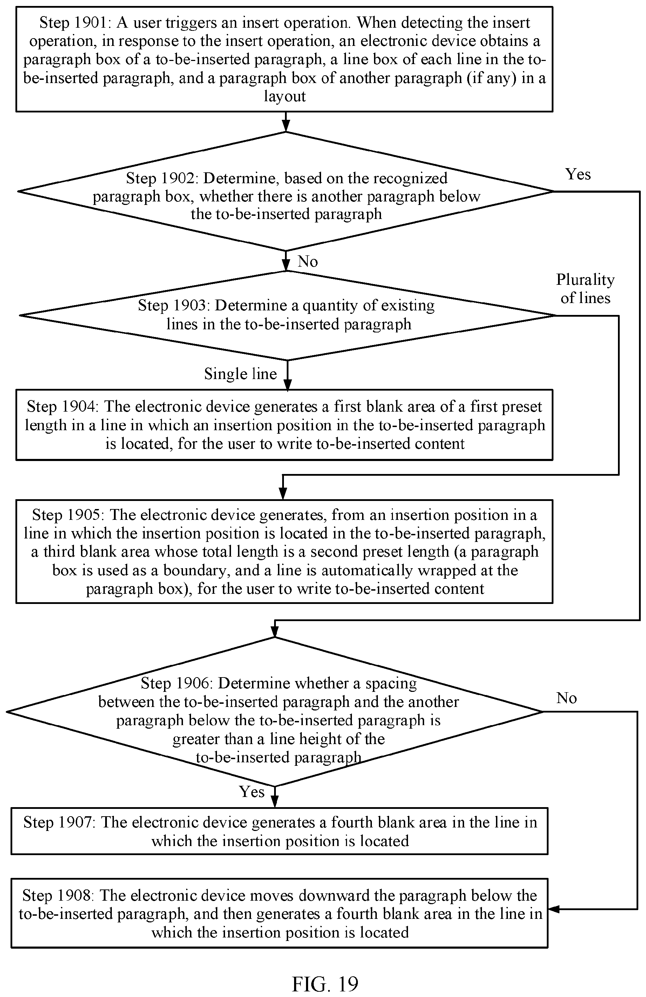

After a user writes a handwritten note in a handwriting area of an electronic device, the following scenario may exist: The user misses a character or the user wants to insert content between two characters in a line. In this case, the user may trigger an insert operation for the electronic device, so that the electronic device inserts, in response to the insert operation after detecting the insert operation, a blank area of a specified length at a position indicated by the insert operation, so that the user writes content. A specific procedure may be shown in FIG. 19.

Step 1901: The user triggers an insert operation. When detecting the insert operation, in response to the insert operation, the electronic device obtains a paragraph box of a to-be-inserted paragraph, a line box of each line in the to-be-inserted paragraph, and a paragraph box of another paragraph (if any) in a layout.

For example, the to-be-inserted paragraph is a paragraph on which the insert operation acts.

Step 1902: The electronic device determines, based on the recognized paragraph box, whether there is another paragraph below the to-be-inserted paragraph.

In step 1902, if the electronic device determines that there is no other paragraph below the to-be-inserted paragraph, the electronic device performs determining in step 1903; or if the electronic device determines that there is another paragraph below the to-be-inserted paragraph, the electronic device performs determining in step 1906.

Step 1903: The electronic device determines, based on the line box in the to-be-inserted paragraph that is recognized in step 1901, a quantity of existing lines of the to-be-inserted paragraph.

It may be understood that the quantity of existing lines of the to-be-inserted paragraph is a quantity of lines in the to-be-inserted paragraph before the electronic device detects the insert operation.

In step 1902, if the electronic device determines that the to-be-inserted paragraph includes only one line, that is, a single line, step 1904 is performed; or if the electronic device determines that the to-be-inserted paragraph includes a plurality of lines, step 1905 is performed.

Step 1904: The electronic device generates a first blank area of a first preset length in a line in which an insertion position in the to-be-inserted paragraph is located, for the user to write to-be-inserted content.

The first preset length is less than a length of the line in which the insertion position is located. For example, the first preset length may be one half or one third of the length of the line in which the insertion position is located. This is not limited in this embodiment of this application.

It may be understood that, after the first blank area is generated, the user may write a character in the first blank area. It may be understood that the character written by the user in the first blank area may be a character entered by using a keyboard of a mobile phone, or may be a character entered by the user in a handwriting manner. This is not limited in this embodiment of this application.

In another example, after the first blank area is generated, if the electronic device detects that the user does not write a character in the first blank area within preset duration, the electronic device may cancel the first blank area.

If a proportion of the to-be-inserted content written by the user in the first blank area exceeds a specific threshold (a preferred value is between 0.5 and 1.0), a second blank area is generated for the user to input. If the added second blank area causes the paragraph to touch another paragraph box or page boundary, the line is automatically wrapped.

If a proportion, in the first blank area, of the content entered by the user in the first blank area is less than a threshold, that is, the first blank area is not fully written, the electronic device may typeset a character after the first blank area with reference to the method shown in FIG. 17.

Step 1905: The electronic device generates, from the insertion position in the line in which the insertion position is located in the to-be-inserted paragraph, a third blank area whose total length is a second preset length (a paragraph box is used as a boundary, and a line is automatically wrapped at the paragraph box), for the user to write to-be-inserted content.

For example, the second preset length is equal to the length of the line in which the insertion position is located. The first preset length is less than the second preset length.

If a proportion of the to-be-inserted content written by the user in the third blank area in the entire third blank area exceeds a specific threshold (a preferred value is between 0.5 and 1.0), a fourth blank area whose total length is equal to the line length is generated for the user to input (a paragraph box is used as a boundary, and a line is automatically wrapped at the paragraph box).

Step 1906: When there is another paragraph below the to-be-inserted paragraph, the electronic device determines whether a spacing between the to-be-inserted paragraph and the another paragraph below the to-be-inserted paragraph is greater than a line height of the to-be-inserted paragraph.

For example, the line height of the to-be-inserted paragraph may be a mean line height of all lines, or may be a largest line height or a smallest line height in the to-be-inserted paragraph. This is not limited in this embodiment of this application.

Whether the spacing between the to-be-inserted paragraph and the paragraph below the to-be-inserted paragraph is greater than the mean line height of the to-be-inserted paragraph is determined based on paragraph box and line box information obtained in step 1901. If a determining result is yes, that is, if the spacing between the to-be-inserted paragraph and the paragraph below the to-be-inserted paragraph is greater than the line height, step 1907 is performed; or if a determining result is no, that is, the spacing between the to-be-inserted paragraph and the paragraph below the to-be-inserted paragraph is less than or equal to the line height of the to-be-inserted paragraph, step 1908 is performed.

Step 1907: If the spacing between the to-be-inserted paragraph and the paragraph below the to-be-inserted paragraph is greater than the line height, the electronic device generates a fourth blank area in the line in which the insertion position is located.

It may be understood that, for whether a length of the fourth blank area is the first preset length or the second preset length, refer to the steps in step 1903 to step 1905. For example, if the to-be-inserted paragraph has a single line, the fourth blank area has the first preset length; or if the to-be-inserted paragraph has a plurality of lines, the fourth blank area has the second preset length.

Step 1908: If the spacing between the to-be-inserted paragraph and the paragraph below the to-be-inserted paragraph is less than or equal to the line height, the electronic device moves downward the another paragraph below the to-be-inserted paragraph, and generates a fourth blank area in the line in which the insertion position is located.

If the spacing between the to-be-inserted paragraph and the paragraph below the to-be-inserted paragraph is less than the line height, it means that a blank area cannot be inserted, or if a blank area is inserted, the inserted blank area may overlap the paragraph below. Therefore, the electronic device may change a note position in the paragraph below, and move downward the entire paragraph below until a paragraph spacing exceeds the line height. Then, the electronic device generates a fourth blank area in the line in which the insertion position is located.

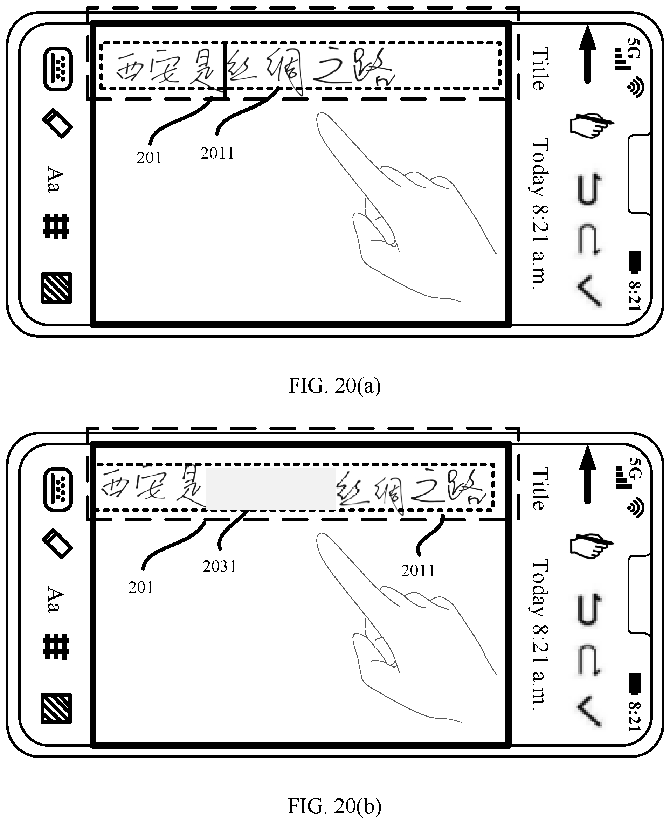

With reference to FIG. 20(a) to FIG. 20(h) to FIG. 24(a) to FIG. 24(c), the following separately describes processing procedures of the electronic device when an insert operation is detected.

(a) There is no other paragraph below the to-be-inserted paragraph.

Case (a1): An example in which the to-be-inserted paragraph includes a single line is used. As shown in FIG. 20(a), assuming that the electronic device performs an insert operation on a line 2011 in a paragraph 201, the electronic device may determine the paragraph 201 as a to-be-inserted paragraph, and the electronic device may recognize a paragraph box of the paragraph 201 and a line box of each line in the paragraph 201, for example, a line box of the line 2011. Because there is no other paragraph below the paragraph 201, the electronic device may recognize a quantity of existing lines in the paragraph 201. As shown in FIG. 20(a), the paragraph 201 has one line, that is, the line 2011. The electronic device may insert, in the line 2011 from a position on which the insert operation acts, a blank area 2031 of the first preset length, as shown in FIG. 20(b), so that the user enters to-be-inserted content.

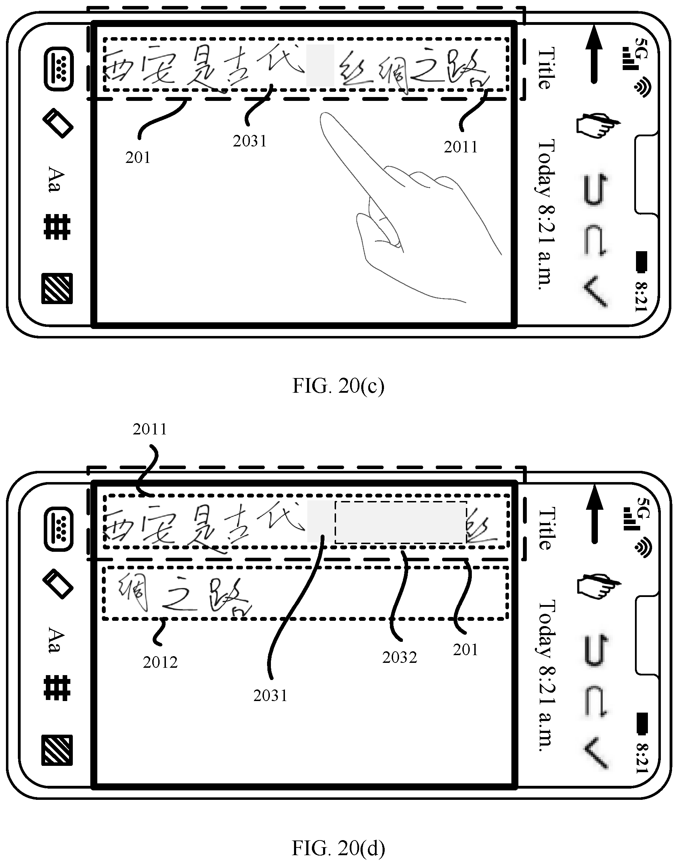

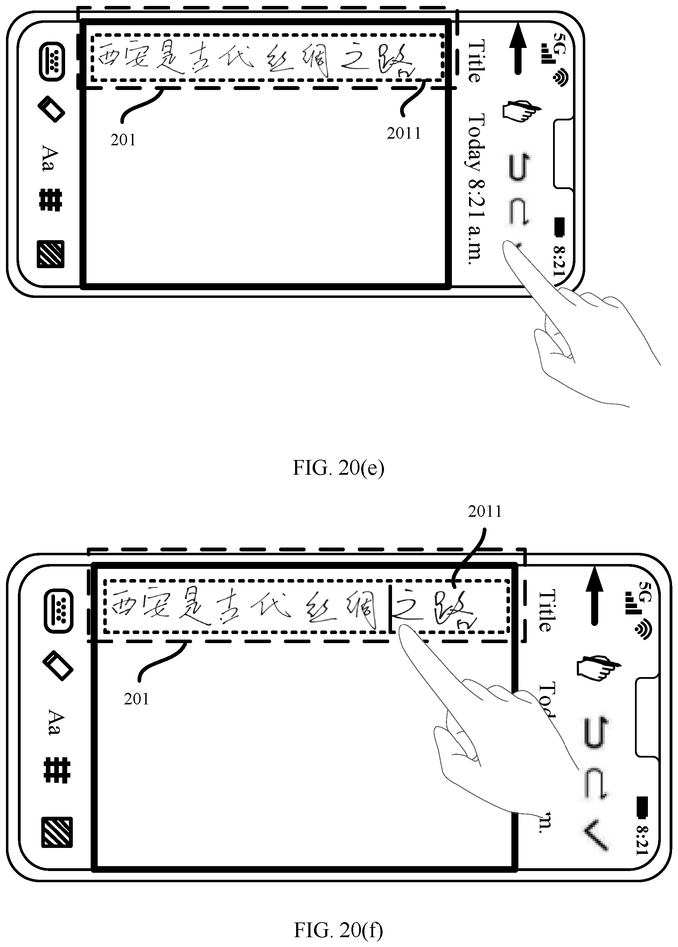

As shown in FIG. 20(c), after the electronic device inserts the blank area 2031 in the line 2011, in a process in which the user enters the to-be-inserted content in the blank area 2031, the electronic device may detect a proportion of the to-be-inserted content in the entire blank area 2031. If the proportion exceeds 0.8, the electronic device may continue to insert a blank area 2032 of the first preset length on a right side of the blank area 2031, for the user to enter content, as shown in FIG. 20(d). After the electronic device inserts the blank area 2031 into the line 2011, the user may insert a character into the blank area 2031. If the character inserted by the user does not fully occupy the blank area 2031, as shown in FIG. 20(c), the electronic device may further move a character after the blank area 2031 to a remaining area of the blank area 2031, as shown in FIG. 20(e).

It should be noted that, in a process in which the electronic device inserts the blank area 2032 and the blank area 2031 of the first preset length, if the paragraph touches another paragraph box or a page boundary, the line is automatically wrapped. As shown in FIG. 20(d), in a process in which the electronic device continues to insert the blank area 2032, the rightmost character "丝 (silk)" in line 2011 touches the page boundary, and the electronic device may automatically wrap a character after "丝 (silk)" in the line 2011 to the line 2012.

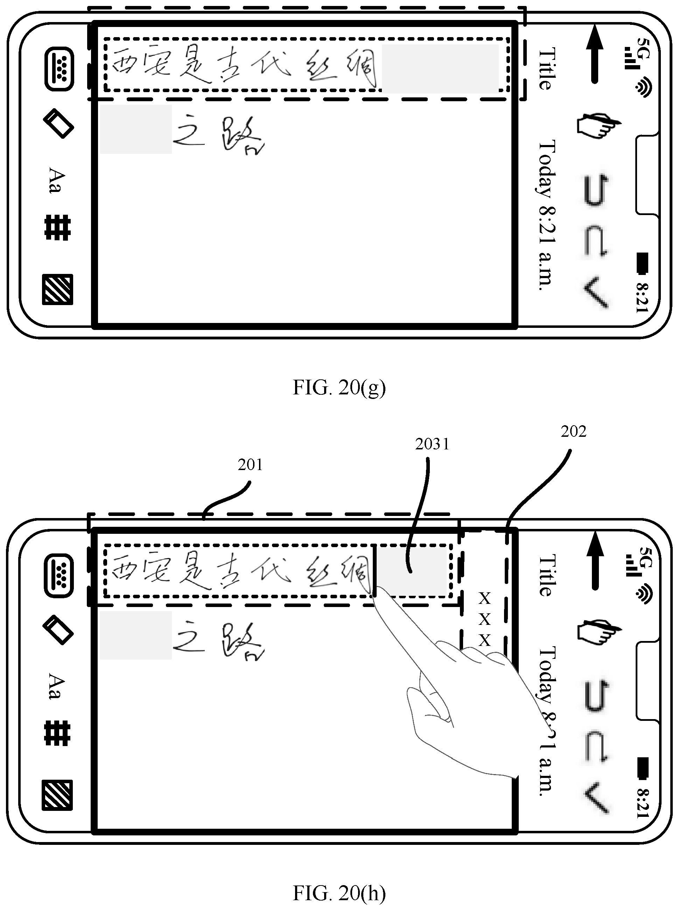

It may be understood that, in an actual process, when the blank area 2031 is inserted, a length of a remaining area in the line 2011 may be less than the first preset length of the blank area 2031. In this case, the electronic device may also trigger automatic line wrap. For example, as shown in FIG. 20(f), it is assumed that the user triggers an insert operation at a position shown in FIG. 20(f). Because the length of the remaining area in the line 2011 is less than the first preset length of the blank area 2031, the electronic device may trigger a line wrap operation. In this case, the blank area 2031 includes a blank area in the line 2012 and a blank area in the line 2011, as shown in FIG. 20(g) and FIG. 20(h). Alternatively, as shown in FIG. 20(h), there is another paragraph on the right side of the paragraph 201, for example, a paragraph 202. After the user triggers an insert operation, the paragraph 202 is touched in a process in which the electronic device inserts the blank area 2031 into the line 2011. To avoid overlapping between the blank area 2031 and the paragraph 202, the electronic device may perform automatic line wrap, that is, move one or more characters after the blank area 2031 to a next line, that is, the line 2012 in the figure.

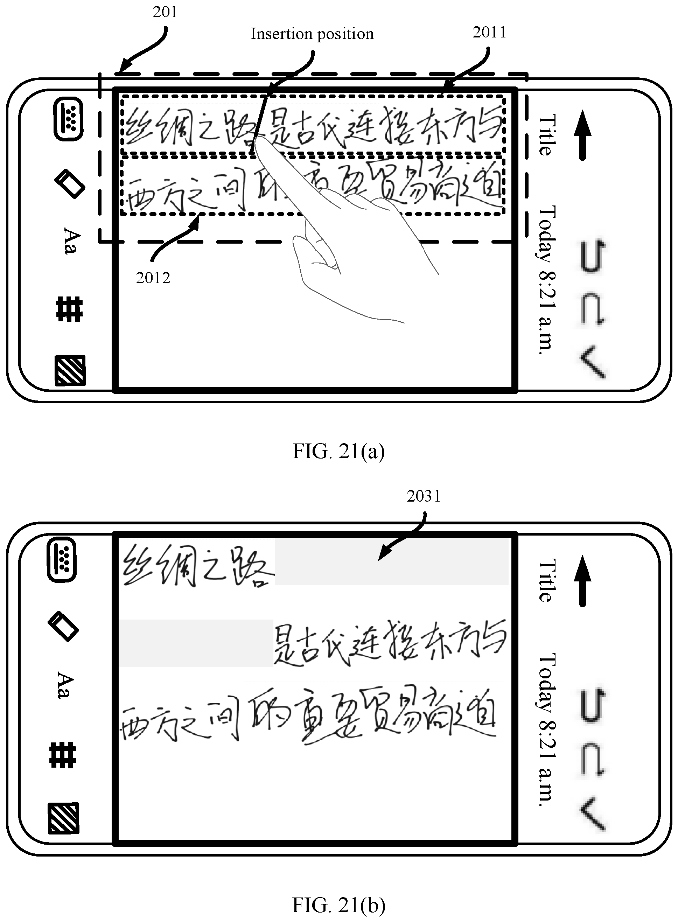

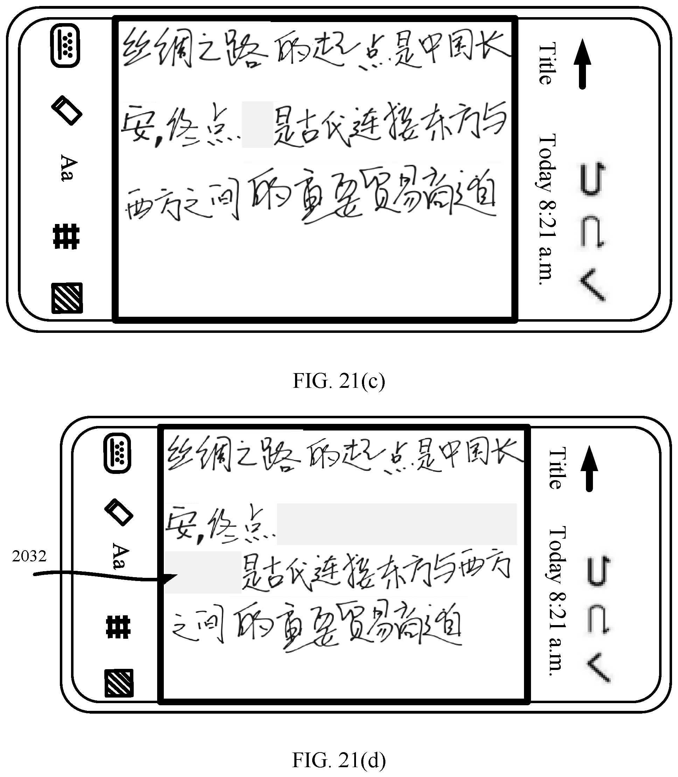

Case (a2): An example in which the to-be-inserted paragraph includes a plurality of lines is used. As shown in FIG. 21(a), assuming that the electronic device performs an insert operation on a line 2011 in a paragraph 201, the electronic device may determine that a to-be-inserted paragraph is the paragraph 201. Therefore, the electronic device may recognize a paragraph box of the paragraph 201 and a line box of each line in the paragraph 201, for example, a line box of the line 2011. Because there is no other paragraph below the paragraph 201, and the paragraph 201 includes the line 2011 and a line 2022, the electronic device may insert, in the line 2011 from an insertion position on which the insert operation acts, a blank area 2031 of a second preset length, as shown in FIG. 21(b), so that the user enters to-be-inserted content. The second preset length is equal to a length of the line in which the insertion position is located. As shown in FIG. 21(c), when the content inserted by the user into the blank area 2031 exceeds a specific threshold, the electronic device may trigger automatic insertion of a blank area 2032, as shown in FIG. 21(d).

It may be understood that, a difference between FIG. 21(a) to FIG. 21(d) and FIG. 20(a) to FIG. 20(h) lies in whether the to-be-inserted paragraph has a single line or a plurality of lines, and a blank area of the first preset length is inserted when there is a single line, or a blank area of the second preset length is inserted when there are a plurality of lines. The first preset length is less than the second preset length.

(b) There is another paragraph below the to-be-inserted paragraph.

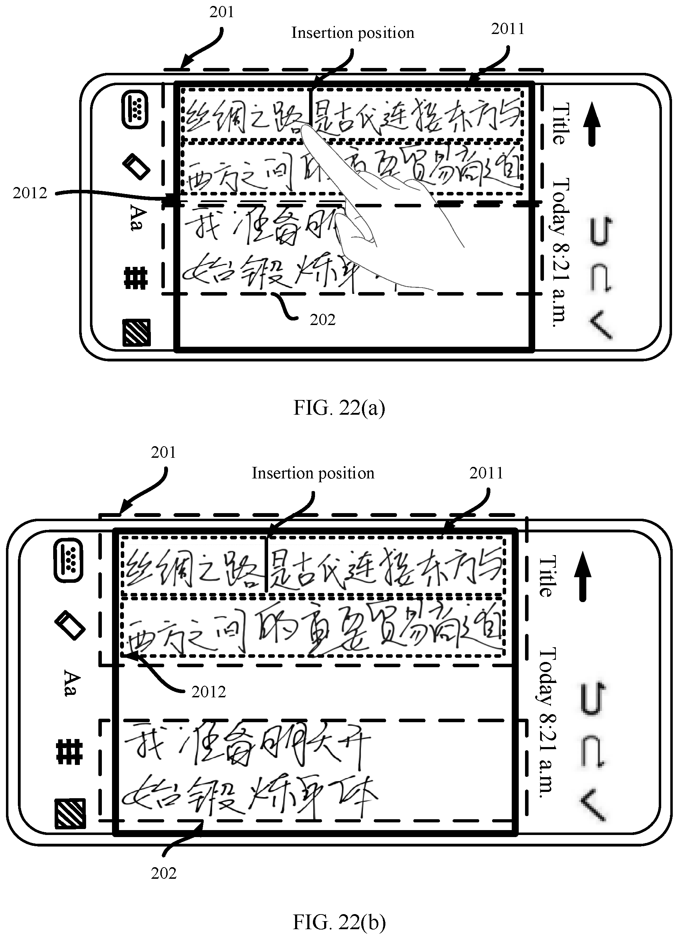

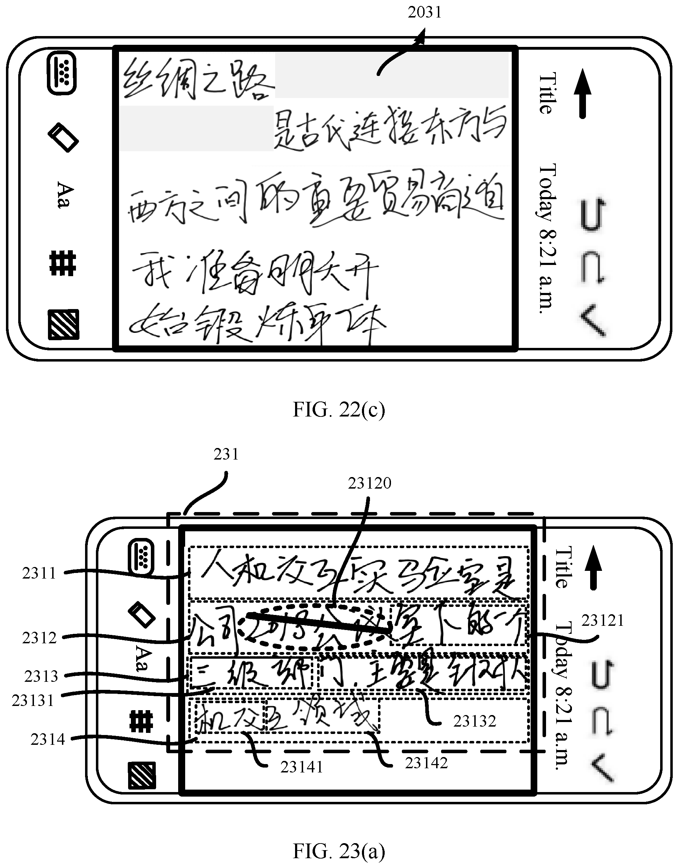

As shown in FIG. 22(a), a handwritten note interface displayed by the electronic device includes a paragraph 201 and a paragraph 202. If the user intends to insert a paragraph of content into a line 2011, and the electronic device may trigger an insert operation in the line 2011, as shown in FIG. 22(a). The electronic device receives and responds to the insert operation, and determines whether a spacing between the paragraph 201 and the lower paragraph 202 is greater than a line height of the paragraph 201. If the spacing between the paragraph 201 and the lower paragraph 202 is less than the line height of the paragraph 201, as shown in FIG. 22(b), the electronic device may first move the paragraph 202 downward for a distance, so that the spacing between the paragraph 201 and the lower paragraph 202 is greater than the line height of the paragraph 201. Then, as shown in FIG. 22(c), the electronic device may insert a third blank area of a second preset length into the line 2011. It may be understood that, in FIG. 22(a) to FIG. 22(c), an example in which the paragraph 201 has a plurality of lines is used. Alternatively, the electronic device may move the paragraph 202 downward while inserting the third blank area of the second preset length in the line 2011. This is not limited in this embodiment of this application. Alternatively, the electronic device may first insert the third blank area of the second preset length. After the third blank area is inserted, because the spacing between the paragraph 201 and the lower paragraph 202 is less than the line height of the paragraph 201, a character in the line 2011 may overlap content in the paragraph 202. When overlapping is detected, the electronic device moves the paragraph 202 downward.

In an actual process, a proportion, in the blank area 2031, of content to be inserted by the user into the blank area 2031 may be less than a specified value. For example, four characters can be written based on the length of the blank area 2031, but the user writes only one character, or the content inserted by the user into the blank area 2031 does not fully occupy the blank area 2031. In this case, the user may trigger a specified operation in the interface, so that the electronic device determines, in response to the specified operation, that the user has completed insertion of the content in the blank area 2031, so as to adjust a position of a character in the line 2011, and move a character after the blank area 2031 to a position after the inserted character, as shown in FIG. 20(e). For example, the specified operation may be tapping a confirmation control, or performing a double-tap operation in the blank area 2031. Alternatively, after a character is written, if the electronic device detects that the user does not perform an input operation in the blank area 2031 within preset time, the electronic device may determine that the specified operation is detected. Alternatively, the electronic device detects that the user performs an input operation outside the blank area 2031.

In an actual process, although the proportion, in the blank area 2031, of the content to be inserted by the user into the blank area 2031 may exceed the specific threshold, the length of the blank area 2031 is sufficient for the user to write the content to be inserted. In this case, if the electronic device detects that the proportion of the inserted content in the blank area 2031 exceeds the specific threshold, the electronic device automatically triggers to continue to insert the blank area 2032. This may be unfavorable for improving user experience. To improve user experience, in an example, when the proportion, in the blank area 2031, of the content to be inserted by the user into the blank area 2031 exceeds the specific threshold, the electronic device may automatically trigger to continue to insert the blank area 2032. Alternatively, when the proportion of the inserted content in the blank area 2031 exceeds the specific threshold, the electronic device may output prompt information to prompt whether to continue to insert content. If it is determined that the user indicates to continue to insert content, the electronic device may continue to insert the blank area 2032.

Optionally, in a possible implementation, in a scenario in which the user performs an insert operation in a handwritten note, the electronic device may not only insert a blank area at a specified position in response to the insert operation, but also adjust a character position in the to-be-inserted paragraph in response to the insert operation.

In an example, in this embodiment of this application, after inserting a blank area into the specified position, the electronic device may adjust an angle-abnormal line, a character with an abnormal up-down position, and/or a character with an abnormal left-right spacing in the to-be-inserted paragraph. Alternatively, after a blank area is inserted into the specified position, if it is detected that the user indicates completion of an edit operation on the to-be-inserted paragraph, the electronic device adjusts an angle-abnormal line, a character with an abnormal up-down position, and/or a character with an abnormal left-right spacing in the to-inserted paragraph.

In a possible implementation of this application, after the electronic device detects that the user inputs an editing instruction (for example, an insert instruction or a delete instruction) for the handwritten note, the electronic device may first adjust a position of a character in the to-be-edited paragraph to improve neatness. Then, because a text paragraph has higher character correlation than a text line or a text area, typesetting after character editing can better meet an operation intent of the user. Therefore, the electronic device may further perform character typesetting based on an entire layout on characters in the entire layout by using a paragraph as a unit.

According to the foregoing described solution, neatness and aesthetic appeal of the layout can still be ensured after the user performs convenient delete and insert operations on the layout. However, in a complex handwritten note layout scenario, an edit operation triggered by the user may cause a relatively large change in the entire layout, and it is difficult for the user to quickly find a corresponding position of typeset handwriting. Therefore, in the embodiments, it is proposed to generate a typesetting animation for the handwritten note. To be specific, after a final position of handwriting typesetting is obtained, an intermediate track is calculated with reference to an initial position to generate an animation, and the animation is displayed.

1. Typesetting animation 1: translation

For example, an editing instruction is a delete operation or an insert operation. After a user triggers the delete operation or the insert operation for a handwritten note, in response to the delete operation or the insert operation, when an electronic device performs typesetting on a to-be-edited paragraph on which the delete operation or the insert operation acts in the handwritten note, a position of a character in the to-be-edited paragraph needs to be moved. In a movement process, an initial position and a final position of the to-be-moved character may be in a same line, but an initial position and a final position of some to-be-moved characters may be in different lines. In this embodiment of this application, the initial position of the to-be-moved character may be a position of the to-be-moved character in a line before movement. In this embodiment of this application, the final position of the to-be-moved character may be a position of the to-be-moved character in a line after movement.

For example, for the insert operation, assuming that the insert operation acts on a position A in a line A, when typesetting is performed on a character at the position A in the line A, the character needs to be moved from an initial position to a next line, or from an initial position in the line A to a final position in the line A. For example, for the delete operation, assuming that the delete operation indicates to delete one or more characters B in a line A, a plurality of characters after the one or more characters B in the line A need to be moved toward a character A. The character A is before the one or more characters B. A character in a next line of the line on which the delete operation acts may be moved to the line on which the delete operation acts. Therefore, the electronic device may divide, into two groups, characters that relate to position movement in a typesetting process. A first group of characters is characters whose initial position and final position are in a same line. A second group of characters is characters whose initial position and final position are not in a same line. A specific quantity of intermediate states are calculated for the two groups of characters by using an interpolation method or another method based on positions before and after typesetting, and are sequentially played in a time sequence, to implement a translation effect. FIG. 23(a) to FIG. 23(c) show an example of the typesetting animation 1.

A delete operation is used as an example. As shown in FIG. 23(a), the electronic device displays a handwritten note interface 23. The handwritten note interface 23 displays a handwritten note 230. The handwritten note 230 includes a paragraph 231, and the paragraph 231 includes a line 2311, a line 2312, a line 2313, and a line 2314. It is assumed that the user wants to

delete characters "2018 会议 (2018 conference)" 23120 from the line 2312. The user may trigger a delete operation in the handwritten note interface 23, so that the electronic device detects the delete operation, and groups characters in the paragraph 231 in response to the delete operation. For example, the electronic device may determine a character that is in the paragraph 230 and that relates to position movement after the charac-

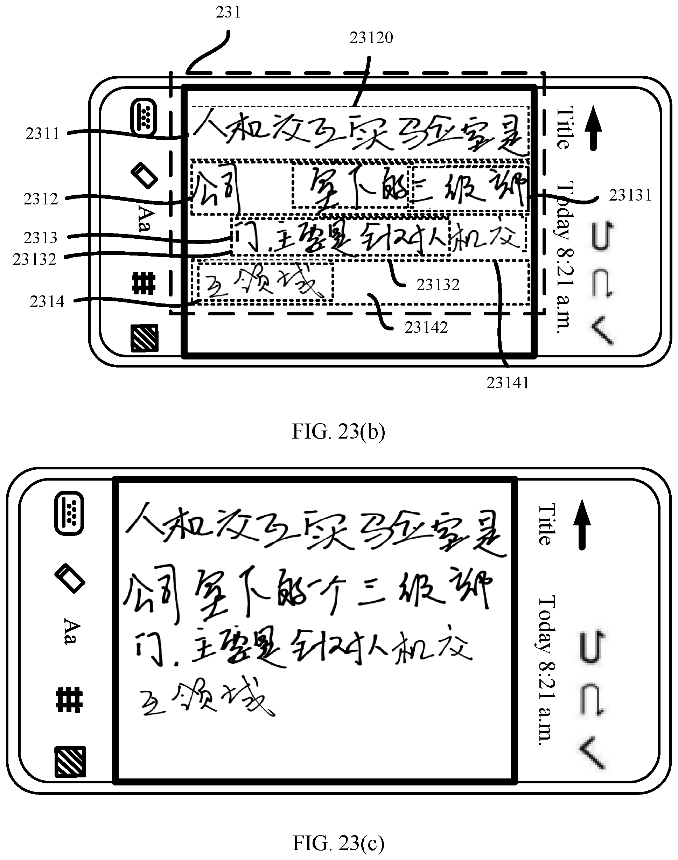

ters "2018 会议 (2018 conference)" 23120 in the paragraph 231 are deleted. Then, the electronic device may divide characters related to movement into two groups. For example, a first group of characters includes characters 23121 in the line 2312, characters 23132 in the line 2313, and characters 23142 in the line 2314. A second group of characters includes characters 23131 in the line 2313 and characters 23141 in the line 2314. Then, the electronic device may determine a play sequence of the first group of characters and the second group of characters. As shown in FIG. 23(b), in a movement process, the characters 23121 move from an initial position to a position of "2018 会议 (2018 conference)" 23120. The characters 23131 move from an initial position in the line 2313 to the line 2312, and are located after the characters 23121 in the line 2312. The characters 23141 move to the line 2313 and are located after the characters 23132, and the characters 23132 move leftward to a specific position in the line 2313. A final position of each character in the handwritten note at a movement end moment is shown in FIG. 23(c).

In an example, in a scenario of the delete operation or the insert operation, the typesetting animation 1 may be used to generate a typesetting animation for the handwritten note.

2. Typesetting animation 2: translation + flashing

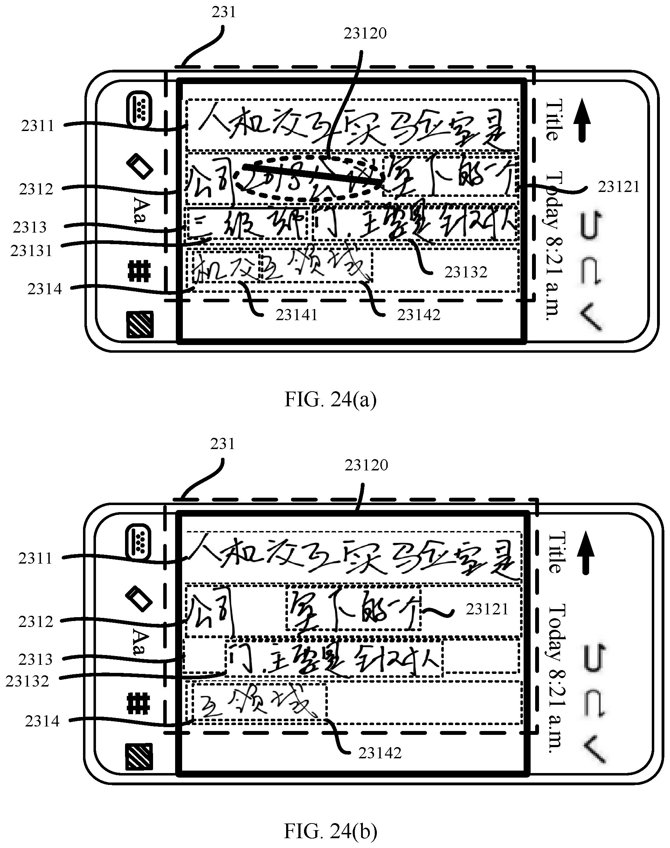

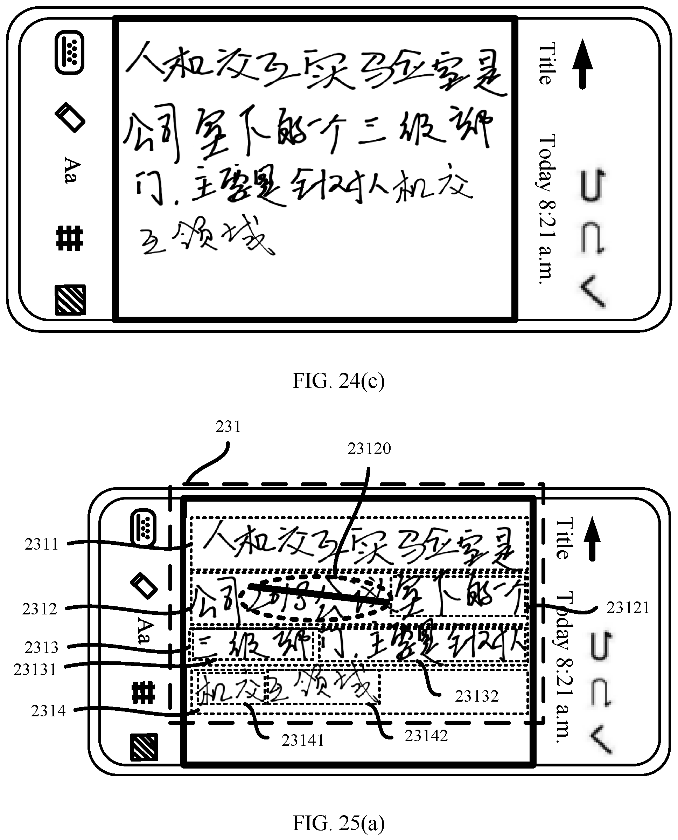

A delete operation is still used as an example. As shown in FIG. 24(a), if an electronic device detects that the delete operation triggered by a user indicates to delete characters "2018 会 议 (2018 conference)" 23120 in a line 2312, the electronic device may determine that a first group of characters includes characters 23121 in the line 2312, characters 23132 in a line 2313, and characters 23142 in a line 2314. The electronic device may determine that a second group of characters includes characters 23131 in the line 2313 and characters 23141 in the line 2314. The electronic device may perform, on the first group of characters, a same translation operation as that in the typesetting animation 1. That is, after the characters are grouped, the electronic device controls the first group of characters to be translated, and controls the second group of characters to disappear from a position of the second group of characters at a moment when the first group of characters starts to be translated. For example, as shown in FIG. 24(b), in a process of moving the characters 23121 in the line 2312, the characters 23132 in the line 2313, and the characters 23142 in the line 2314, the electronic device controls the characters 23131 in the line 2313 and the characters 23141 in the line 2314 to disappear. When each character in the first group of characters is moved to a final position corresponding to the character, the electronic device may control each character in the second group of characters to appear at a final position corresponding to the character. For example, the electronic device may control, at a moment at which the first group of characters ends moving, each character in the second group of characters to appear at the final position corresponding to the character, as shown in FIG. 24(c). For example, when the characters 23121 move to the line 2312 and are located at the position of "2018 会议 (2018 conference)" 23120 (that is, a final position of the characters 23121), if the characters 23132 in the line 2313 move to the final position corresponding to the characters 23132 in the line 2313, and the characters 23141 move to the final position corresponding to the characters 23141 in the line 2314, the electronic device controls the characters 23131 and the characters 23141 to appear at respective corresponding final positions. For example, the characters 23131 appear in the line 2312 and are located after the characters 23121, that is, the 1st character starting from the left in the characters 23131 is next to the last character starting from the left in the characters 23121.

In an example, in a scenario of the delete operation or the insert operation, the typesetting animation 2 may be used to generate a typesetting animation for the handwritten note. In FIG. 24(a) to FIG. 24(c), a delete operation is used as an example. During an insert operation, the electronic device may perform a movement operation shown in FIG. 24(a) to FIG. 24(c) for two groups of characters in the handwritten note.

3. Typesetting animation 3: translation + gradient change

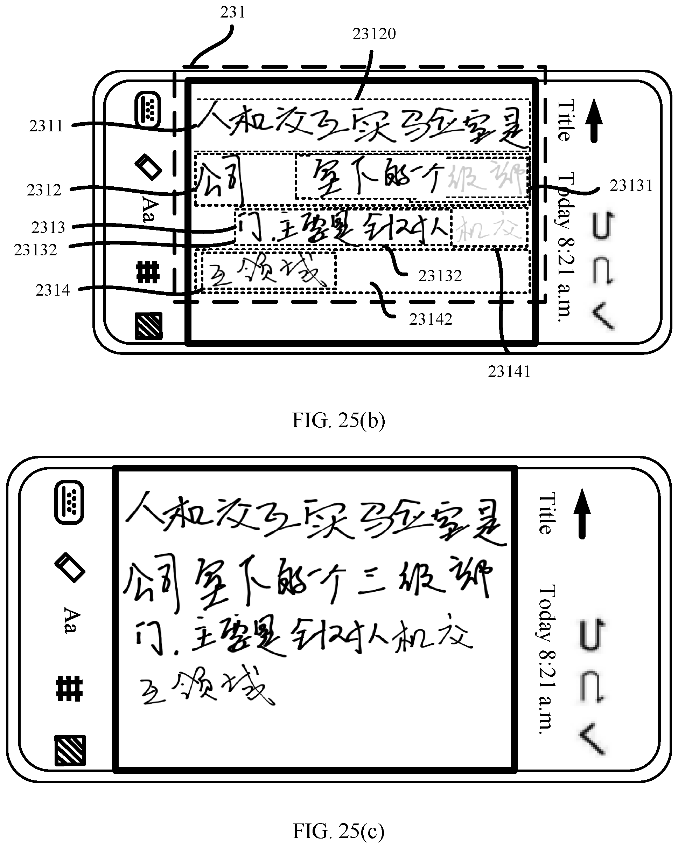

A delete operation is still used as an example. As shown in FIG. 25(a), if an electronic device detects that the delete operation triggered by a user indicates to delete characters "2011 实 验 (2011 laboratory)" in a line 2312, the electronic device may determine that a first group of characters includes characters 23121 in the line 2312, characters 23132 in a line 2313, and characters 23142 in a line 2314. The electronic device may determine that a second group of characters includes characters 23131 in the line 2313 and characters 23141 in the line 2314. The electronic device may perform, on the first group of characters, a same translation operation as that in the typesetting animation 1. At a moment when the first group of characters starts to be translated, the electronic device may control the second group of characters to disappear from an initial position and appear at a final position corresponding to each character in the second group of characters, but transparency is first transparency, as shown in FIG. 25(b). In this case, the user may vaguely see the second group of characters at the final position.

With translation of the first group of characters, the transparency of the second group of characters gradually decreases. At a movement end moment of the first group of characters, that is, when each character in the first group of characters is located at a final position corresponding to the character, the electronic device may control the transparency of the second group of characters to reach 0, that is, the user can clearly see the second group of characters at the final position, as shown in FIG. 25(c).

In an example, in a scenario of the delete operation or the insert operation, the typesetting animation 3 may be used to generate a typesetting animation for the handwritten note.

It may be understood that, in a scenario of performing a delete operation/an insert operation, the electronic device may move a character in a handwritten note according to the solution shown in FIG. 25(a) to FIG. 25(c). When the character moves to a final position, the electronic device may automatically perform an action of adjusting a position of a character in the paragraph 231, and display an adjusted handwritten note interface. Alternatively, when the character moves to a final position, the electronic device may trigger, based on an edit operation triggered by the user, for example, an operation of tapping the control 405 by the user, or a specified gesture triggered in a handwritten note interface, the electronic device to perform an action of adjusting a character position in a paragraph.

4. Typesetting animation 4: translation + displacement + gradient change

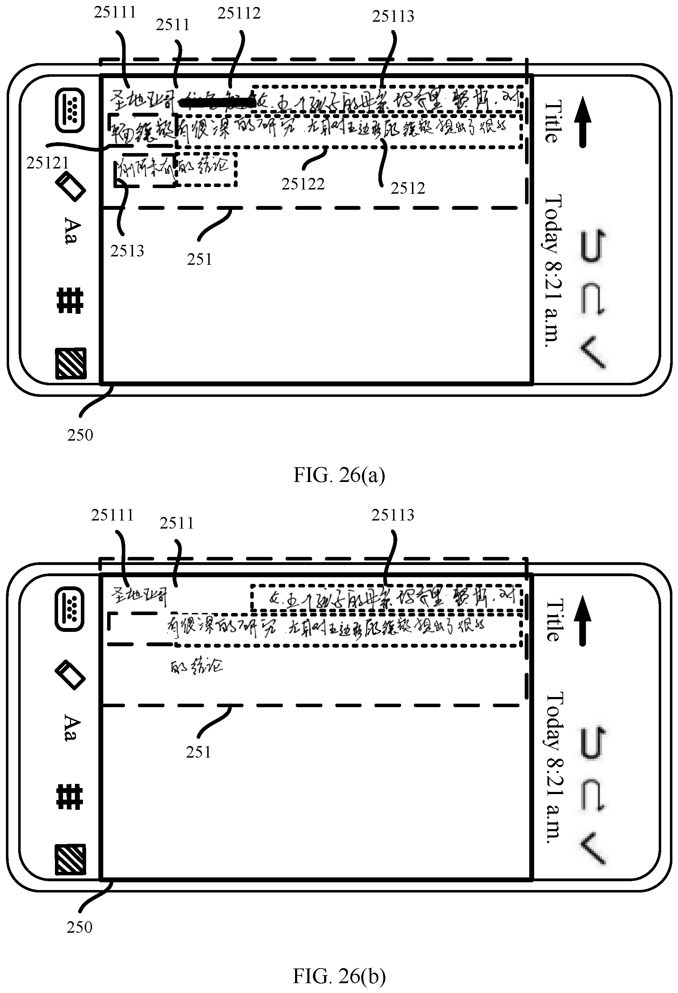

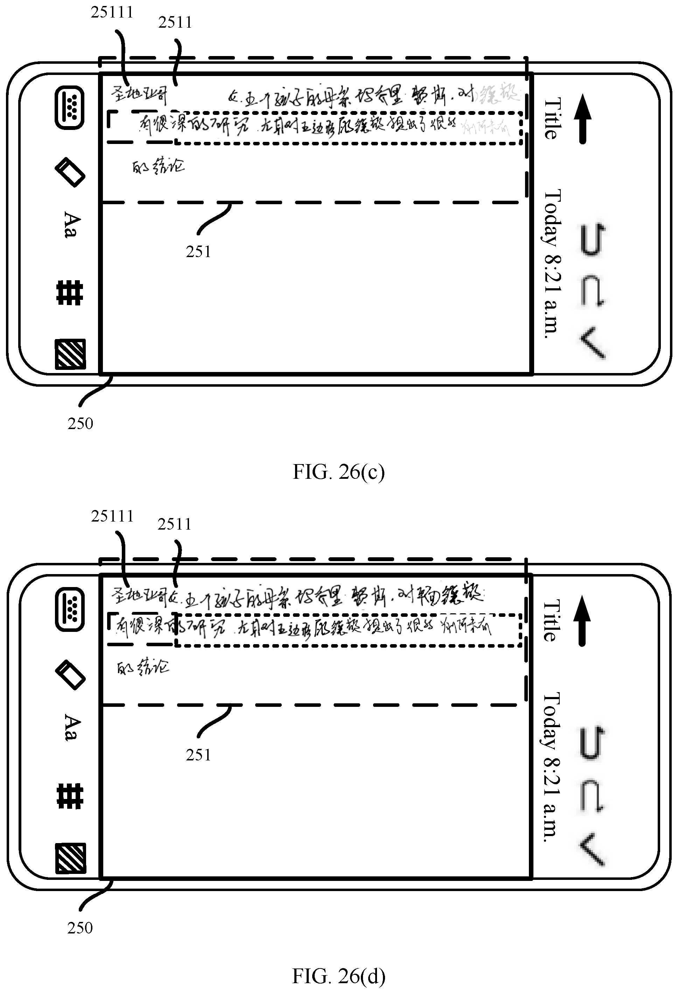

A delete operation is still used as an example. As shown in FIG. 26(a), if an electronic device detects that the delete operation triggered by a user indicates to delete characters " 庭妇 (a housewife)" in a line 2612, the electronic device may determine that a first group of characters includes characters 26111 in a line 2611, characters 26122 in the line 2612, and characters 26132 in a line 2613. The electronic device may determine that a second group of characters includes characters 261211 in the line 2612 and characters 26131 in the line 2613. The electronic device may perform, on the first group of characters, a same translation operation as that in the typesetting animation 1. The second group of characters disappears from an initial position at a moment when the first group of characters starts to be translated, and appears on a right side of a character in an initial state in a previous line, but transparency is 100%. Then, the second group of characters is translated together with the first group of characters until final positions of the two groups of characters are reached. In a translation process, the transparency of the second group of characters gradually decreases from 100% to 0%.

In an example, in a scenario of the delete operation, the typesetting animation 4 may be used to generate a typesetting animation for the handwritten note.

5. Typesetting animation 5: translation + displacement + gradient change

An insert operation is used as an example. When an electronic device detects the insert operation, the electronic device divides characters in a paragraph indicated by the insert operation into two groups. A first group of characters is characters whose initial position and final position are in a same line. A second group of characters is characters whose initial position and final position are not in a same line.

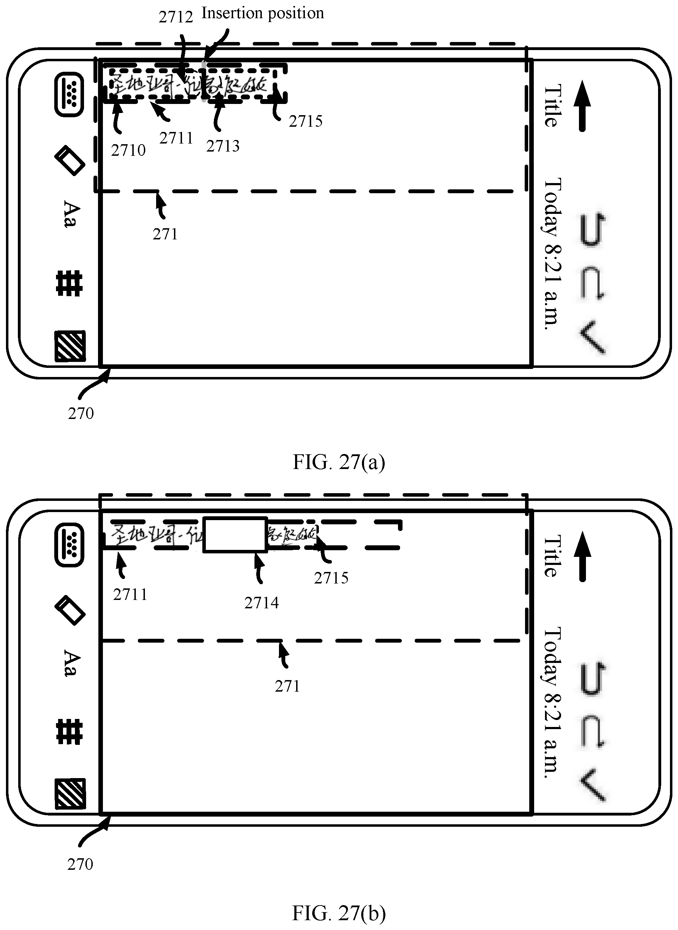

As shown in FIG. 27(a) to FIG. 27(d), the electronic device displays a handwritten note interface 270 shown in FIG. 27(a). The handwritten note interface 270 includes a paragraph 271, and the paragraph 271 includes a line of characters, for example, a line 2711. It is assumed that the user triggers an insert operation in the line 2711, and an insertion position on which the insert operation acts is located between characters "位 (a)" 2712 and "家 (house)" 2713. In this case, the electronic device may determine, in response to the insert operation, a final position of the characters in the paragraph 271 after re-typesetting.

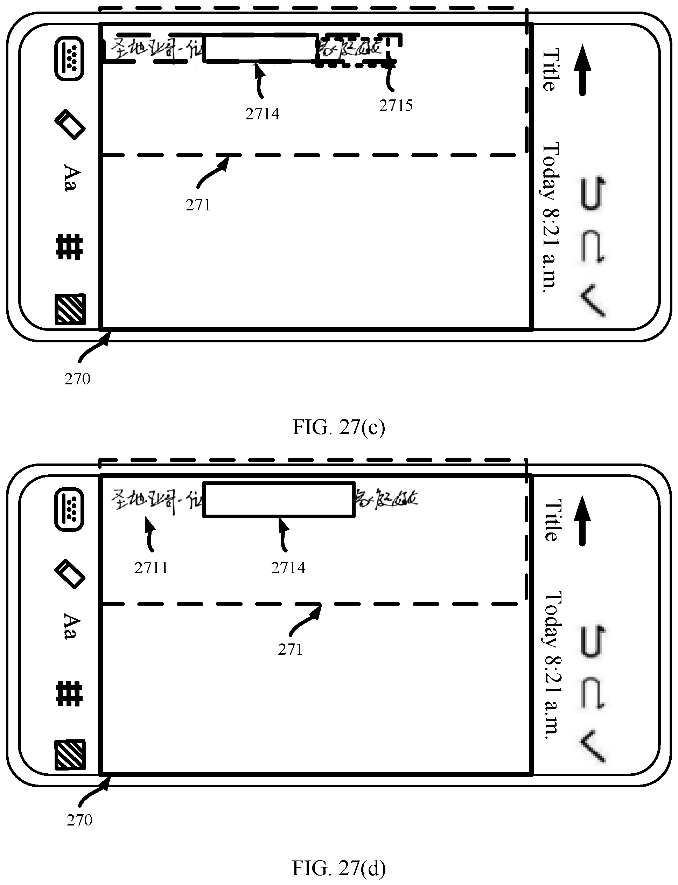

For the electronic device, the electronic device may determine that a character 2710 located before the insertion position is a character that does not need to be moved. A character 2715 located after the insertion position is a to-be-moved character. Because there is only one line in the paragraph 271, the electronic device may determine, by using the foregoing solution, to insert a blank area 2713 of a first preset length into the line 2711. Therefore, the electronic device may determine that the character 2715 only needs to be moved rightward by the first preset length in the line 2711. After the blank area 2713 is inserted, if the electronic device determines, based on the typeset handwritten note, that the character 2715 is still located in the line 2711 after the character 2715 is moved rightward by the first preset length, the electronic device may determine that both the character 2715 and the blank area 2714 are located in the line 2711. In this case, the electronic device may determine that both the character 2715 and the blank area 2714 are the first group of characters, and the electronic device may translate the character 2715 from an initial position to a final position by using a difference-based translation operation. The blank area 2714 gradually appears at the insertion position at a moment when the character 2715 starts to be translated. As the character 2715 moves, a length of the blank area 2714 gradually increases, as shown in FIG. 27(b) and FIG. 27(c). Finally, when the character 2715 reaches the final position, the length of the blank area 2714 is increased to the first preset length, as shown in FIG. 27(d).

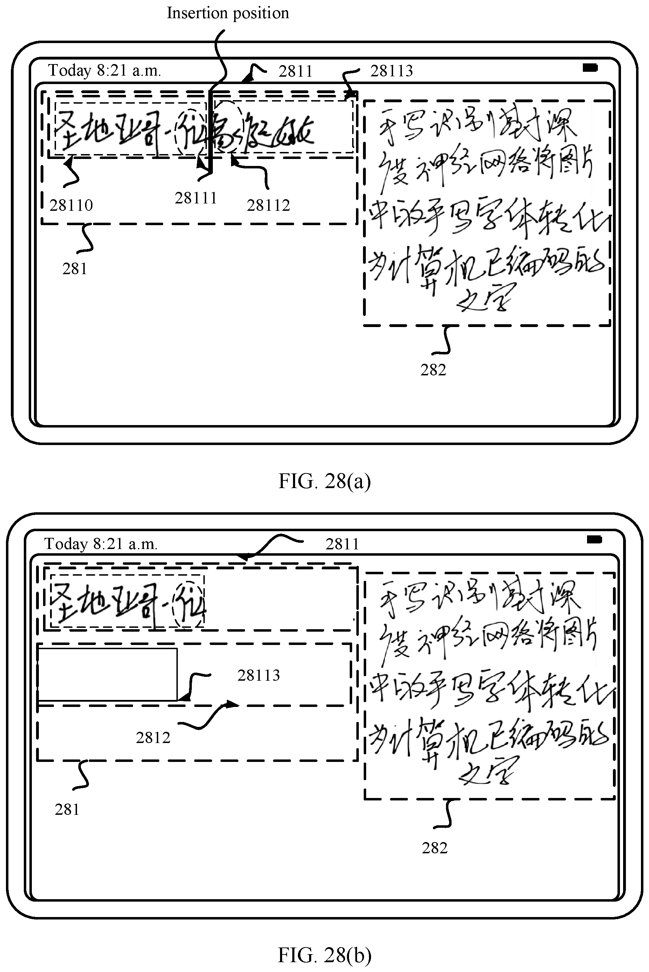

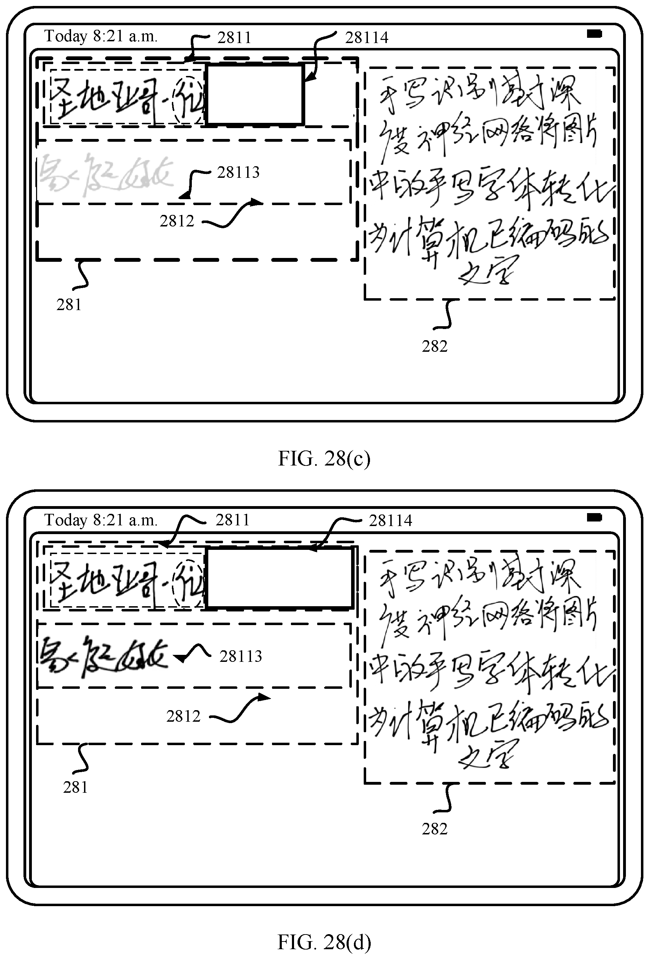

FIG. 28(a) to FIG. 28(d) show another animation in the insert operation scenario. As shown in FIG. 28(a) to FIG. 28(d), the electronic device displays a handwritten note interface 280 shown in FIG. 28(a). The handwritten note interface 280 includes a paragraph 281 and a paragraph 282. The paragraph 282 is located on the right side of the paragraph 281, and the paragraph 281 has a line of characters, for example, a line 2811. It is assumed that the user triggers an insert operation in the line 2811, and an insertion position on which the insert operation acts is located between characters "位 (a)" 28111 and "家 (house)" 28112. In this case, the electronic device may determine that the character 28110 before the insertion position is a character that does not need to be moved, and the character 28113 after the insertion position is a character that needs to be moved. Because the character 28113 needs to be moved to a next line, the electronic device may determine that the character 28113 is the second group of characters, and consider the to-be-inserted blank area 2814 as the first group of characters. The second group of characters disappears from an initial position at a moment when the first group of characters starts to be translated, and appears on a left side of a character in an initial state in a next line, but transparency is 100%. Because there is only one line in the paragraph 281, but the paragraph 282 is touched if a blank area is inserted, the electronic device may determine, by using the foregoing solution, to insert a blank area 2814 of the first preset length into the line 2811, and perform automatic line wrap in response to an insert operation, to move the character 28113 to the line 2812, and transparency of the character 28113 in the line 2812 is 100%, that is, the user cannot see the character 28113, as shown in FIG. 28(b). The electronic device may translate the character 28113 from an initial position (that is, a position of the character 28113 in the line 2811) to a final position (that is, a position of the character 28113 in the line 2812) by using a difference-based translation operation. In a process in which the electronic device moves the character 28113, the electronic device moves the blank area 2814 at the same time, that is, the blank area 2814 and the character 28113 move together, and transparency of the character 28113 in a movement process gradually decreases from 100%, that is, the blank area 2814 changes from invisible in the interface to gradually visible in the interface, as shown in FIG. 28(c). In addition, it can be learned by comparing FIG. 28(c) and FIG. 28(d) that, in a movement process, a length of the blank area 2814 gradually increases to the first preset length. As shown in FIG. 28(d), when both the blank area 2814 and the character 28113 are located at respective final positions, the length of the blank area 2814 is the first preset length, and transparency of the character 28113 is 0%. In this case, the user can clearly see the character 28113. It may be understood that the transparency of the character 28113 is consistent with transparency of another character in the line.

It may be understood that, in a scenario of performing a delete operation/an insert operation, the electronic device may move a character in a handwritten note according to the movement animations shown in FIG. 23(a) to FIG. 23(c) to FIG. 27(a) to FIG. 27(d). When the character moves to a final position, the electronic device may automatically perform an action of adjusting a position of a character in the paragraph 231, and display an adjusted handwritten note interface. Alternatively, when the character moves to a final position, the electronic device may perform, based on an edit operation triggered by the user, for example, an operation of tapping the control 405 by the user, an action of adjusting a character position in a paragraph.

It should be noted that, in a case in which an insert operation or a delete operation is performed, because a quantity of characters in a line related to character movement may change, after the character is moved to a final position corresponding to the character, when a position of the character in the line related to character movement is adjusted, a character in each line after movement is used as a reference.

It should be noted that, in a scenario in which the delete operation is triggered, the following case may exist: The user indicates to delete one or more characters, but the user does not expect that another character moves to an area in which the deleted characters are located. To improve user experience, when the electronic device detects the delete operation, the electronic device may further output prompt information to prompt the user whether to move another character. When the user taps to confirm to move the another character, the character in the handwritten note is moved according to the movement animations shown in FIG. 23(a) to FIG. 23(c) to FIG. 28(a) to FIG. 28(d). Alternatively, after the electronic device controls the character to move to a final position according to the movement animations shown in FIG. 23(a) to FIG. 23(c) to FIG. 28(a) to FIG. 28(d), if the electronic device detects an operation of the user for a cancel control in the handwritten note interface, the electronic device restores, in response to a cancel operation triggered by the user, all moved characters to respective positions before movement, and displays an interface shown in FIG. 27(d).

6. Typesetting animation 6: translation + displacement + gradient change + non-edited paragraph movement

In a typesetting process, in addition to a character in an edited paragraph, a character in a non-edited paragraph may also move. When a paragraph for which an insert operation is performed is extended downward, if there is another paragraph below the paragraph, and a spacing between paragraphs is less than a line height of an edited line, the lower paragraph is also moved downward.

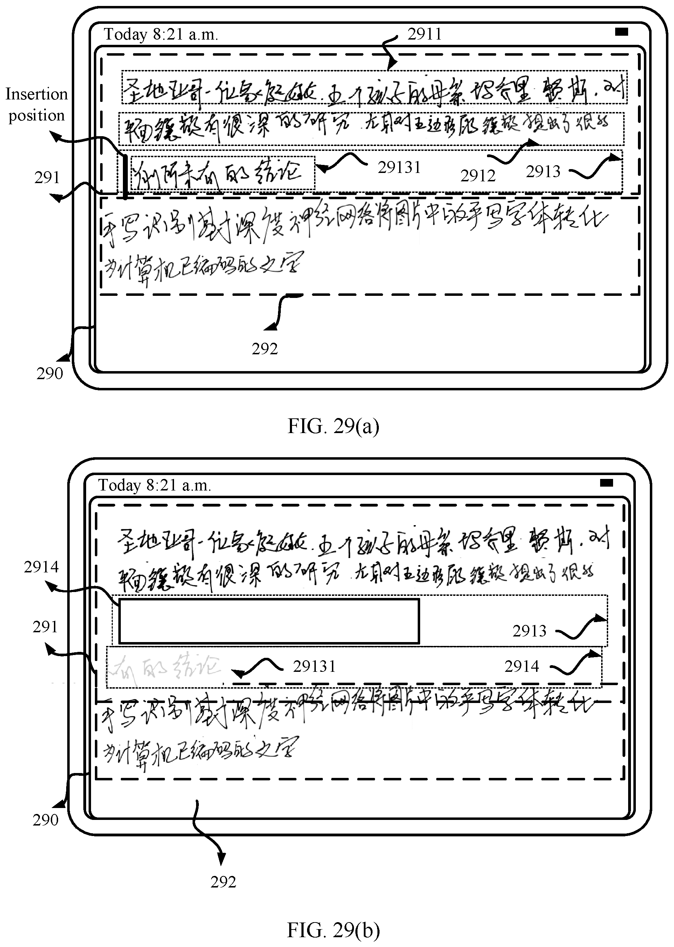

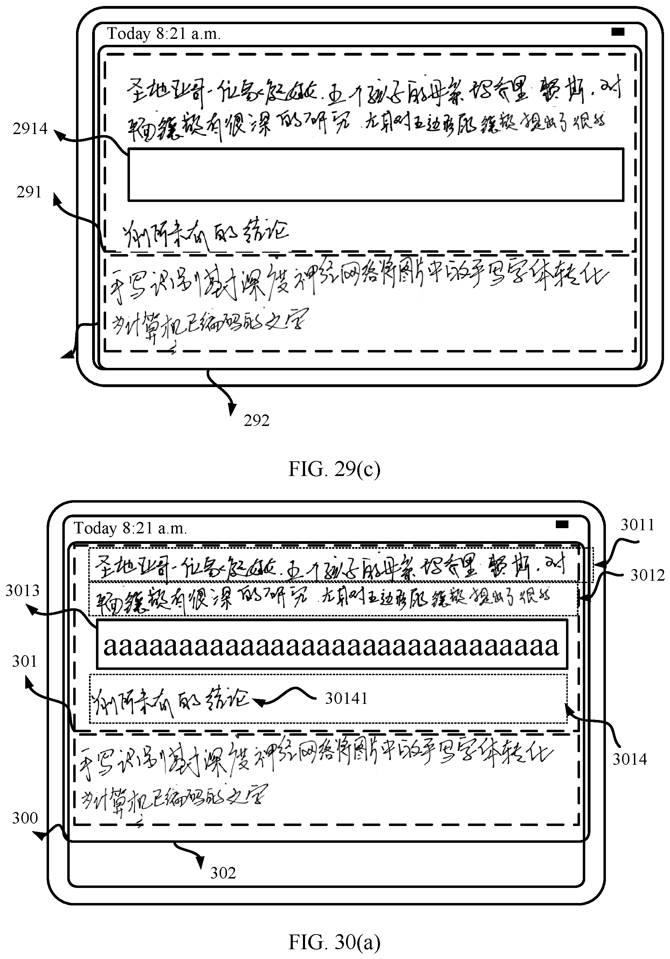

As shown in FIG. 29(a), a handwritten note displayed by an electronic device in a note interface 290 includes a paragraph 291 and a paragraph 292. The paragraph 292 is located below the paragraph 291. The paragraph 291 includes a line 2911, a line 2912, and a line 2913. It is assumed that the user triggers an insert operation at a position shown in FIG. 29(a). Because the paragraph 292 is located below the paragraph 291, the electronic device may determine to insert an entire line at the insertion position, and a character 29131 is a character that needs to be moved to a next line. Assuming that a paragraph spacing between the paragraph 292 and the paragraph 291 is less than a line spacing of the paragraph 291, the electronic device may further determine that the paragraph 292 is a paragraph that needs to be moved. Therefore, the character 29131 and the paragraph 292 may be moved when the insert operation is performed. For example, in a movement process, the electronic device may move, at a movement start moment, the character 29131 to a final position in a next line and display the character with transparency 100%. In the movement process, as shown in FIG. 29(b), the transparency of the character 29131 gradually decreases, and the paragraph 292 gradually moves downward. At a movement end moment, as shown in FIG. 29(c), the character 29131 is located at a final position and the transparency is 0, and the paragraph 292 reaches a position whose paragraph spacing from the paragraph 292 is greater than or equal to a preset line spacing.

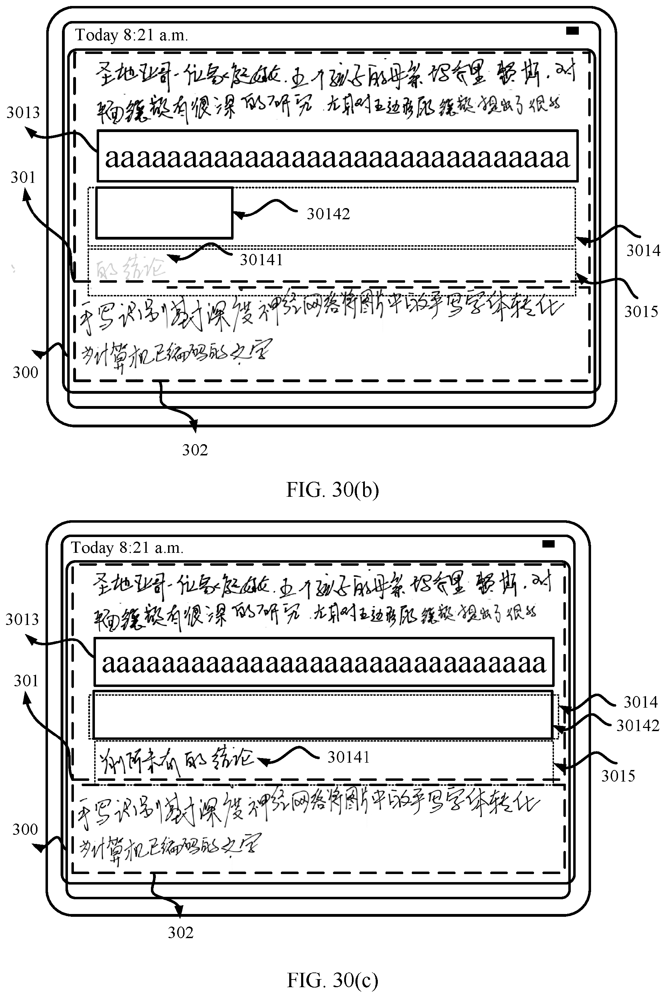

As shown in FIG. 30(a), a handwritten note displayed by an electronic device in a note interface 300 includes a paragraph 301 and a paragraph 302. The paragraph 302 is located below the paragraph 301. The paragraph 301 includes a line 3011, a line 3012, a line 3013, and a line 3014. It is assumed that the line 3013 is an inserted blank area, and it is assumed that the user fully writes characters in the line 3013, as shown in FIG. 30(a). When the electronic device determines to continue to insert a blank area, the electronic device may perform automatic line wrap, that is, move a character 30141 to a line 3015. In an example, the electronic device may first move the character 30141 to the line 3015 and set transparency to 100%, and insert a blank area 30142 into the line 3014, where transparency of the blank area 30142 in the line 3014 is 100%, and the paragraph 302 gradually moves downward. In a movement process, transparency of the blank area 30142 and the character 30141 gradually decreases, as shown in FIG. 30(b). At a movement end moment, the character 30141 is located in the line 3015, the transparency is 0, and the blank area 30142 of the entire line is inserted into the line 3014. The paragraph 302 reaches a position whose paragraph spacing from the paragraph 301 is greater than or equal to a preset line spacing.

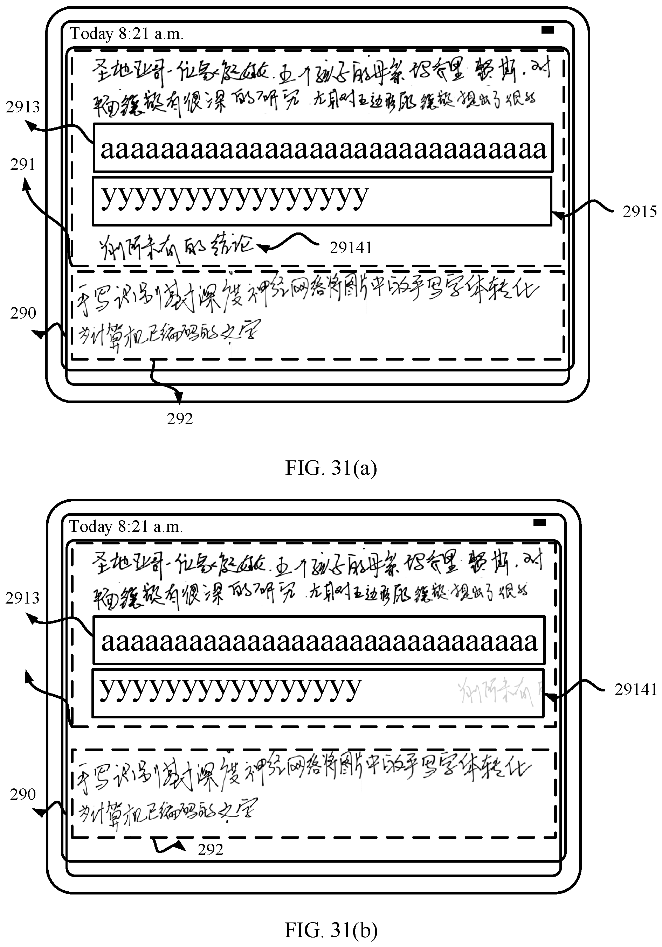

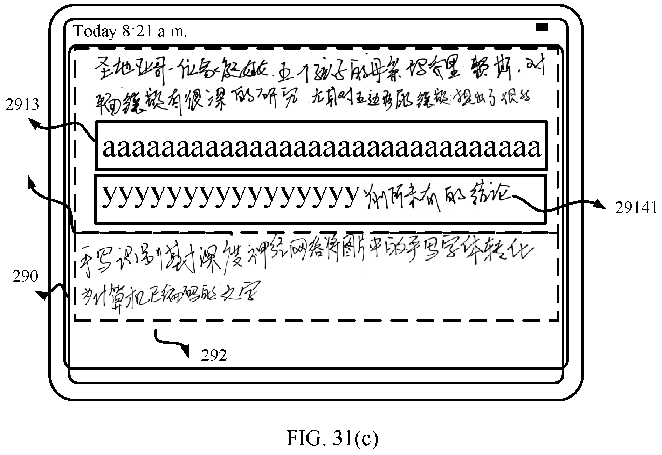

As shown in FIG. 31(a), a handwritten note displayed by an electronic device in a note interface 310 includes a paragraph 301 and a paragraph 302. The paragraph 302 is located below the paragraph 301. The paragraph 301 includes a line 3113, a line 3114, and a line 3115. It is assumed that the user does not fully write characters in the line 3014, as shown in FIG. 31(a). When the electronic device determines that the user exits insertion, the electronic device may move a character 31151 from the line 3115 to a remaining area in the line 3014, as shown in FIG. 31(a). In an example, the electronic device may first move the character 30151 to the remaining area in the line 3014, and set transparency of the character 31151 to 100%. In a movement process, the transparency of the character 30151 gradually decreases, and the paragraph 312 gradually moves upward, as shown in FIG. 31(b). At a movement end moment, the character 30151 is located in the line 3015, and the transparency is 0. The paragraph 302 reaches a position whose paragraph spacing from the paragraph 301 is greater than or equal to a preset line spacing.

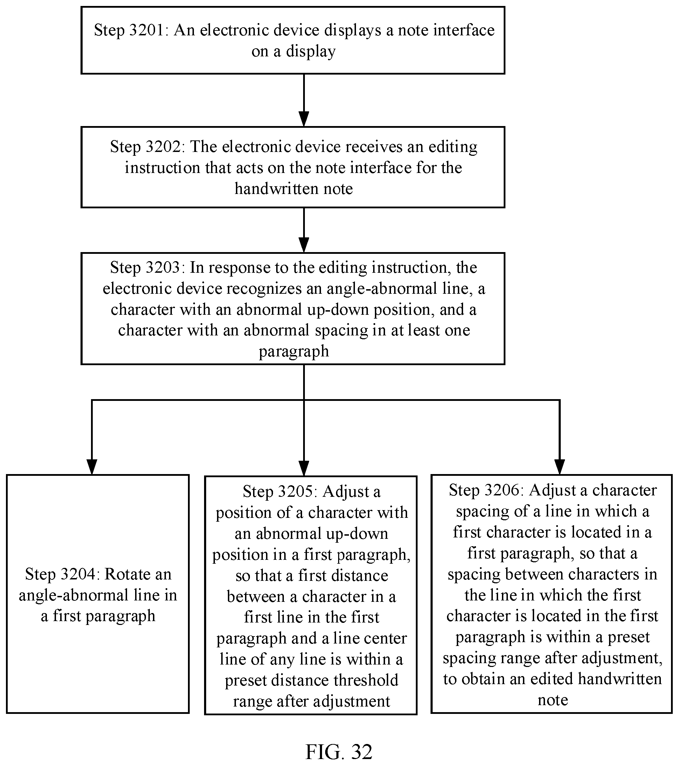

FIG. 32 is a schematic flowchart of a handwritten note editing method according to an embodiment of this application. The method includes the following steps.

Step 3201: An electronic device displays a note interface on a display.

For example, the note interface displays a handwritten note, and the handwritten note includes one or more paragraphs.

For example, as shown in FIG. 7(a) to FIG. 7(c), the electronic device may display a handwritten note interface 71 shown in FIG. 7(a). Alternatively, as shown in FIG. 10(a) and FIG. 10(b), the electronic device may display a handwritten note interface 101 shown in FIG. 10(a).

In an example, the electronic device may display an interface shown in FIG. 4(b), and then a user taps a create control 44 to trigger the electronic device to display an interface shown in FIG. 4(c). In the interface shown in FIG. 4(c), the electronic device may write a handwritten note in a handwriting area 401 in response to the user using a finger or a stylus to perform input, to obtain the handwritten note interface 101 or the handwritten note interface 71. Therefore, the note interface displayed by the electronic device may be the note currently written by the user in the handwriting area.

In another example, the electronic device may display an interface shown in FIG. 4(b), and then a user triggers an open operation for a handwritten note 42 previously handwritten by the user, to trigger the electronic device to display the handwritten note interface 71 shown in FIG. 7(a), or the handwritten note interface 101 shown in FIG. 10(a).

Step 3202: The electronic device receives an editing instruction that acts on the note interface for the handwritten note.

In an example, the user may tap an adaptive editing control 404 in an interface shown in FIG. 4(d), to trigger the electronic device to detect the editing instruction.

In another example, the editing instruction may alternatively be a specific gesture that is input by the user in the note interface for a to-be-edited paragraph. For example, the user may perform a touch and hold operation or a double-tap operation on the to-be-edited paragraph, or perform a delete operation or an insert operation on the to-be-edited paragraph.

For example, as shown in FIG. 7(b), the user may input a touch and hold operation for the to-be-edited paragraph, to trigger the electronic device to display a pop-up window 724. In the pop-up window 724, the electronic device may tap any one of a "One-click adjustment" control, an "Adjust angle-abnormal line" control, an "Adjust up-down position" control, and an "Adjust character spacing" control, to trigger the electronic device to detect the editing instruction.

Step 3203: In response to the editing instruction, the electronic device performs at least one of the following actions: determining an angle-abnormal line in a first paragraph, determining a character with an abnormal up-down position in the first paragraph, and determining a character with an abnormal character spacing in the first paragraph.

The first paragraph is one or more paragraphs that the editing instruction indicates to edit. For example, as shown in FIG. 7(a) to FIG. 7(c), if the electronic device detects an editing instruction triggered by the user for the paragraph 72, the first paragraph is the paragraph 72. If the electronic device detects an editing instruction that is input by the user and that is triggered for the paragraph 72 and the paragraph 73 in the handwritten note, the first paragraph includes the paragraph 72 and the paragraph 73. For example, the user first triggers a select operation to select the paragraph 72 and the paragraph 73, and then the user taps the adaptive editing control 404 or taps the "One-click adjustment" control in the displayed pop-up window, so that the electronic device detects the editing instruction. Alternatively, as shown in FIG. 7(a) to FIG. 7(c), assuming that the user taps the "One-click adjustment" control shown in FIG. 7(b), the first paragraph may include all paragraphs in the handwritten note or include all paragraphs displayed in a current interface.

For how the electronic device recognizes an angle-abnormal line in a paragraph, refer to the description in FIG. 6. For how the electronic device recognizes a character with an abnormal up-down position in a paragraph, refer to the description in FIG. 9. For how the electronic device recognizes a character with an abnormal left-right spacing in a paragraph, refer to the description in FIG. 12. Details are not described herein again.

If the electronic device detects that the editing instruction triggered by the user is a delete operation or an insert operation, the electronic device may recognize an angle-abnormal line, a character with an abnormal up-down position, and a character with an abnormal character spacing in the first paragraph.

If the electronic device detects that the editing instruction triggered by the user is to adjust an angle-abnormal line, for example, the editing instruction is to tap the "Adjust angle-abnormal line" control, the electronic device recognizes an angle-abnormal line in the first paragraph.

If the editing instruction triggered by the electronic device is to adjust an up-down position of a character, for example, the editing instruction is to tap the "Adjust up-down position" control, the electronic device recognizes a character with an abnormal up-down position in the first paragraph.

If the editing instruction triggered by the electronic device is to adjust a character spacing, for example, the editing instruction is to tap the "Adjust character spacing" control, the electronic device recognizes a character with an abnormal character spacing in the first paragraph.

It may be understood that, if the first paragraph includes an angle-abnormal line, a character with an abnormal up-down position, and a character with an abnormal spacing, the electronic device may perform the following step 3204 to step 3206.

If the first paragraph includes an angle-abnormal line and a character with an abnormal up-down position, but does not include a character with an abnormal character spacing, the electronic device may perform the following step 3204 and step 3205, but does not perform step 3206.

If the first paragraph includes an angle-abnormal line and a character with an abnormal character spacing, but does not include a character with an abnormal up-down position, the electronic device may perform the following step 3204 and step 3206, but does not perform step 3205.

If the first paragraph includes a character with an abnormal up-down position and a character with an abnormal character spacing, but does not include an angle-abnormal line, the electronic device may perform the following step 3205 and step 3206, but does not perform step 3204.

Step 3204: The electronic device rotates the angle-abnormal line in the first paragraph.

The angle-abnormal line is a line that is in one or more lines included in the first paragraph and whose angle difference from the first paragraph is greater than or equal to an angle difference threshold. For example, the electronic device may rotate an angle-abnormal line in any paragraph, so that an angle of the angle-abnormal line after rotation is the same as an angle of a paragraph in which the angle-abnormal line is located, to obtain an edited handwritten note.

Step 3205: The electronic device adjusts a position of the character with the abnormal up-down position in the first paragraph, so that a first distance between the adjusted character in a first line in the first paragraph and a center line of any line is within a preset distance threshold range.

For example, if a first distance between the adjusted character with the abnormal up-down position and a center line of a line in which the character is located meets the following requirement, it may be considered that the first distance is within the preset distance range. $dist(P_{ij}, l_i) \geq A_{i1}$ and/or $dist(P_{ij}, l_i) \leq A_{i2}$ . $dist(P_{ij}, l_i)$ repre-

sents a first distance between a center of a $j^{th}$ first character in an $i^{th}$ line and a center line of the $i^{th}$ line, $A_{i1}$ represents a first distance threshold of the $i^{th}$ line, $A_{i2}$ represents a second distance threshold of the $i^{th}$ line, the first distance threshold and/or the second distance threshold are/is determined by a mean distance between all characters in the $i^{th}$ line and the center line of the $i^{th}$ line, and the first distance threshold is less than the second distance threshold.

In an example, assuming that when a first distance between a character and a center line is less than or equal to a fourth distance threshold or the first distance threshold, the character is a character with an abnormal up-down position. In this case, the electronic device may move the character in a direction away from the center line, so that the first distance between the character and the center line after movement is greater than or equal to the first distance threshold. Assuming that a first distance between a character and a center line is greater than or equal to a third distance threshold or the second distance threshold, the electronic device may move the character in a direction close to the center line, so that the first distance between the character and the center line after movement is less than or equal to the second distance threshold. In this way, the moved character with the abnormal up-down position is within the preset distance threshold range.

The first line is a line in which the character with the abnormal up-down position is located.

According to step 3205, the first paragraph after adjustment does not include a character with an abnormal up-down position, that is, the first paragraph does not include a character that is too close to the center line or a character that is far away from the center line, so that a first distance between a character in any line in the first paragraph and a center line is within the preset distance threshold range. In this way, positions of characters in the first paragraph are relatively neat. For a process of adjusting, by the electronic device, the position of the character with the abnormal up-down position in the first paragraph, refer to the embodiment shown in FIG. 9. Details are not described herein again.

Step 3206: The electronic device adjusts a character spacing of a line in which a first character is located in the first paragraph, so that an adjusted spacing between characters in the line in which the first character is located in the first paragraph is within a preset spacing range, to obtain an edited handwritten note.

The first character is a character with an abnormal left-right spacing in the first paragraph.

For example, the electronic device may adjust the character in the line in which the first character is located in the first paragraph until a spacing between adjacent characters in the line in which the first character is located meets the following formula, that is, the adjusted spacing between the characters in the line in which the first character is located in the first paragraph is within the preset spacing range: $dist(P_{ij}, P_{ij+1}, l_i) > y$ and/or $dist$

$(P_{ij}, P_{ij+1}, l_i) < m \cdot y$ represents the first spacing threshold, and $m$ represents the second spacing threshold.

It should be noted that, for the electronic device, when recognizing a character with an abnormal left-right spacing in a line, the electronic device may perform overall adjustment on a character spacing in the line, so that a spacing between the entire line of characters after adjustment is greater than or equal to the first spacing threshold, or a spacing between the entire line of characters after adjustment is equal to a mean spacing of the line, or a difference from the mean spacing is less than or equal to a preset difference. This is not limited in this embodiment of this application.

Step 3207: The electronic device displays the edited handwritten note.

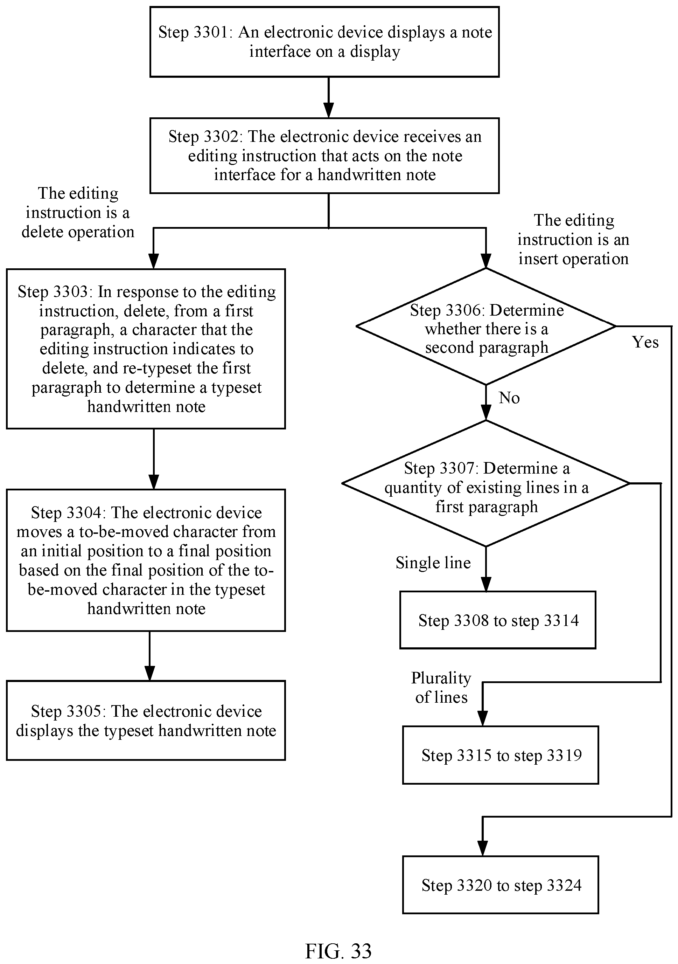

FIG. 33 is a schematic flowchart of another handwritten note editing method according to an embodiment of this application. The method includes the following steps.

Step 3301: An electronic device displays a note interface on a display.

For example, the note interface displays a handwritten note. The handwritten note includes one or more paragraphs.

For example, the electronic device may display an interface displayed in FIG. 18(a) or FIG. 20(a).

Step 3302: The electronic device receives an editing instruction that acts on the note interface for the handwritten note.

In an example, the editing instruction may be an operation for indicating to delete a character in a first paragraph in one or more paragraphs, for example, an operation for indicating to delete a character 18111 shown in FIG. 18(b).

In another example, the editing instruction may be an operation for indicating to insert content at a position in a first paragraph, for example, an insert operation shown in FIG. 20(a).

If the editing instruction is a delete operation, the electronic device performs the following step 3303 to step 3305.

If the editing instruction is an insert operation, the electronic device performs the following step 3306 to step 3324.

Step 3303: In response to the editing instruction, delete, from the first paragraph, a character that the editing instruction indicates to delete, and re-typeset the first paragraph to determine a typeset handwritten note.

After a character in a line is deleted, if only the character deleted by the editing instruction is deleted without re-typesetting, a blank area exists in the first paragraph. Re-typesetting may move a character after the deleted character to the blank area, to improve neatness.

Optionally, the electronic device may further re-typeset the first paragraph in response to the editing instruction, to obtain a typeset handwritten note. During re-typesetting, a character before the deleted operation (that is, a character that is located in a same line as the deleted character and that is located on the left of the 1st character in one or more deleted characters) usually does not need to be moved, but a character that is located in a same line as the deleted character and that is located on the right of the last deleted character in the deleted character and a character that is located in one or more lines below the deleted character in the first paragraph need to be moved. For ease of description, a character related to movement is denoted as a to-be-moved character.

Therefore, after deleting the deleted character, the electronic device may re-typeset the first paragraph to determine a final position of the to-be-moved character in the typeset handwritten note. Then, the electronic device divides to-be-moved characters into two groups, that is, a first group of characters and a second group of characters, based on an initial position of the to-be-moved characters and the final position of the to-be-moved characters in the typeset handwritten note. The first group of characters is characters whose initial position before movement and final position after movement are in a same line in the first paragraph. The second group of characters is characters whose initial position before movement and final position after movement are not in a same line in the first paragraph.

Step 3304: The electronic device moves the to-be-moved character from the initial position to the final position based on the final position of the to-be-moved character in the typeset handwritten note.

It should be noted that the initial position is a position of a character in the handwritten note before typesetting. The final position may be understood as a position of a character in the handwritten note after typesetting.

If a position (that is, an initial position) of a character in the handwritten note before typesetting is inconsistent with a position (that is, a final position) of the character in the handwritten note after typesetting, the character is a to-be-moved character. In other words, the to-be-moved character may be a character whose initial position and final position are different in the handwritten note.

In an example, for the electronic device, the first group of characters and the second group of characters may be moved from respective initial positions to respective corresponding final positions for display.

In an example, the electronic device may move the first group of characters and the second group of characters according to the typesetting animations shown in FIG. 23(a) to FIG. 23(c), FIG. 24(a) to FIG. 24(c), FIG. 25(a) to FIG. 25(c), and FIG. 26(a) to FIG. 26(d). Details are not described herein again.

It may be understood that, it is assumed that the editing instruction indicates to delete a character in a line in the first paragraph, but the first paragraph has only one line. In this case, the electronic device may determine that the typeset handwritten note includes only the first group of characters. In this case, for the electronic device, the first group of characters may be moved based on the typesetting animation shown in FIG. 23(a) to FIG. 23(c), FIG. 24(a) to FIG. 24(c), FIG. 25(a) to FIG. 25(c), or FIG. 26(a) to FIG. 26(d). Details are not described herein again.

Step 3305: The electronic device displays the typeset handwritten note.

It should be noted that, in a process in which the electronic device moves the first group of characters and the second group of characters according to the typesetting animation, the user may observe a movement process of the first group of characters and the second group of characters by using the typesetting animation.

Step 3306: In response to the editing instruction, determine whether there is a second paragraph below the first paragraph.

When there is no second paragraph below the first paragraph, the electronic device performs the following steps 3307 to 3319 to insert a blank area into the first paragraph.

When there is a second paragraph below the first paragraph, the electronic device performs the following step 3320 to step 3324.

Step 3307: When there is no second paragraph below the first paragraph, determine a quantity of lines of the first paragraph.

When there is a single line in the first paragraph, the electronic device performs the following step 3308 to step 3314. When there are a plurality of lines in the first paragraph, the electronic device performs the following step 3315 to step 3319.

Step 3308: When there is a single line in the first paragraph, the electronic device determines to insert a first blank area of a first preset length in the first paragraph from an insertion position indicated by the editing instruction, and re-typesets the first paragraph, to obtain a typeset handwritten note.

The typeset handwritten note includes a position of the first blank area in the first paragraph, a position of a character before the first blank area, and a position of a character after the first blank area.

It may be understood that, when there is a single line in the first paragraph, the character after the first blank area is a character that is located in a same line as the first blank area after movement and a character that is located in a different line from the first blank area after movement.

It may be understood that, if the insertion position indicated by the editing instruction is located between two characters in a same line, as shown in FIG. 20(a), when a blank area of the first preset length is inserted, the electronic device needs to move rightward a character located after the insertion position (referred to as a to-be-moved character for short below). Characters

" 丝绸之路 (silk road)" in FIG. 20(b) are characters that need to be moved. Specifically, a movement distance of the to-be-moved character is the first preset length.

It should be noted that, after a blank area of the first preset length is inserted into a line, if a remaining length in the line is sufficient to accommodate the to-be-moved character, the to-be-moved character is still located in the line after being moved rightward by the first preset length, as shown in FIG. 20(b). If a remaining length in the line is insufficient to accommodate the to-be-moved character or can accommodate only a part of to-be-moved characters, the electronic device may move the to-be-moved character to a next line, or move the other characters in the to-be-moved characters to a next line, as shown in FIG. 20(c) and FIG. 20(d). For example, the character "丝 (silk)" is still in the line 2011 after being moved, but the characters "绸之路 (road)" are moved to the next line 2012.

The electronic device needs to move the character after the insertion position. To help the user quickly find a corresponding position of handwriting after typesetting, the electronic device may move the to-be-moved character by using a preset typesetting animation, to move the to-be-moved character to a final position and display the character. For example, the electronic device may divide to-be-moved characters into two groups, that is, a first group of characters and a second group of characters. The first group of characters is characters whose initial position before movement and final position after movement are in a same line in the first paragraph. The second group of characters is characters whose initial position before movement and final position after movement are not in a same line in the first paragraph. It may be understood that the electronic device may perform different movement operations or may perform a same movement operation on the first group of characters and the second group of characters. For example, a translation operation is performed on the first group of characters, and a translation operation is also performed on the second group of characters, that is, the foregoing typesetting animation 1 is performed. Alternatively, when a translation operation is performed on the first group of characters, the second group of characters may be moved in the following manner: (1) The second group of characters disappears at a moment at which the first group of characters starts to be translated, and then at a movement end moment (that is, a moment at which the first group of characters reaches a final position), the second group of characters is controlled to appear at a final position of the second group of characters, that is, the foregoing typesetting animation 2 is performed. (2) The second group of characters disappears from an initial position of the second group of characters at a moment when the first group of characters starts to be translated, and appears at a final position of the second group of characters, but transparency is 100%. With translation of the first group of characters, the transparency of the second group of characters gradually decreases, and the transparency reaches 0 at the end moment, that is, the foregoing typesetting animation 3 is performed. (3) The second group of characters disappears from an initial position at a moment when the first group of characters starts to be translated, and appears on a left side of a character in an initial state in a next line, but transparency is 100%. Then, the second group of characters is translated together with the first group of characters until final positions of the two groups of characters are reached. In a translation process, the transparency of the second group of characters gradually decreases from 100% to 0%. In other words, the foregoing typesetting animation 5 is performed.

It should be noted that the electronic device may consider a to-be-inserted blank area as the first group of characters.

It should be noted that, in a typesetting process, the first paragraph may include both the first group of characters and the second group of characters, as shown in FIG. 28(a) to FIG. 28(d). Alternatively, there may be only the first group of characters but no second group of characters, as shown in FIG. 27(a) to FIG. 27(d). When the electronic device determines to insert the blank area 2714, because both the blank area 2714 and the character 2715 belong to the first group of characters, the electronic device may move the first group of characters by using the typesetting animation shown in FIG. 27(a) to FIG. 27(d).

Step 3309: The electronic device moves, by using a preset typesetting animation, the inserted first blank area of the first preset length and the to-be-moved character in the first paragraph to respective final positions, and displays the first blank area and the character.

In an example, the electronic device may display a position change track of the first blank area and the to-be-moved character on the interface to the user according to any one of the typesetting animation 1 to the typesetting animation 3, the typesetting animation 5, or the typesetting animation 6. This is not limited in this embodiment of this application.

It should be noted that, after the electronic device inserts the first blank area of the first preset length in response to the editing instruction of the user, the user may continue to write a character in the first blank area. For example, the user may perform character input in a form of a keyboard, or may perform character input by using a finger or a stylus. This is not limited in this embodiment of this application.

When there is a single line in the first paragraph, a length of the first blank area inserted by the electronic device in response to the editing instruction is the first preset length, and the first preset length is less than a total length of a line in which the insertion position is located. The length of the inserted first blank area may not meet a user requirement. In this case, the user may continue to trigger some preset gesture operations in the displayed interface, to trigger the electronic device to continue insertion. For example, the user may perform a double-tap operation in the first blank area, to trigger the electronic device to detect an operation of continuing insertion, so as to continue to insert the first blank area of the first preset length.

It may be understood that, after the electronic device inserts the first blank area of the first preset length in response to the editing instruction of the user, if the user needs to cancel the inserted first blank area, the user may trigger a cancel operation, so that the electronic device deletes the first blank area in response to the cancel operation. It should be noted that, when a cancel operation is detected, the electronic device may further restore the to-be-moved character to an original position. For example, the user may tap a "cancel control" to enable the electronic device to detect the cancel operation, or the cancel operation may be a specific gesture operation that is input by the user in the displayed interface. This is not limited in this embodiment of this application.

Step 3310: The electronic device displays the typeset handwritten note.

The typeset handwritten note includes the first blank area, and the to-be-moved character is located at a respective corresponding final position.

Step 3311: Insert, in the first blank area in response to a writing track of the user in the first blank area, content written by the user.

Step 3312: The electronic device detects the content inserted by the user in the first blank area.

Step 3313: If a proportion of the inserted content in the first blank area exceeds a first threshold, continue to insert the first blank area of the first preset length in the first paragraph.

It should be noted that, when the first blank area of the first preset length continues to be inserted, the electronic device still needs to move a position of the to-be-moved character, as shown in FIG. 20(c) and FIG. 20(d).

In an example, when the proportion of the inserted content in the first blank area exceeds the first threshold, the electronic device may automatically trigger an action of continuing to insert the first blank area of the first preset length, or the electronic device may output prompt information to prompt the user whether to continue to insert a blank area. If the electronic device detects an operation of the user for indicating to continue to insert the blank area, the electronic device continues to insert the first blank area of the first preset length in the first paragraph, to obtain a typed handwritten note. If the electronic device detects an operation of the user for indicating not to continue to insert a blank area, the electronic device does not continue to insert the first blank area of the first preset length in the first paragraph even if the proportion of the inserted content in the first blank area exceeds the first threshold.

In another example, when the proportion of the inserted content in the first blank area exceeds the first threshold, if the electronic device detects a specific gesture operation triggered by the user, the electronic device continues to insert the first blank area of the first preset length in the first paragraph, to obtain a typeset handwritten note.

It should be noted that, when the user inserts the content in the first blank area, if the electronic device determines that the proportion of the inserted content in the first blank area exceeds the first threshold, and the user continues to perform input in the first blank area by using a finger or a stylus, the electronic device continues to insert the first blank area of the first preset length in the first paragraph. When the user inserts the content in the first blank area, if the electronic device determines that the proportion of the inserted content in the first blank area exceeds the first threshold, and it is not detected within preset time that the user continues to perform input in a remaining area of the first blank area by using a finger or a stylus, the electronic device may not need to continue to perform an action of inserting the first blank area of the first preset length, and the electronic device may further move a character after the first blank area to the remaining area.

In an actual process, the following case may exist: After the electronic device performs step 3310, if the content written by the user in the first blank area does not fully occupy the first blank area, that is, the first blank area still has a remaining blank area, the electronic device may perform the following step 3314, so that the first paragraph has no remaining blank area.

Step 3314: When a writing completion instruction is detected, in response to the writing completion instruction, the electronic device re-typesets the typeset handwritten note, and moves the to-be-moved character in the first paragraph based on the re-typeset note, so that the remaining blank area is filled with characters.

It should be noted that the writing completion instruction may be an operation performed by the user on a confirmation control, or may be a specific gesture operation that is input in the handwritten note interface, or may be that an input operation of the user in the first blank area is not detected within preset time, or may be that an input operation of the user on another paragraph or another position is detected. This is not limited in this embodiment of this application.

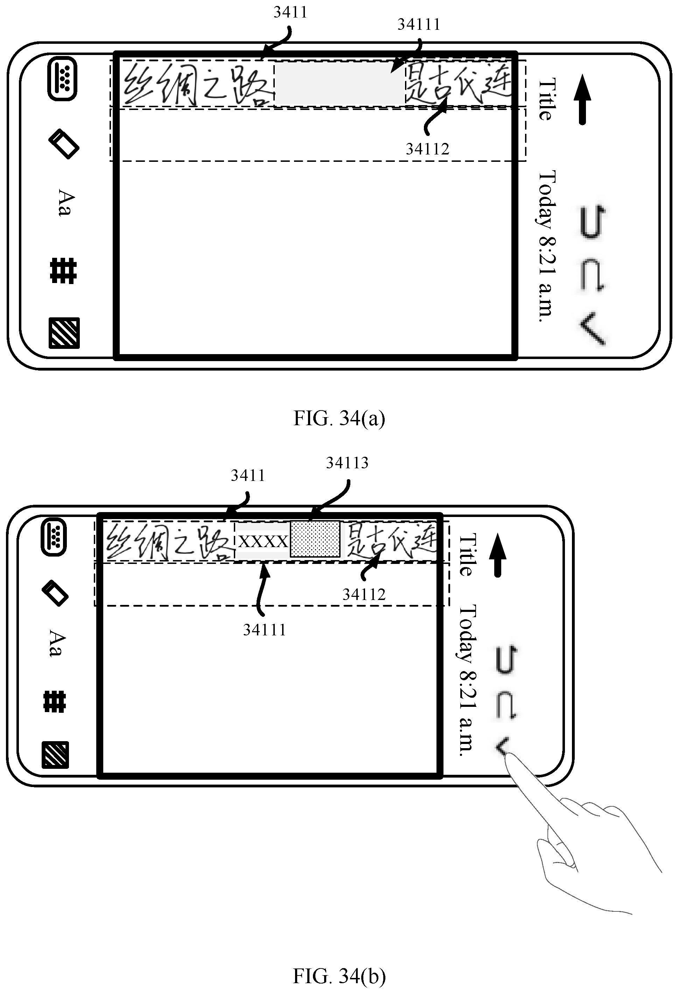

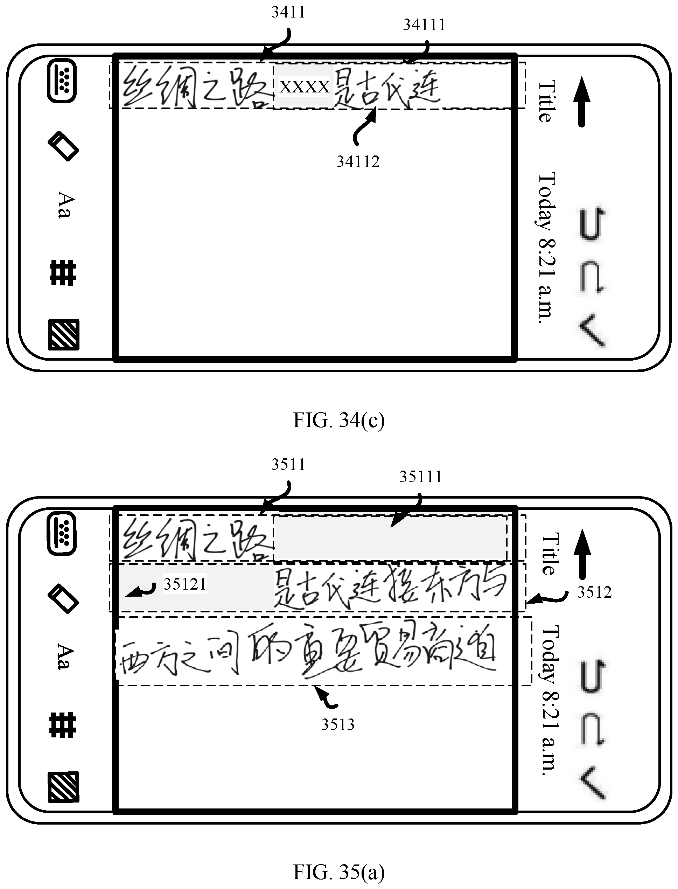

For example, as shown in FIG. 34(a), when the first paragraph has a single line, it is assumed that the electronic device inserts a blank area 34111 in a line 3411 in the first paragraph in response to the insert operation. Then, as shown in FIG. 34(b), the user may write inserted content in the blank area 34111. It is assumed that the user has inserted content that the user wants to insert in the blank area 34111, but a part of the blank area 34111 is still not filled, that is, there is a remaining blank area 34113. Therefore, the electronic device may move a character 34112 toward the remaining blank area 34113, so that a part or all of characters in the character 34112 are located in the remaining blank area 34113.

It should be noted that, when the inserted blank area is not full of characters, the electronic device may delete the remaining blank area in response to a completion operation. Therefore, for an action of moving a character after the remaining blank area, refer to related steps of the foregoing delete operation. Details are not described herein again.

Step 3315: When there are a plurality of lines in the first paragraph, in response to the editing instruction, insert a third blank area of a second preset length from an insertion position indicated by the editing instruction, and re-typeset the first paragraph, to obtain a typeset handwritten note.

It should be noted that, when there are a plurality of lines in the first paragraph, if the insertion position is between two characters in a same line, as shown in FIG. 20(b), when the electronic device inserts a blank area 2031 (that is, the third blank area) of an entire line from the insertion position, the blank area 2031 not only includes a blank area in the line 2011, but also includes a blank area in the line 2012. It may be understood that in the scenario shown in FIG. 21(a) to FIG. 21(d), the electronic device needs to move the character 20113 from the line 2011 to the line 2012, and then move all characters in the line 2012 to the line 2013.

Step 3316: The electronic device moves, by using a preset typesetting animation, the inserted third blank area of the second preset length and the to-be-moved character in the first paragraph to respective final positions, and displays the third blank area and the character.

Step 3317: After inserting the third blank area, the electronic device inserts content in the third blank area in response to a handwriting track that is input by the user in the third blank area.

It should be noted that after the third blank area is inserted, the following scenario may exist: A length of the inserted third blank area is excessively long, and content to be inserted by the user in the third blank area is insufficient to fill the third blank area, that is, there is a remaining blank area in the third blank area, so that there is still a blank area that is not written in the handwritten note, and overall readability is low. In this case, the user may trigger a completion operation, so that the electronic device moves, in response to the completion operation, a character after the third blank area. In this way, the character after the third blank area is moved to the remaining blank area.

For example, the completion operation may be an operation that is detected by the electronic device and that is triggered by the user for a "confirmation" control, or may be a preset gesture that is input by the user in the handwritten note interface, for example, an operation of erasing the remaining blank area. Alternatively, the completion operation may be that the electronic device detects a handwriting track that is input by the user in another line.

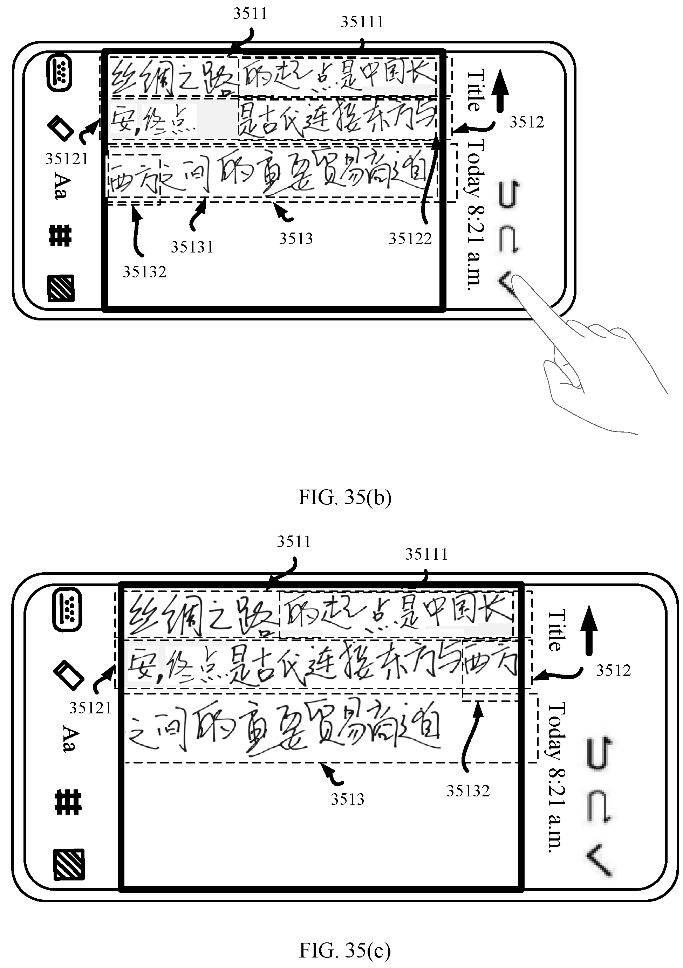

For example, as shown in FIG. 35(a), it is assumed that the electronic device inserts, in response to the insert operation of the user, a third blank area of an entire line in the line 3511 from the insertion position, where the third blank area includes a blank area 35111 in a line 3511 and a blank area 35120 in a line 35121. Then, as shown in FIG. 35(b), the electronic device inserts a character in the third blank area in response to a handwriting track of the user. When the user confirms that insertion is completed, the user may tap a "confirmation control" on a handwritten note page or the electronic device detects an edit operation or a write operation triggered by the user at another position, to trigger the electronic device to detect a completion operation. In response to the completion operation, the electronic device may move the character 35122 in the line 3512 and the character 35131 in the line 3513. For example, as shown in FIG. 35(c), the electronic device moves a part of the character 35122 in the line 3512 to the remaining blank area, and moves the character 35132 to a position after the character 35122 in the line 3412.

Step 3318: The electronic device detects the content inserted by the user in the third blank area.

Step 3319: If a proportion of the inserted content in the third blank area exceeds a first threshold, continue to insert the third blank area of the second preset length in the first paragraph.

For this process, refer to the description in step 3313. Details are not described herein again.

Step 3320: When there is a second paragraph below the first paragraph, determine a paragraph spacing between the first paragraph and the second paragraph.

Step 3321: When the paragraph spacing is greater than or equal to a line height of the first paragraph, re-typeset the first paragraph to obtain a typeset handwritten note.

The typeset handwritten note includes a blank area of a preset length that is inserted from a first position in the first paragraph, and a position of each character in the first paragraph after the blank area is inserted. For this process, refer to step 3308 in the foregoing embodiment, and details are not described herein again.

It may be understood that, if the paragraph spacing is greater than or equal to a smallest line height, a mean line height, or a largest line height of the first paragraph, it indicates that inserting the blank area of the preset length in the first paragraph does not make a character in the first paragraph overlap a character in the second paragraph. Therefore, the blank area of the preset length can be inserted in the first paragraph.

Step 3322: The electronic device moves, by using a preset typesetting animation, the inserted blank area of the preset length and the to-be-moved character in the first paragraph to respective final positions, and displays the blank area and the character.

For this process, refer to step 3309 in the foregoing embodiment, and details are not described herein again.

It may be understood that, when there is a second paragraph below the first paragraph, if the first paragraph includes a single line, for step 3321, refer to the implementation of step 3308. Details are not described herein again. If the first paragraph includes a plurality of lines, for step 3321, refer to the implementation of step 3315. Details are not described herein again.

Step 3323: When the paragraph spacing is less than the line height of the first paragraph, the electronic device further needs to re-typeset the first paragraph and the second paragraph, to obtain a typeset handwritten note.

It should be noted that the typeset handwritten note indicates a final position of the second paragraph, a position of the blank area of the preset length, and a position of a character in the first paragraph.

Step 3324: The electronic device controls, based on the final position of the second paragraph, the final position of the blank area, and the final position of the to-be-moved character in the typeset handwritten note, the second paragraph, the blank area, and the to-be-moved position to move from initial positions to final positions, and performs display. For a specific process, refer to the embodiment shown in FIG. 30(a) to FIG. 30(c), and details are not described herein again.

Specifically, the electronic device further controls the second paragraph to move in a direction away from the first paragraph, so that the paragraph spacing between the first paragraph and the second paragraph is greater than or equal to the line height of the first paragraph.

It should be noted that, after step 3324 is performed, assuming that the content inserted by the user does not fill the blank area, the electronic device may re-adjust the handwritten note in the manner shown in FIG. 31(a) to FIG. 31(c), and display a finally adjusted handwritten note.

It should be noted that in the foregoing embodiments, FIG. 32 and FIG. 33 are used as separate embodiments for description. It should be noted that, when the editing instruction is a delete operation or an insert operation, in addition to typesetting the first paragraph, the electronic device may further adjust a position of a character in the first paragraph with reference to the manner shown in FIG. 32.

According to the handwritten note editing method provided in this embodiment of this application, in a scenario in which the user uses a note app, the electronic device may respond to an editing instruction that is input by the user for a paragraph in a handwritten note, and then adjust a character position in the first paragraph based on the editing instruction, so that an angle of any line in the first paragraph is consistent with that of the first paragraph after adjustment, or up-down positions of characters in any line in the first paragraph are consistent, that is, there is no character with an abnormal up-down position, or character spacings in any line are consistent, that is, there is no character with an abnormal character spacing in the first paragraph. This solution can make characters of the edited handwritten note be arranged aesthetically and neatly. The method can help the user more conveniently use the note app, conveniently implement note sorting, and the like, and can better conform to a habitual operation manner of the user, so as to improve work efficiency of using the note app by the user, thereby improving user experience.

Based on the foregoing embodiments, this application further provides an electronic device. The electronic device includes a plurality of functional modules. The plurality of functional modules interact with each other to implement functions performed by the electronic device in the methods described in embodiments of this application. The plurality of functional modules may be implemented based on software, hardware, or a combination of software and hardware, and the plurality of functional modules may be randomly combined or divided based on a specific implementation. For example, step 3201 to step 3207 performed by the electronic device in the embodiment shown in FIG. 32 are performed. Alternatively, step 3301 to step 3324 performed by the electronic device in the embodiment shown in FIG. 33 are performed.

It may be understood that, to implement functions of any one of the foregoing embodiments, the electronic device includes a corresponding hardware structure and/or software module for performing each function. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner.

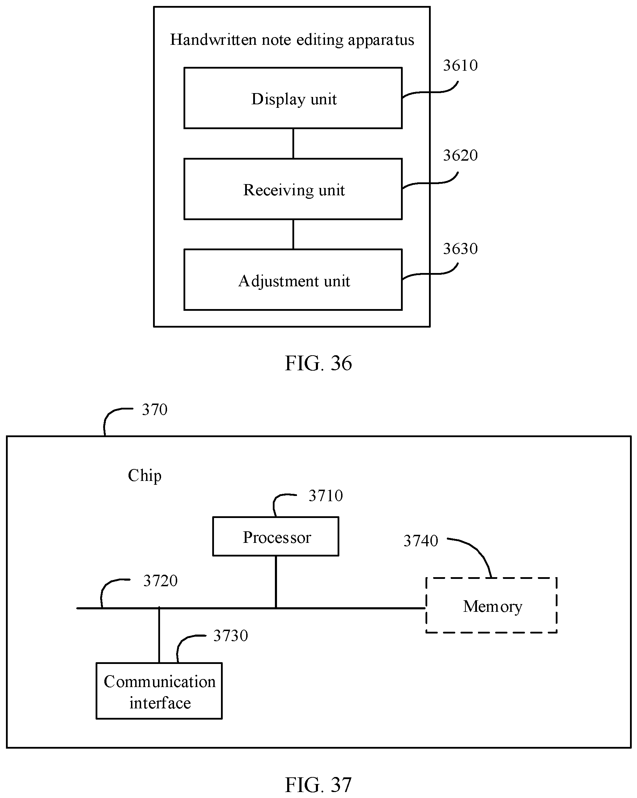

For example, when each functional module is obtained through division in an integrated manner, FIG. 36 is a block diagram of a structure of an electronic device according to an embodiment of this application. As shown in FIG. 36, the electronic device may include a display unit 3610, a receiving unit 3620, and an adjustment unit 3630.

The display unit 3610 is configured to support the electronic device in displaying a handwritten note or displaying an adjusted handwritten note. The receiving unit 3620 is configured to receive an editing instruction that is input by a user for the electronic device, for example, a delete operation or an insert operation. The adjustment unit 3630 is configured to adjust a character position in a first paragraph to obtain an edited handwritten note, or re-typeset at least the first paragraph to obtain a typeset handwritten note.

In an example, the display unit 3610 may be the display shown in FIG. 2, and the adjustment unit 3630 and the receiving unit 3620 may be integrated into the processor shown in FIG. 2.

FIG. 37 is a diagram of a structure of a chip 370 according to an embodiment of this application. The chip 370 includes one or more (including two) processors 3710 and a communication interface 3730.

Optionally, the chip 370 further includes a memory 3740. The memory 3740 may include a read-only memory and a random access memory, and provide operation instructions and data for the processor 3710. A part of the memory 3740 may further include a non-volatile random access memory (non-volatile random access memory, NVRAM).

In some implementations, the memory 3740 stores the following element: an execution module or a data structure, a subset thereof, or an extension set thereof.

In this embodiment of this application, a corresponding operation is performed by invoking the operation instructions stored in the memory 3740 (the operation instructions may be stored in an operating system).

In a possible implementation, structures of electronic devices are similar, and different apparatuses may use different chips to implement respective functions.

The processor 3710 controls a processing operation of the electronic device, and the processor 3710 may also be referred to as a central processing unit (central processing unit, CPU).

The memory 3740 may include a read-only memory and a random access memory, and provide instructions and data for the processor 3710. A part of the memory 3740 may further include an NVRAM. For example, during application, the processor 3710, the communication interface 3730, and the memory 3740 are coupled together through a bus system 3720. In addition to a data bus, the bus system 3720 may further include a power bus, a control bus, a status signal bus, and the like. However, for clear description, various buses are referred to as the bus system 3720 in FIG. 37.

The method disclosed in embodiments of this application may be applied to the processor 3710, or implemented by the processor 3710. The processor 3710 may be an integrated circuit chip and has a signal processing capability. In an implementation process, steps of the foregoing method may be completed by using an integrated logic circuit of hardware in the processor 3710 or an instruction in a form of software. The processor 3710 may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 3740. The processor 3710 reads information in the memory 3740, and completes the steps of the foregoing methods in combination with hardware of the processor.

In a possible implementation, for example, the chip 370 is applied to an electronic device, and the communication interface 3730 is configured to perform receiving and sending steps of the electronic device in the embodiment shown in FIG. 32 or FIG. 33. The processor 3710 is configured to perform processing steps of the first terminal device in the embodiments shown in FIG. 32 and/or FIG. 33.

The foregoing communication module may be a communication interface of the apparatus, and is configured to receive a signal from another apparatus. For example, when the apparatus is implemented as a chip, the communication module is a communication interface used by the chip to receive a signal from or send a signal to another chip or apparatus.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application. For example, step 3201 to step 3207 performed by the electronic device in the embodiment shown in FIG. 32 are performed. Alternatively, step 3301 to step 3324 performed by the electronic device in the embodiment shown in FIG. 33 are performed.

Based on the foregoing embodiments, this application further provides a computer program product. The computer program product includes a computer program (which may also be referred to as code or instructions). When the computer program is run, the methods described in embodiments of this application are performed.

Based on the foregoing embodiments, this application further provides a computer-readable storage medium. The computer-readable storage medium stores a computer program (which may also be referred to as code or instructions). When the code or the instructions are executed by a computer, the computer is enabled to perform the methods described in embodiments of this application. Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams. These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams. It is clear that a person skilled in the art may make various modifications and variations to this application without departing from the protection scope of this application. Thus, this application is intended to cover these modifications and variations, provided that they fall within the scope of the claims of this application and their equivalent technologies.

**Claims**

1. A handwritten note editing method, wherein the method is applied to an electronic device having a display, and the method comprises:

    displaying a note interface on the display, wherein the note interface displays a handwritten note, and the handwritten note comprises one or more paragraphs;
    receiving an editing instruction that acts on the note interface for the handwritten note;
    adjusting a character position in a first paragraph in response to the editing instruction, to obtain an edited handwritten note, wherein the character position in the first paragraph in the edited handwritten note meets one or more of the following requirements: an angle of any line in the first paragraph is the same as an angle of the first paragraph, and the character position in the first paragraph meets a first requirement, wherein the first requirement is that a distance between a character in a line and a center line of the line is within a preset distance threshold range, and the first paragraph is a paragraph on which the editing instruction acts; and
    displaying the edited handwritten note.

2. The method according to claim 1, wherein adjusting the character position in the first paragraph, to obtain the edited handwritten note comprises:

    rotating an angle-abnormal line in the first paragraph, so that an angle of the angle-abnormal line after rotation is the same as the angle of the first paragraph, to obtain the edited handwritten note, wherein the angle-abnormal line is a line whose angle difference from the first paragraph is greater than or equal to an angle difference threshold in one or more lines comprised in the first paragraph; and/or

adjusting a position of a character with an abnormal up-down position in the first paragraph, so that a distance between the character with the abnormal up-down position and a center line of a line in which the character with the abnormal up-down position is located is within the preset distance threshold range, to obtain the edited handwritten note.

3. The method according to claim 2, wherein before rotating the angle-abnormal line in the first paragraph, so that the angle of the angle-abnormal line after rotation is the same as the angle of the first paragraph, to obtain the edited handwritten note, the method further comprises:

determining an angle of each line in the first paragraph and the angle of the first paragraph; and
determining the angle-abnormal line in the first paragraph based on the angle of the first paragraph and the angle of each line in the first paragraph.

4. The method according to claim 2 or 3, wherein before adjusting the position of the character with the abnormal up-down position in the first paragraph, the method further comprises:

determining a first distance between each character in the first paragraph and a center line of a line in which each character is located; and
determining one or more first characters in the first paragraph based on the first distance between each character and the center line of the line in which each character is located, wherein the first character is a character with an abnormal up-down position in the first paragraph.

5. The method according to any one of claims 1 to 4, wherein the preset distance threshold range is determined by a mean distance, a median, or a mode of first distances between all characters in the line in which the character with the abnormal up-down position is located and the center line of the line.

6. The method according to claim 4 or 5, wherein determining the one or more first characters in the first paragraph based on the first distance between each character and the center line of the line in which each character is located comprises:
if a first distance between any character and a center line of a line in which the character is located is greater than or equal to a third distance threshold, and/or the first distance between the any character and the center line of the line in which the any character is located is less than or equal to a fourth distance threshold, determining that the any character is the first character, wherein the third distance threshold and/or the fourth distance threshold are/is determined by a mean distance, a median, or a mode of distances between all characters in a line in which the first character is located and a center line of the line in which the first character is located, the third distance threshold is greater than or equal to a second distance threshold, and the fourth distance threshold is less than a first distance threshold.

7. The method according to any one of claims 1 to 6, wherein the first requirement further comprises: a spacing between adjacent characters in a line in the first paragraph is within a preset spacing threshold range.

8. The method according to claim 7, wherein adjusting the character position in the first paragraph, to obtain the edited handwritten note further comprises:
adjusting a position of a character with an abnormal left-right spacing in the first paragraph, so that a character spacing between adjacent characters in a line in which the adjusted character with the abnormal left-right spacing is located is within the preset spacing threshold range, to obtain the edited handwritten note.

9. The method according to claim 8, wherein before adjusting the position of the character with the abnormal left-right spacing in the first paragraph, the method further comprises:

determining a spacing between any character in the first paragraph and an adjacent character of the any character, wherein the adjacent character of the any character and the any character belong to a same line; and
determining one or more second characters in the first paragraph based on the spacing between the any character and the adjacent character of the any character, wherein the second character is a character with an abnormal left-right spacing in the first paragraph, a spacing between the second character and an adjacent character of the second character does not meet a third requirement, and the third requirement is determined by a mean, a median, or a mode of spacings between all characters in a line in which the second character is located.

10. The method according to claim 9, wherein the preset spacing threshold range is determined by a mean, a median, or a mode of spacings between all characters in any line.

**11.** A handwritten note editing method, wherein the method is applied to an electronic device having a display, and the method comprises:

displaying a note interface on the display, wherein the note interface displays a handwritten note, and the handwritten note comprises one or more paragraphs;

receiving an editing instruction that acts on the note interface for a first paragraph, wherein the editing instruction is a delete operation or an insert operation, and the first paragraph belongs to the one or more paragraphs;

re-typesetting at least the first paragraph in response to the editing instruction, to obtain a typeset handwritten note; and

moving, based on a final position of a to-be-moved character in the typeset handwritten note, the to-be-moved character from an initial position to the final position, and displaying the character, wherein the to-be-moved character is a character whose initial position and final position in the first paragraph are different after typesetting.

**12.** The method according to claim 11, wherein the editing instruction is the insert operation, the insert operation indicates to insert content into the first paragraph, and re-typesetting at least the first paragraph in response to the editing instruction, to obtain the typeset handwritten note comprises:

in response to the editing instruction, when no second paragraph exists below the first paragraph, inserting, from a first position, a first blank area of a preset length in the first paragraph, to obtain the typeset handwritten note, wherein the first position is an insertion position indicated by the editing instruction; or

when a second paragraph exists below the first paragraph, determining a paragraph spacing between the first paragraph and the second paragraph; and

when the paragraph spacing is greater than or equal to a line height of the first paragraph, inserting, from a first position, a first blank area of a preset length in the first paragraph, to obtain the typeset handwritten note; or

when the paragraph spacing is less than a line height of the first paragraph, controlling the second paragraph to move in a direction away from the first paragraph, and inserting, from a first position, a first blank area of a preset length in the first paragraph, to obtain the typeset handwritten note.

**13.** The method according to claim 11, wherein after inserting, from the first position, the first blank area of the preset length in the first paragraph, to obtain the typeset handwritten note, the method further comprises:

detecting content inserted by a user into the first blank area; and

when a proportion of the inserted content in the first blank area exceeds a first threshold, continuing to insert the first blank area in the first paragraph, to obtain a typeset handwritten note.

**14.** The method according to claim 11 or 12, wherein inserting, from the first position, the first blank area of the preset length in the first paragraph comprises: inserting, from the first position, the first blank area of the preset length in the first paragraph based on a quantity of lines in the first paragraph, wherein the preset length is a first preset length when there is one line in the first paragraph, or the preset length is a second preset length when there are a plurality of lines in the first paragraph, and the first preset length is less than the second preset length.

**15.** The method according to any one of claims 11 to 14, wherein the editing instruction is the delete operation, the delete operation indicates to delete a part of characters in the first paragraph, and moving, based on the final position of the to-be-moved character in the typeset handwritten note, the to-be-moved character from the initial position to the final position, and displaying the character comprise:

controlling a first group of characters in the first paragraph to move from an initial position to a final position corresponding to the first group of characters, wherein the first group of characters is characters whose initial position and final position are in a same line in the to-be-moved character;

controlling, at a moment when the first group of characters starts to move, a second group of characters to disappear from an initial position of the second group of characters and appear with first transparency on a right side of a character in an initial state in a previous line, wherein the second group of characters is characters whose initial position and final position are in different lines in the to-be-moved character; and

controlling the second group of characters to move together with the first group of characters until the first group of characters and the second group of characters are respectively located at respective final positions, wherein transparency of the second group of characters gradually decreases from the first transparency to second transparency in a movement process.

**16.** The method according to any one of claims 11 to 15, wherein the editing instruction is the delete operation or the insert operation, and moving, based on the final position of the to-be-moved character in the typeset handwritten note, the to-be-moved character from the initial position to the final position, and displaying the character comprise:

controlling a first group of characters in the to-be-moved character to move from an initial position of the first group of characters to a final position, wherein the first group of characters is characters whose initial position and final position are in a same line in the to-be-moved character;

controlling, at a moment when the first group of characters starts to move, the second group of characters to disappear from the initial position of the second group of characters and appear with the first transparency at a final position of the second group of characters, wherein the second group of characters is characters whose initial position and final position are in different lines in the to-be-moved character; and

in a movement process of the first group of characters, controlling transparency of the second group of characters at the final position to gradually decrease from the first transparency until the transparency of the second group of characters is 0 at a movement end moment.

17. The method according to any one of claims 11 to 16, wherein the editing instruction is the delete operation or the insert operation, and moving, based on the final position of the to-be-moved character in the typeset handwritten note, the to-be-moved character from the initial position to the final position, and displaying the character comprise:

sequentially moving the first group of characters and the second group of characters in the to-be-moved character to the final positions according to a play time sequence corresponding to the first group of characters and the second group of characters, wherein the first group of characters is characters whose initial position and final position are in a same line in the to-be-moved character, and the second group of characters is characters whose initial position and final position are in different lines in the to-be-moved character.

18. The method according to any one of claims 11 to 16, wherein the editing instruction is the delete operation or the insert operation, and moving, based on the final position of the to-be-moved character in the typeset handwritten note, the to-be-moved character from the initial position to the final position, and displaying the character comprise:

controlling the first group of characters in the to-be-moved character to move from the initial position to the final position, wherein the first group of characters is characters whose initial position and final position are in a same line in the to-be-moved character;

controlling, at the moment when the first group of characters starts to move, the second group of characters to disappear from the initial position of the second group of characters, wherein the second group of characters is characters whose initial position and final position are in different lines in the to-be-moved character; and

when the first group of characters reaches the final position of the first group of characters, controlling the second group of characters to appear at the final position of the second group of characters.

19. The method according to any one of claims 11 to 16, wherein the editing instruction is the insert operation, and moving, based on the final position of the to-be-moved character in the typeset handwritten note, the to-be-moved character from the initial position to the final position, and displaying the character comprise:

controlling the first group of characters in the to-be-moved character to move from the initial position to the final position, wherein the first group of characters is characters whose initial position and final position are in a same line in the to-be-moved character;

controlling, at the moment when the first group of characters starts to move, the second group of characters to disappear from the initial position of the second group of characters and appear with the first transparency on a left side of a character in an initial state in a next line, wherein the second group of characters is characters whose initial position and final position are in different lines in the to-be-moved character; and

controlling the second group of characters to move together with the first group of characters until the second group of characters and the first group of characters are respectively located at the respective final positions, wherein the transparency of the second group of characters gradually decreases from the first transparency to 0% in the movement process.

20. The method according to claim 19, wherein there is further the second paragraph below the first paragraph, the paragraph spacing between the first paragraph and the second paragraph is greater than the line height of the first paragraph, and the method further comprises:

controlling, at the moment when the first group of characters starts to move, the second paragraph to move downward, until the first group of characters

**EP 4 769 107 A1**

reaches the final position of the first group of characters, and controlling the second paragraph to move to a final position of the second paragraph.

21. An electronic device, comprising at least one processor, wherein the at least one processor is coupled to at least one memory, and the at least one processor is configured to read and execute a computer program stored in the at least one memory, to perform the method according to any one of claims 1 to 20.

22. A computer-readable storage medium, wherein the computer-readable storage medium stores instructions, and when the instructions are run on a computer, the computer is enabled to perform the method according to any one of claims 1 to 20.

23. A computer program product comprising instructions, wherein when the computer program product runs on a computer, the computer is enabled to perform the method according to any one of claims 1 to 20.

FIG. 1(a)

Title    Today 8:21 a.m.

Handwriting area

Handwriting  List  Text editing  Picture Voice  Insert

FIG. 1(b)

FIG. 1(c)

Electronic device 100

Antenna 1     Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

Interface [120] for external memory

Processor [110]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 2

| Application layer | UI | Camera | Settings | Memo |
| | WLAN | Music | Phone | |
| | Notes | Bluetooth | Video | ... |

| Application framework layer | Activity manager | Window manager | Content provider |
| | Phone manager | View system | Notification manager |
| | Resource manager | ... | |

| System library | Surface manager | Three-dimensional graphics engine | Runtime |
| | Two-dimensional graphics engine | ... | |

| Kernel layer | Display driver | Camera driver | |
| | Audio driver | Sensor driver | ... |

| Hardware layer | Acceleration sensor | Gravity sensor | Touch sensor |

FIG. 3

FIG. 4(a)

FIG. 4(b)

FIG. 4(c)

FIG. 4(d)

FIG. 5(a)

FIG. 5(b)

FIG. 5(c)

FIG. 5(d)

Step 601: An electronic device determines an angle of each line included in a to-be-edited paragraph

Step 602: The electronic device calculates an angle of the to-be-edited paragraph based on the angle of each line in the to-be-edited paragraph

Step 603: The electronic device calculates a difference between the angle of each line and the angle of the to-be-edited paragraph

Step 604: Determine whether the difference is greater than an angle difference threshold

No

Not an angle-abnormal line

Yes

Step 605: The electronic device rotates an entire line of characters in an angle-abnormal line, so that an angle of the angle-abnormal line after rotation is the same as the angle of the paragraph

FIG. 6

FIG. 7(a)

FIG. 7(b)

FIG. 7(c)

Title    Today 8:21 a.m.

72

721

722

723

73

731

732

405

FIG. 8(a)

Title    Today 8:21 a.m.

72

721

722

723

4052    4053    4054

73

Bold font

731

Font color

732

Aa

405

FIG. 8(b)

FIG. 8(c)

Step 901: An electronic device determines a line center line of each line in a to-be-edited paragraph

Step 902: The electronic device calculates a first distance between each character in each line and a line center line of the line in which the character is located

Step 903: The electronic device calculates a mean distance between all characters in each line and the line center line of the line

Step 904: The electronic device determines, based on the mean distance between all the characters in each line and the line center line of the line and the first distance between each character in each line and the line center line of the line in which the character is located, whether there is a character with an abnormal up-down position in each line

Step 905: The electronic device moves, in a direction from a center of a character box of any character with an abnormal up-down position to a line center line of the line, the character with the abnormal up-down position, so that a first distance between the adjusted character with the abnormal up-down position and the line center line is within a preset distance threshold range

FIG. 9

FIG. 10(a)

FIG. 10(b)

FIG. 11(a)

FIG. 11(b)

FIG. 11(c)

Step 1201: An electronic device determines a line center line of each line in a to-be-edited paragraph

Step 1202: The electronic device calculates a spacing between each character and an adjacent character in any line

Step 1203: The electronic device calculates a mean spacing between characters in each line

Step 1204: The electronic device determines, based on the mean spacing between the characters in each line and the spacing between each character and the adjacent character in each line, whether there is a character with an abnormal left-right spacing in any line

Step 1205: For the character with the abnormal up-down position, the electronic device adjusts, in a direction from a center of a character box of any character with an abnormal up-down position to a line center line of the character, a position of the character with the abnormal up-down position, so that the adjusted position of the character with the abnormal up-down position meets a requirement

FIG. 12

FIG. 13(a)

FIG. 13(b)

FIG. 13(c)

FIG. 14(a)

FIG. 14(b)

FIG. 14(c)

FIG. 15(a)

FIG. 15(b)

FIG. 15(c)

FIG. 16(a)

FIG. 16(b)

Step 1701: An electronic device obtains a character box of a character, a line box, and a paragraph box in a paragraph on which a delete instruction acts

Step 1702: The electronic device obtains a character outer box based on the character box and the line box

Step 1703: The electronic device stores a character after a deletion area in a typesetting list. Specifically, the deletion area is an area in which a character that the delete instruction indicates to delete is located

Step 1704: The electronic device determines whether there is a character in the typesetting list

No

Yes

Step 1705: Typeset a 1$^{st}$ character in the typesetting list

Step 1706: End typesetting: There is no to-be-typeset character in the typesetting list, and the current paragraph typesetting procedure ends

FIG. 17

FIG. 18(a)

FIG. 18(b)

FIG. 18(c)

Step 1901: A user triggers an insert operation. When detecting the insert operation, in response to the insert operation, an electronic device obtains a paragraph box of a to-be-inserted paragraph, a line box of each line in the to-be-inserted paragraph, and a paragraph box of another paragraph (if any) in a layout

Step 1902: Determine, based on the recognized paragraph box, whether there is another paragraph below the to-be-inserted paragraph

Yes

No

Plurality of lines

Step 1903: Determine a quantity of existing lines in the to-be-inserted paragraph

Single line

Step 1904: The electronic device generates a first blank area of a first preset length in a line in which an insertion position in the to-be-inserted paragraph is located, for the user to write to-be-inserted content

Step 1905: The electronic device generates, from an insertion position in a line in which the insertion position is located in the to-be-inserted paragraph, a third blank area whose total length is a second preset length (a paragraph box is used as a boundary, and a line is automatically wrapped at the paragraph box), for the user to write to-be-inserted content

Step 1906: Determine whether a spacing between the to-be-inserted paragraph and the another paragraph below the to-be-inserted paragraph is greater than a line height of the to-be-inserted paragraph

No

Yes

Step 1907: The electronic device generates a fourth blank area in the line in which the insertion position is located

Step 1908: The electronic device moves downward the paragraph below the to-be-inserted paragraph, and then generates a fourth blank area in the line in which the insertion position is located

FIG. 19

FIG. 20(a)

FIG. 20(b)

FIG. 20(c)

FIG. 20(d)

EP 4 769 107 A1

FIG. 20(e)

FIG. 20(f)

93

FIG. 20(g)

FIG. 20(h)

FIG. 21(a)

FIG. 21(b)

FIG. 21(c)

FIG. 21(d)

FIG. 22(a)

FIG. 22(b)

FIG. 22(c)

FIG. 23(a)

FIG. 23(b)

FIG. 23(c)

FIG. 24(a)

FIG. 24(b)

FIG. 24(c)

FIG. 25(a)

FIG. 25(b)

FIG. 25(c)

FIG. 26(a)

FIG. 26(b)

FIG. 26(c)

FIG. 26(d)

FIG. 27(a)

FIG. 27(b)

FIG. 27(c)

FIG. 27(d)

FIG. 28(a)

FIG. 28(b)

FIG. 28(c)

FIG. 28(d)

FIG. 29(a)

FIG. 29(b)

FIG. 29(c)

FIG. 30(a)

FIG. 30(b)

FIG. 30(c)

FIG. 31(a)

FIG. 31(b)

Today 8:21 a.m.

aaaaaaaaaaaaaaaaaaaaaaaaaaaaaa

yyyyyyyyyyyyyyyyy

FIG. 31(c)

Step 3201: An electronic device displays a note interface on a display

Step 3202: The electronic device receives an editing instruction that acts on the note interface for the handwritten note

Step 3203: In response to the editing instruction, the electronic device recognizes an angle-abnormal line, a character with an abnormal up-down position, and a character with an abnormal spacing in at least one paragraph

Step 3204: Rotate an angle-abnormal line in a first paragraph

Step 3205: Adjust a position of a character with an abnormal up-down position in a first paragraph, so that a first distance between a character in a first line in the first paragraph and a line center line of any line is within a preset distance threshold range after adjustment

Step 3206: Adjust a character spacing of a line in which a first character is located in a first paragraph, so that a spacing between characters in the line in which the first character is located in the first paragraph is within a preset spacing range after adjustment, to obtain an edited handwritten note

FIG. 32

Step 3301: An electronic device displays a note interface on a display

Step 3302: The electronic device receives an editing instruction that acts on the note interface for a handwritten note

The editing instruction is a delete operation

The editing instruction is an insert operation

Step 3303: In response to the editing instruction, delete, from a first paragraph, a character that the editing instruction indicates to delete, and re-typeset the first paragraph to determine a typeset handwritten note

Step 3306: Determine whether there is a second paragraph

Yes

No

Step 3304: The electronic device moves a to-be-moved character from an initial position to a final position based on the final position of the to-be-moved character in the typeset handwritten note

Step 3307: Determine a quantity of existing lines in a first paragraph

Single line

Step 3305: The electronic device displays the typeset handwritten note

Step 3308 to step 3314

Plurality of lines

Step 3315 to step 3319

Step 3320 to step 3324

FIG. 33

FIG. 34(a)

FIG. 34(b)

FIG. 34(c)

FIG. 35(a)

FIG. 35(b)

FIG. 35(c)

Handwritten note editing apparatus

Display unit 3610

Receiving unit 3620

Adjustment unit 3630

FIG. 36

370

Chip

Processor 3710

3720

3740

Memory

3730

Communication
interface

FIG. 37

# EP 4 769 107 A1

## INTERNATIONAL SEARCH REPORT

International application No.

**PCT/CN2025/084787**

### A. CLASSIFICATION OF SUBJECT MATTER

G06F 3/04883(2022.01)i

According to International Patent Classification (IPC) or to both national classification and IPC

### B. FIELDS SEARCHED

Minimum documentation searched (classification system followed by classification symbols)

IPC:G06F3/-

Documentation searched other than minimum documentation to the extent that such documents are included in the fields searched

Electronic data base consulted during the international search (name of data base and, where practicable, search terms used)

CNTXT, ENTXTC, CNKI, VEN, ENTXT, IEEE, 百度, BAIDU: 手写, 编辑, 删除, 插入, 角度, 倾斜, 中心线, 距离, 阈值, 文本, 文字, 间距, 校正, 调整, edit+, delet+, angle, slope, inclin+, center line, distance, threshold, text, character, letter, correct +, adjust+, handwriting

### C. DOCUMENTS CONSIDERED TO BE RELEVANT

| Category* | Citation of document, with indication, where appropriate, of the relevant passages | Relevant to claim No. |
|---|---|---|
| X | CN 104007925 A (SAMSUNG ELECTRONICS CO., LTD.) 27 August 2014 (2014-08-27) description, paragraphs [51]-[106], and figures 6A-9B | 11-23 |
| Y | CN 104007925 A (SAMSUNG ELECTRONICS CO., LTD.) 27 August 2014 (2014-08-27) description, paragraphs [51]-[106], and figures 6A-9B | 1-10 |
| Y | WO 2023234511 A1 (UNIV HALLYM IACF et al.) 07 December 2023 (2023-12-07) description, paragraphs [80]-[102], and figure 4-figure 6 | 1-10 |
| A | CN 104572593 A (BEIJING ERENEBEN INFORMATION TECHNOLOGY CO., LTD.) 29 April 2015 (2015-04-29) entire document | 1-23 |
| A | CN 106648418 A (BEIJING AGILESTAR TECHNOLOGY CO., LTD.) 10 May 2017 (2017-05-10) entire document | 1-23 |
| A | CN 107562331 A (GUANGZHOU SHIYUAN ELECTRONIC TECHNOLOGY CO., LTD. et al.) 09 January 2018 (2018-01-09) entire document | 1-23 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 May 2025** | **31 May 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2025/084787** |

| Patent document cited in search report | | | Publication date (day/month/year) | Patent family member(s) | | | Publication date (day/month/year) |
|---|---|---|---|---|---|---|---|
| CN | 104007925 | A | 27 August 2014 | KR | 20140105385 | A | 01 September 2014 |
| | | | | KR | 102206373 | B1 | 22 January 2021 |
| | | | | EP | 2770443 | A2 | 27 August 2014 |
| | | | | US | 2014245137 | A1 | 28 August 2014 |
| | | | | CN | 104850254 | A | 19 August 2015 |
| | | | | US | 9922014 | B2 | 20 March 2018 |
| | | | | CN | 104007925 | B | 01 January 2021 |
| | | | | KR | 2206373 | B1 | 22 January 2021 |
| | | | | EP | 2770443 | B1 | 18 October 2023 |
| WO | 2023234511 | A1 | 07 December 2023 | KR | 20230166595 | A | 07 December 2023 |
| | | | | KR | 102793552 | B1 | 09 April 2025 |
| | | | | KR | 20250050832 | A | 15 April 2025 |
| | | | | KR | 2025051633 | A | 17 April 2025 |
| | | | | KR | 2025052336 | A | 18 April 2025 |
| | | | | KR | 2025052337 | A | 18 April 2025 |
| CN | 104572593 | A | 29 April 2015 | None | | | |
| CN | 106648418 | A | 10 May 2017 | CN | 106648418 | B | 14 January 2020 |
| CN | 107562331 | A | 09 January 2018 | None | | | |

Form PCT/ISA/210 (patent family annex) (July 2022)

**EP 4 769 107 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410565453

- CN 202411172600